(19)

Europäisches
Patentamt
European
Patent Office
Office européen
des brevets

(11) **EP 4 350 873 A1**

(12) **EUROPEAN PATENT APPLICATION**
published in accordance with Art. 153(4) EPC

(43) Date of publication:
**10.04.2024 Bulletin 2024/15**

(21) Application number: **22895786.6**

(22) Date of filing: **19.07.2022**

(51) International Patent Classification (IPC):
*H01M 50/533* (2021.01)   *H01M 50/538* (2021.01)
*H01M 10/04* (2006.01)    *H01M 50/586* (2021.01)
*H01M 50/593* (2021.01)   *H01M 50/107* (2021.01)
*H01M 50/167* (2021.01)

(52) Cooperative Patent Classification (CPC):
**H01M 10/04; H01M 50/107; H01M 50/131;
H01M 50/167; H01M 50/179; H01M 50/533;
H01M 50/538; H01M 50/559; H01M 50/567;
H01M 50/586; H01M 50/593;** Y02E 60/10;
Y02P 70/50

(86) International application number:
**PCT/KR2022/010564**

(87) International publication number:
**WO 2023/090576 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.11.2021 KR 20210160490
19.11.2021 KR 20210160823**

(71) Applicant: **LG Energy Solution, Ltd.
Seoul 07335 (KR)**

(72) Inventors:
• **LEE, Soon-O
Daejeon 34122 (KR)**
• **KONG, Jin-Hak
Daejeon 34122 (KR)**
• **CHOI, Kyu-Hyun
Daejeon 34122 (KR)**
• **PARK, Jong-Sik
Daejeon 34122 (KR)**

• **LIM, Jae-Won
Daejeon 34122 (KR)**
• **CHOE, Yu-Sung
Daejeon 34122 (KR)**
• **KIM, Hak-Kyun
Daejeon 34122 (KR)**
• **LEE, Je-Jun
Daejeon 34122 (KR)**
• **LEE, Byoung-Gu
Daejeon 34122 (KR)**
• **RYU, Duk-Hyun
Daejeon 34122 (KR)**
• **LEE, Kwan-Hee
Daejeon 34122 (KR)**
• **LEE, Jae-Eun
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ELECTRODE ASSEMBLY, BATTERY, AND BATTERY PACK AND VEHICLE INCLUDING SAME**

(57)     Disclosed is an electrode assembly, a battery, and a battery pack and a vehicle including the same. The first electrode of the electrode assembly includes a first active material portion coated with an active material layer and a first uncoated portion not coated with an active material layer along a winding direction, at least a part of the first uncoated portion is defined as an electrode tab by itself, the first uncoated portion includes a plurality of segments independently bendable along the winding direction and exposed to the outside of the separator, the plurality of segments are aligned along a radial direction of the electrode assembly to form a plurality of segment alignments spaced apart in a circumferential direction, and an electrolyte impregnation portion in which an end of the first active material portion is exposed between winding turns of the separator is included between segment alignments of the first uncoated portion adjacent in the circumferential direction.

FIG. 6

**Description**

TECHNICAL FIELD

The present disclosure relates to an electrode assembly, a battery, and a battery pack and a vehicle including the same.

The present application claims priority to Korean Patent Application No. 10-2021-0160490 filed on November 19, 2021 and Korean Patent Application No. 10-2021-0160823 filed on November 19, 2021 in the Republic of Korea, the disclosures of which are incorporated herein by reference.

BACKGROUND ART

Secondary batteries that are easily applicable to various product groups and have electrical characteristics such as high energy density are universally applied not only to portable devices but also to electric vehicles (EVs) or hybrid electric vehicles (HEVs) driven by an electric drive source.

These secondary batteries are attracting attention as a new energy source to improve eco-friendliness and energy efficiency because they have the primary advantage that they can dramatically reduce the use of fossil fuels as well as the secondary advantage that no by-products are generated from the use of energy.

Secondary batteries currently widely used in the art include lithium ion batteries, lithium polymer batteries, nickel cadmium batteries, nickel hydrogen batteries, nickel zinc batteries, and the like. A unit secondary battery cell, namely a unit battery, has an operating voltage of about 2.5V to 4.5V. Therefore, when a higher output voltage is required, a battery pack may be configured by connecting a plurality of batteries in series. In addition, a plurality of batteries may be connected in parallel to form a battery pack according to the charge/discharge capacity required for the battery pack. Accordingly, the number of batteries included in the battery pack and the form of electrical connection may be variously set according to the required output voltage and/or charge/discharge capacity.

Meanwhile, as a kind of unit secondary battery cell, there are known cylindrical, rectangular, and pouch-type batteries. In the case of a cylindrical battery, a separator serving as an insulator is interposed between a positive electrode and a negative electrode, and they are wound to form an electrode assembly in the form of a jelly roll, which is inserted into a battery housing to configure a battery. In addition, a strip-shaped electrode tab may be connected to an uncoated portion of each of the positive electrode and the negative electrode, and the electrode tab electrically connects the electrode assembly and an electrode terminal exposed to the outside. For reference, the positive electrode terminal is a cap plate of a sealing body that seals the opening of the battery housing, and the negative electrode terminal is the battery housing. However, according to the conventional cylindrical battery having such a structure, since current is concentrated in the strip-shaped electrode tab coupled to the uncoated portion of the positive electrode and/or the uncoated portion of the negative electrode, the current collection efficiency is not good due to large resistance and large heat generation.

For small cylindrical batteries with a form factor 1865 or a form factor 2170, resistance and heat are not a major issue. However, when the form factor is increased to apply the cylindrical battery to an electric vehicle, the cylindrical battery may ignite while a lot of heat is generated around the electrode tab during the rapid charging process.

In order to solve this problem, there is provided a cylindrical battery (so-called tab-less cylindrical battery) in which the uncoated portion of the positive electrode and the uncoated portion of the negative electrode are designed to be positioned at the top and bottom of the jelly-roll type electrode assembly, respectively, and the current collecting plate is welded to the uncoated portion to improve the current collecting efficiency.

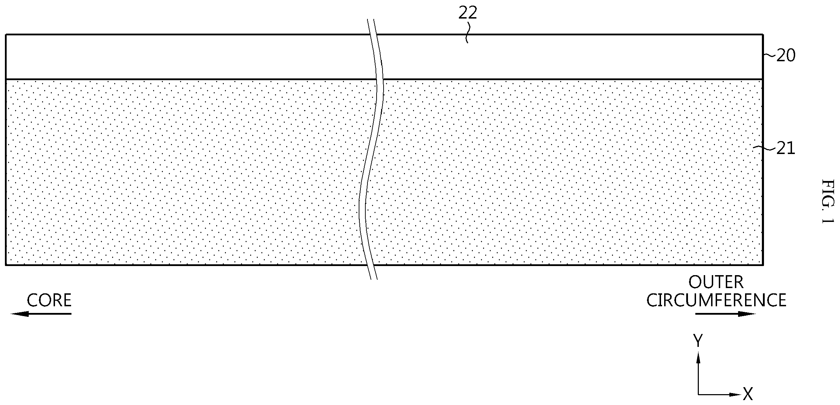

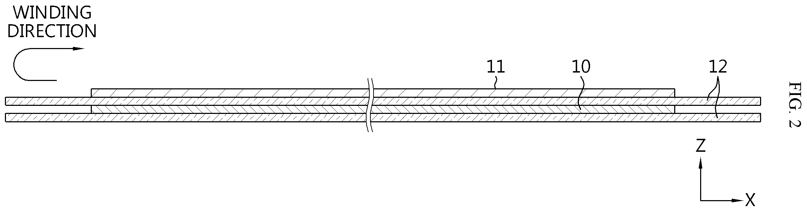

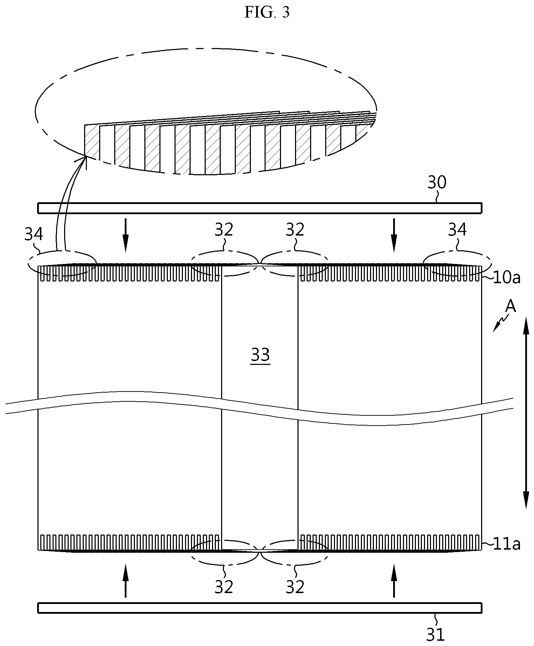

FIGS. 1 to 3 are diagrams showing a process of manufacturing a tab-less cylindrical battery. FIG. 1 shows the structure of an electrode, FIG. 2 shows a process of winding the electrode, and FIG. 3 shows a process of welding a current collecting plate to a bending surface region of an uncoated portion.

Referring to FIGS. 1 to 3, a positive electrode 10 and a negative electrode 11 have a structure in which a current collector sheet 20 is coated with an active material 21, and include an uncoated portion 22 at one long side along the winding direction X. The long side means a relatively long side in a direction parallel to the x-axis direction.

An electrode assembly A is manufactured by sequentially stacking the positive electrode 10 and the negative electrode 11 together with two sheets of separators 12 as shown in FIG. 2 and then winding them in one direction X. At this time, the uncoated portions of the positive electrode 10 and the negative electrode 11 are arranged in opposite directions.

After the winding process, the uncoated portion 10a of the positive electrode 10 and the uncoated portion 1 1a of the negative electrode 11 are bent toward the core. After that, current collecting plates 30, 31 are welded and coupled to the uncoated portions 10a, 11a, respectively.

An electrode tab is not separately coupled to the positive electrode uncoated portion 10a and the negative electrode uncoated portion 11a, the current collecting plates 30, 31 are connected to external electrode terminals, and a current path is formed with a large cross-sectional area along the winding axis direction of electrode assembly A (see arrow), which has an advantage of lowering the resistance of the battery. This is because resistance is inversely proportional to the cross-sectional area of the path through which the current flows.

In the tab-less cylindrical battery, in order to improve the welding characteristics between the uncoated portions 10a, 11a and the current collecting plates 30, 31, a strong pressure must be applied to the welding regions of the uncoated portions 10a, 1 1a to bend the uncoated portions 10a, 11a as flat as possible.

When the welding regions of the uncoated portions 10a, 11a are bent, the shapes of the uncoated portions 10a, 11a may be irregularly distorted and deformed. In this case, the deformed portion may contact an electrode of the opposite polarity to cause an internal short circuit or cause fine cracks in the uncoated portions 10a, 11a.

In addition, when the electrode assembly is manufactured in a state where the uncoated portions 10a, 11a are bent, there is a problem in that the process efficiency is lowered in the electrolyte injection process that proceeds after inserting the electrode assembly into the battery housing. Since there are not enough gaps on the bent surfaces of the uncoated portions 10a, 11a, it takes a lot of time for the electrolyte to permeate into the inner space of the electrode assembly.

Therefore, it is necessary to improve the structure of the uncoated portions 10a, 11a, which may improve the bending quality of the uncoated portions 10a, 11a and improve the electrolyte impregnation rate.


DISCLOSURE


Technical Problem


The present disclosure is designed to solve the problems of the related art, and therefore the present disclosure is directed to providing an electrode assembly having an uncoated portion structure that is improved to relieve stress applied to uncoated portions when the uncoated portions exposed at both ends of an electrode assembly are bent.

The present disclosure is also directed to providing an electrode assembly in which a plurality of segments are provided to the uncoated portion of the electrode, the plurality of segments are arranged in a predetermined direction when the electrode is wound, and an end of the active material layer formed on the electrode is exposed in an area where the segments are not disposed to increase the impregnation rate of the electrolyte.

The present disclosure is also directed to providing an electrode assembly in which the electrolyte injection passage is not blocked even when the uncoated portion is bent.

The present disclosure is also directed to providing an electrode assembly with improved properties of the welding region by applying a segment structure to the uncoated portion of the electrode and sufficiently increasing the segment stack number in the area used as the welding target area.

The present disclosure is also directed to providing an electrode assembly with improved energy density and reduced resistance by applying a structure in which a current collecting plate is welded to the bending surface region formed by bending the segments.

The present disclosure is also directed to providing a battery including a terminal and a current collecting plate with an improved design so that electrical wiring may be performed at the upper portion.

The present disclosure is also directed to providing a battery including the electrode assembly having an improved structure, a battery pack including the battery, and a vehicle including the battery pack.

The technical objects to be solved by the present disclosure are not limited to the above, and other objects not mentioned herein will be clearly understood by those skilled in the art from the following disclosure.


Technical Solution


In one aspect of the present disclosure, there is provided an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, the first uncoated portion includes a plurality of segments independently bendable along the winding direction and exposed to the outside of the separator, the plurality of segments are aligned to overlap each other along a radial direction of the electrode assembly to form a plurality of segment alignments spaced apart in a circumferential direction, and an electrolyte impregnation portion in which an end of the first active material portion is exposed between winding turns of the separator is included between segment alignments of the first uncoated portion adjacent in the circumferential direction.

The fact that the plurality of segments included in the segment alignment overlap in the radial direction means that, when a predetermined straight line passing through the segment alignment is drawn from the center of the core, all segments intersect the corresponding straight line.

Preferably, the segments of each segment alignment may be defined as an electrode tab in a bent state along the radial direction of the electrode assembly.

The plurality of segment alignments may extend radially along the radial direction of the electrode assembly.

The plurality of segment alignments may be spaced at regular intervals along the circumferential direction of the electrode assembly.

An angle between segment alignments adjacent along the circumferential direction of the electrode assembly may be 90 degrees, 120 degrees or 180 degrees.

The plurality of segments may have the same length in the winding direction.

Lengths of the plurality of segments in the winding direction may increase gradually from the core toward the outer circumference.

The segment alignment may have a rectangular or fan shape when viewed in a winding axis direction of the electrode assembly.

When viewed in a winding axis direction of the electrode assembly, an area of the electrolyte impregnation portion may be larger than an area of the plurality of segment alignments.

When viewed in a cross section of the electrolyte impregnation portion taken along the winding axis, the end of the first active material portion may be spaced apart from an end of the separator toward the inside of the electrode assembly.

A distance by which the end of the first active material portion is spaced apart from the end of the separator may be 0.6 mm to 1.0 mm.

Lengths and pitches of the plurality of segments in the winding direction may be assigned with values substantially equal to values mathematically designed using a predetermined length of a segment in the winding direction and a predetermined angle between segment alignments adjacent in the circumferential direction based on an approximate winding turn structure in which semicircles having periodically increasing radii are connected in the winding direction.

An $n+1^{th}$ pitch ($D_{n+1}$) adjacent to an $n+1^{th}$ segment along the winding direction may be assigned with a value substantially equal to a value determined using the following formula:

Case 1:

$$D_{n+1} = \theta_{Dn+1} * R_{n+1} = (90° - \theta_{An+1}) * R_{n+1}$$

Case 2:

$$D_{n+1} = \theta_{Dn+1} * (R_n + R_{n+1})/2 = (90° - \theta_{An+1}) * (R_n + R_{n+1})/2$$

(n is an integer greater than or equal to 0; a start point of a first semicircle corresponds to a location of the first segment in the winding direction; $R_n$ is a radius of an $n^{th}$ semicircle; $R_{n+1}$ is a radius of an $n+1^{th}$ semicircle; $\theta_{An+1}$ is a circumferential angle of the $n+1^{th}$ segment; $\theta_{Dn+1}$ is a circumferential angle for a pitch of the $n+1^{th}$ segment; the formula of Case 1 is a formula applied when an arc corresponding to the $n+1^{th}$ pitch ($D_{n+1}$) is located in the $n+1^{th}$ semicircle; the formula of Case 2 is a formula applied when the arc corresponding to the $n+1^{th}$ pitch ($D_{n+1}$) is located over the $n^{th}$ semicircle and the $n+1^{th}$ semicircle).

The semicircles may have radii increasing by $\Delta/2$ ($\Delta$ is a symbol representing an interval between adjacent winding turns) at every 1/2 winding turn.

The symbol $\Delta$ may be assigned with a value substantially equal to the sum of a thickness of one positive electrode, a thickness of one negative electrode, and a thickness of two separators.

A cut groove may be interposed between segments adjacent along the winding direction, and a lower portion of the cut groove may include a bottom portion, and a round portion configured to connect both ends of the bottom portion and sides of segments at both sides of the cut groove.

The bottom portion of the cut groove may be spaced apart from the active material layer by a predetermined distance.

A separation distance between a lower end of the cut groove and the active material layer may be 0.2 mm to 4 mm.

An insulating coating layer may be formed at a boundary between the active material layer and an area of the uncoated portion existing in a region where the bottom portion of the cut groove and the active material layer are spaced apart.

The segment alignment may include a radial region in which the heights of the segments increase from the core of the electrode assembly toward the outer circumference.

The segment alignment may include a height variable region in which the heights of the segments increase stepwise from a first height ($h_1$) to an $N-1^{th}$ height ($h_{N-1}$), N is a natural number of 3 or more) from the core of the electrode assembly toward the outer circumference, and a height uniform region in which the heights of the segments are kept uniform as an $N^{th}$ height ($h_N$, greater than $h_{N-1}$).

When a starting radius of a winding turn containing a segment with a height $h_k$ (k is a natural number of 1 to N) is defined as $r_k$, the core of the electrode assembly may not be covered by 90% or more of the diameter by the bent portion of the segment located at the $r_k$.

When a starting radius of a winding turn containing a segment with a height $h_k$ (k is a natural number of 1 to N) is defined as $r_k$ and the radius of the core is $r_c$, the height $h_k$ of the segment may satisfy the following formula:

$$2mm \leq h_k \leq r_k - \alpha * r_c \ (\alpha \ is \ 0.90 \ to \ 1).$$

Based on a cross section along a winding axis direction, sequentially along the radial direction, the segment alignment may include a segment skip region having no segment, a height variable region where the heights of the segments vary, and a height uniform region where the heights of the segments are uniform, and the plurality of segments may be disposed in the height variable region and the height uniform region and be bent along the radial direction of the electrode assembly to form a bending surface region extending along the radial direction.

When the number of segments meeting an imaginary line parallel to the winding axis direction at an arbitrary radius location of the bending surface region based on the center of the core of the electrode assembly is defined as a stack number of the segments at the corresponding radius location, the bending surface region may include a stack number uniform region where the stack number of the segments is uniform from the core toward the outer circumference and a stack number decrease region located at an outer side of the stack number uniform region in which the stack number of the segments decreases toward the outer circumference.

In the stack number uniform region, the stack number of the segments may be 10 to 35.

The first electrode may be a positive electrode, and a stack thickness of the segments in the stack number uniform region may be in the range of 100 um to 875 um.

The first electrode may be a negative electrode, and a stack thickness of the segments in the stack number uniform region may be in the range of 50 um to 700 um.

The second electrode may include a second active material portion coated with an active material layer and a second uncoated portion not coated with an active material layer along the winding direction, the second uncoated portion may include a plurality of segments independently bendable along the winding direction and exposed to the outside of the separator, the plurality of segments of the second uncoated portion may be aligned along the radial direction of the electrode assembly to form a plurality of segment alignments spaced apart in the circumferential direction, and an electrolyte impregnation portion in which an end of the second active material portion is exposed between winding turns of the separator may be included between segment alignments of the second uncoated portion adjacent in the circumferential direction.

In another aspect of the present disclosure, there is also provided a battery, comprising: an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, the first uncoated portion includes a plurality of segments independently bendable along the winding direction and exposed to the outside of the separator, the plurality of segments are aligned to overlap each other along a radial direction of the electrode assembly to form a plurality of segment alignments spaced apart in a circumferential direction, and an electrolyte impregnation portion in which an end of the first active material portion is exposed between winding turns of the separator is included between segment alignments of the first uncoated portion adjacent in the circumferential direction; a battery housing including an open end and a bottom portion facing the open end and configured to accommodate the electrode assembly in a space between the open end and the bottom portion, the battery housing being electrically connected to one of the first electrode and the second electrode to have a first polarity; a sealing body configured to seal the open end of the battery housing; and a terminal having a surface exposed to the outside and electrically connected to the other of the first electrode and the second electrode to have a second polarity.

The battery may further comprise a first current collecting plate electrically connected to the first uncoated portion, and the terminal may be a rivet terminal that is installed to be insulated in a perforation hole formed in the bottom portion of the battery housing and electrically connected to the first current collecting plate to have the second polarity.

The battery may further comprise an insulator interposed between an inner surface of the bottom portion of the battery housing and an upper surface of the first current collecting plate to electrically insulate the inner surface of the bottom portion of the battery housing and the first current collecting plate.

The rivet terminal may include a flat portion at a lower end, the insulator may include an opening that exposes the flat portion, and the flat portion may be welded to the first current collecting plate through the opening.

The second electrode may include a second active material portion coated with an active material layer and a second uncoated portion not coated with an active material layer along the winding direction. The second electrode may have the first polarity, and at least a part of the second uncoated portion may be defined as an electrode tab by itself. The battery may further comprise a second current collecting plate electrically connected to the second uncoated portion, wherein at least a part of an edge thereof is coupled to a sidewall of the battery housing.

The battery housing may include a beading portion press-fitted inward at an inner wall adjacent to the open end, and an edge of the second current collecting plate may be electrically connected to the beading portion.

The battery may include a cap plate having an edge supported by the beading portion and having no polarity, a gasket interposed between an edge of the cap plate and the open end of the battery housing, and a crimping portion configured to extend and bend toward an inner side of the open end of the battery housing and surround and fix the edge of the cap plate together with the gasket. The edge of the second current collecting plate may be interposed and fixed between the beading portion and the gasket by the crimping portion.

Based on a cross section along the winding axis direction, sequentially along the radial direction, the electrode assembly may include a segment skip region having no segment, a height variable region where the heights of the segments vary, and a height uniform region where the heights of the segments are uniform, and the plurality of segments may be disposed in the height variable region and the height uniform region and be bent along the radial direction of the electrode assembly to form a bending surface region.

When the number of segments meeting an imaginary line parallel to the winding axis direction at an arbitrary radius location of the bending surface region based on the center of the core of the electrode assembly is defined as a stack number of the segments at the corresponding radius location, the bending surface region may include a stack number uniform region where the stack number of the segments is uniform from the core toward the outer circumference and a stack number decrease region located adjacent to the stack number uniform region in which the stack number of the segments decreases as being away from the stack number uniform region.

In the stack number uniform region, the stack number of the segments may be 10 to 35.

The first electrode may be a positive electrode, and a stack thickness of the segments in the stack number uniform region may be in the range of 100 um to 875 um.

The first electrode may be a negative electrode, and a stack thickness of the segments in the stack number uniform region may be in the range of 50 um to 700 um.

The battery may further comprise a current collecting plate welded to the bending surface region, and in the radial direction of the electrode assembly, at least 50% of a welding region of the current collecting plate may overlap with the stack number uniform region.

In another aspect of the present disclosure, there is also provided a battery pack, comprising a plurality of batteries described above.

Preferably, the battery may be cylindrical and have a ratio of diameter to height greater than 0.4.

Preferably, the battery may be cylindrical and have a form factor of 46110, 4875, 48110, 4880 or 4680.

Preferably, the battery may have a resistance of 4 miliohm or below.

In an aspect, in the battery pack, the plurality of batteries may be arranged in a predetermined number of columns, and the electrode terminal of each battery and an outer surface of the bottom of the battery housing may be arranged to face upward.

In another aspect, the battery pack may comprise a plurality of bus bars configured to connect the plurality of batteries in series and parallel.

Preferably, the plurality of bus bars may be disposed at an upper portion of the plurality of batteries, and each bus bar may include a body portion configured to extend between electrode terminals of adjacent batteries; a plurality of first bus bar terminals configured to extend in one side direction of the body portion and electrically coupled to an electrode terminal of a battery located in the one side direction; and a plurality of second bus bar terminals configured to extend in the other side direction of the body portion and electrically coupled to an outer surface of the bottom of the battery housing of a battery located in the other side direction.

In another aspect of the present disclosure, there is also provided a vehicle, comprising the battery pack.

Advantageous Effects

According to one aspect of the present disclosure, the internal resistance of the battery may be reduced and the energy density may be increased by using the uncoated portion itself protruding at the upper portion and the lower portion of the electrode assembly as an electrode tab.

According to another aspect of the present disclosure, the uncoated portion may be prevented from being torn when the uncoated portion is bent by improving the structure of the uncoated portion of the electrode assembly, and the welding strength of the current collecting plate may be improved by sufficiently increasing the number of overlapping layers of the uncoated portion.

According to another aspect of the present disclosure, a plurality of segments is applied to the uncoated portion of the electrode, and when the electrode is wound, the plurality of segments are disposed to be aligned in a predetermined direction, and the end of the active material layer formed on the electrode is exposed between the winding turns of the separator in an area where the segments are not disposed, so that it is possible to increase the impregnation rate of the electrolyte.

According to another aspect of the present disclosure, physical properties of an area to which a current collecting plate is welded may be improved by sufficiently increasing the segment stack number of the area used as a welding target area.

According to another aspect of the present disclosure, an electrode assembly having improved energy density and reduced resistance may be provided by applying a structure in which a current collecting plate is welded to the bending surface region formed by bending the segments.

According to another aspect of the present disclosure, a cylindrical battery having an improved design so that electrical wiring can be performed at the upper portion thereof may be provided.

According to another aspect of the present disclosure, by improving the structure of the uncoated portion adjacent to the core of the electrode assembly, the cavity in the core of the electrode assembly is prevented from being blocked when the uncoated portion is bent, so that the electrolyte injection process and the process of welding the battery housing (or, rivet terminal) and the current collecting plate may be easily performed.

According to another aspect of the present disclosure, it is possible to provide a cylindrical battery having a structure in which the internal resistance is low, an internal short circuit is prevented, and the welding strength between the current collecting plate and the uncoated portion is improved, and a battery pack and a vehicle including the cylindrical battery.

In particular, the present disclosure may provide a cylindrical battery having a ratio of diameter to height of 0.4 or more and a resistance of 4 miliohm or less, and a battery pack and a vehicle including the cylindrical battery.

In addition, the present disclosure may have several other effects, and such effects will be described in each embodiment, or any description that can be easily inferred by a person skilled in the art will be omitted for an effect.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a plan view showing a structure of an electrode used for manufacturing a conventional tab-less cylindrical battery.

FIG. 2 is a diagram showing an electrode winding process of the conventional tab-less cylindrical battery.

FIG. 3 is a diagram showing a process of welding a current collecting plate to a bending surface region of an uncoated portion in the conventional tab-less cylindrical battery.

FIG. 4 is a plan view showing a structure of an electrode according to an embodiment of the present disclosure.

FIG. 5 is a top plan view showing an electrode assembly manufactured by winding a positive electrode and a negative electrode having the electrode structure according to an embodiment of the present disclosure together with a separator.

FIG. 6 is a perspective view partially showing an upper portion of an electrode assembly according to an embodiment of the present disclosure.

FIG. 7 is a partial cross-sectional view, taken along line A-A' in FIG. 5.

FIG. 8 is a diagram schematically showing the relationship between heights $h_1$, $h_2$, $h_3$, $h_4$ of segments, core radius $r_c$, and radii $r_1$, $r_2$, $r_3$, $r_4$ of winding turns where segments begin to appear, according to an embodiment of the present disclosure.

FIG. 9a is a diagram showing an approximate winding turn structure in which semicircles $C_1$, $C_2$, $C_3$, $C_4$, $C_5$, $C_6$ ... whose radii increase at every 1/2 winding turn to determine the pitches of the segments according to an embodiment of the present disclosure.

FIG. 9b is a diagram for deriving a formula for determining the pitch of the segment using the approximate winding turn structure shown in FIG. 9a according to an embodiment of the present disclosure.

FIG. 10a is a top plan view of an electrode assembly showing the form of a segment alignment according to another embodiment of the present disclosure.

FIG. 10b is a plan view showing the structure of an electrode according to another embodiment of the present disclosure.

FIG. 11 is a diagram showing a segment structure according to various modifications of the present disclosure.

FIG. 12a is a schematic diagram showing a cross section of a bending surface region formed by bending the segment toward the core of the electrode assembly according to an embodiment of the present disclosure.

FIG. 12b is graphs showing the results of counting the stack number of segments along a radial direction in the bending surface region of a positive electrode formed at the upper portion of the electrode assemblies according to the embodiments 1-1 to 1-7 and the comparative example.

FIG. 12c is graphs showing the results of counting the stack number of segments along the radial direction in the bending surface region of the positive electrode formed at the upper portion of the electrode assemblies according to the embodiments 2-1 to 2-5, the embodiments 3-1 to 3-4, the embodiments 4-1 to 4-3, and the embodiments 5-1 to 5-2.

FIG. 12d is graphs showing the results of counting the stack number of segments measured along the radial direction in the bending surface region of the positive electrode formed at the upper portion of the electrode assembly according to the embodiments 6-1 to 6-6 and the embodiments 7-1 to 7-6.

FIG. 12e is a top plan view of the electrode assembly showing a stack number uniform region b1 and a stack number decrease region b2 in the bending surface region of the segment according to an embodiment of the present disclosure.

FIG. 13 is a cross-sectional view of a jelly-roll type electrode assembly in which the electrode according to an embodiment of the present disclosure is applied to a first electrode (positive electrode) and a second electrode (negative electrode), taken along the Y-axis direction (winding axis direction).

FIG. 14 is a cross-sectional view of a jelly-roll type electrode assembly in which an electrode according to another embodiment of the present disclosure is applied to the first electrode (positive electrode) and the second electrode (negative electrode), taken along the Y-axis direction (winding axis direction).

FIG. 15 is a cross-sectional view of a jelly-roll type electrode assembly in which an electrode according to still another embodiment of the present disclosure is applied to the first electrode (positive electrode) and the second electrode (negative electrode), taken along the Y-axis direction (winding axis direction).

FIG. 16 is a cross-sectional view of a jelly-roll type electrode assembly in which an electrode according to still another embodiment of the present disclosure is applied to the first electrode (positive electrode) and the second electrode (negative electrode), taken along the Y-axis direction (winding axis direction).

FIG. 17 is a sectional view showing a cylindrical battery according to an embodiment of the present disclosure, taken along the Y-axis direction.

FIG. 18 is a sectional view showing a cylindrical battery according to another embodiment of the present disclosure, taken along the Y-axis direction.

FIG. 19 is a cross-sectional view showing a cylindrical battery according to still another embodiment of the present disclosure, taken along the Y-axis direction.

FIG. 20 is a cross-sectional view showing a cylindrical battery according to still another embodiment of the present disclosure, taken along the Y-axis direction.

FIG. 21 is a plan view showing a structure of a first current collecting plate according to an embodiment of the present disclosure.

FIG. 22 is a perspective view showing a structure of a second current collecting plate according to an embodiment of the present disclosure.

FIG. 23 is a top plan view showing a state in which a plurality of cylindrical batteries are electrically connected according to an embodiment of the present disclosure.

FIG. 24 is a partially enlarged view of FIG. 23.

FIG. 25 is a diagram schematically showing a battery pack according to an embodiment of the present disclosure.

FIG. 26 is a diagram schematically showing a vehicle including the battery pack according to an embodiment of the present disclosure.

## BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In addition, in order to help understanding of the present disclosure, the accompanying drawings are not drawn to scale, and the dimensions of some components may be exaggerated. In addition, the same reference numerals may be assigned to the same elements in different embodiments.

When it is explained that two objects are 'identical', this means that these objects are 'substantially identical'.

Accordingly, the substantially identical objects may include deviations considered low in the art, for example, deviations within 5%. Also, when it is explained that certain parameters are uniform in a predetermined region, this may mean that the parameters are uniform in terms of an average in the corresponding region.

In addition, the terms such as "about" or "approximately" refer to cases where the term has a deviation of about 1%, 2%, 3%, ..., 20% based on the number for which the corresponding term is used.

Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element can be on an upper surface (or a lower surface) of the other element, and intervening elements may be present between the element and the other element on (or below) the element.

Additionally, when an element is referred to as being "connected", "coupled" or "linked" to another element, the element can be directly connected or coupled to the other element, but it should be understood that intervening elements may be present between each element, or each element may be "connected", "coupled" or "linked" to each other through another element.

Throughout the specification, "A and/or B" refers to either A or B or both A and B unless expressly stated otherwise, and "C to D" refers to C or greater and D or smaller unless expressly stated otherwise.

A direction that goes along a lengthwise direction of a winding axis of an electrode assembly wound in a roll shape is herein referred to as an axis direction Y. Additionally, a direction around the winding axis is herein referred to as a circumferential or peripheral direction X. Additionally, a direction that gets closer to or faces away from the winding axis is referred to as a radial direction. Among them, in particular, the direction that gets closer to the winding axis is referred to as a centripetal direction, and the direction that faces away from the winding axis is referred to as a centrifugal direction.

First, an electrode assembly according to an embodiment of the present disclosure will be described. The electrode assembly is a jelly-roll type electrode assembly in which a first electrode and a second electrode having a sheet shape and a separator interposed therebetween are wound in one direction.

Preferably, at least one of the first electrode and the second electrode includes an uncoated portion not coated with an active material at a long side end in the winding direction. At least a part of the uncoated portion is used as an electrode tab by itself. That is, a tab in the form of a strip is not separately attached to the uncoated portion, and a part of the uncoated portion is used as the tab.

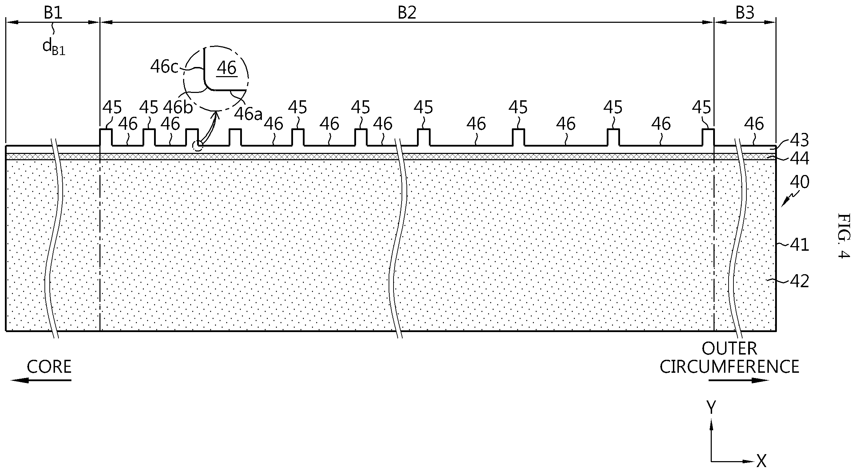

FIG. 4 is a plan view showing a structure of an electrode 40 according to an embodiment of the present disclosure.

Referring to FIG. 4, the electrode 40 of the first embodiment includes a sheet-shaped current collector 41 and an active material layer 42. The current collector 41 may be made of a metal foil. The metal foil may be a conductive metal, such as aluminum or copper. The current collector 41 may be appropriately selected according to the polarity of the electrode 40. The metal foil can be replaced with a metal mesh or the like. The metal foil may have a structure in which metal thin films are coated on both surfaces of a substrate made of an insulating film. The active material layer 42 is formed on at least one surface of the current collector 41. The active material layer 42 is formed along the winding direction X. The electrode 40 includes an uncoated portion 43 at a long side end in the winding direction X. The uncoated portion 43 is a partial area of the current collector 41 that is not coated with an active material. In the electrode 40, an area of the current collector 41 on which the active material layer 42 is formed may be referred to as an active material portion.

A width of the electrode 40 in a direction along the short side of the current collector 41 may be 60 mm to 70 mm, and a length in a direction along the long side of the current collector 41 may be 3 m to 5 m. Therefore, the ratio of the short side to the long side of the electrode 40 may be 1.2% to 2.3%. This ratio is significantly smaller than the 6% to 11% that is a ratio of the short side to the long side of electrodes used in cylindrical batteries with 1865 or 2170 form factors.

Preferably, an insulating coating layer 44 may be formed at a boundary between the active material layer 42 and the uncoated portion 43. The insulating coating layer 44 is formed such that at least a part thereof overlaps with the boundary between the active material layer 42 and the uncoated portion 43. The insulating coating layer 44 prevents a short circuit between two electrodes having different polarities and facing each other with a separator interposed therebetween. The insulating coating layer 44 may cover a boundary between the active material layer 42 and the uncoated portion 43 with a width of 0.3 mm to 5 mm. The insulating coating layer 44 may include a polymer resin and an inorganic filler such as $Al_2O_3$ or $SiO_2$. Since the portion of the current collector 41 covered by the insulating coating layer 44 is not an area coated with an active material layer, it may be regarded as an uncoated portion.

The uncoated portion 43 includes a first portion B1 adjacent to the core, a second portion B3 adjacent to the outer circumference, and a third portion B2 interposed between the first portion B1 and the second portion B3. The core and the outer circumference refer to a central area and an outer circumference of the electrode assembly when the electrode 40 is wound as an electrode assembly.

Among the first portion B1, the second portion B3 and the third portion B2, the third portion B2 has the longest length and occupies most of the length of the electrode 40. The first portion B1 may form a plurality of winding turns adjacent to the core of the electrode assembly. The second portion B3 may form one or more winding turns adjacent to the outer circumference of the electrode assembly.

The third portion B2 includes a plurality of segments 45. Preferably, the segment 45 may have a rectangular shape. Alternatively, the segment 45 may have a trapezoidal shape, a parallelogram shape, a semicircular shape, or the like. The geometry of the segment 45 may be modified in many ways.

The plurality of segments 45 may be laser notched. Alternatively, the segment 45 may be formed by a known metal foil cutting process such as ultrasonic cutting or punching. In the winding direction X, the interval (pitch) between the segments 45 may increase from the core toward the outer circumference.

A cut groove 46 is interposed between segments 45 adjacent in the winding direction X. The cut groove 46 is formed in the process of notching the segment 45. The cut groove 46 includes a flat bottom portion 46a, a round portion 46b adjacent thereto, and a side portion 46c of the segment 45. Here, the round portion 46b may prevent cracks from occurring at the lower end of the segment 45 by relieving stress when the segment 45 is bent.

In order to prevent the active material layer 42 and/or the insulating coating layer 44 from being damaged when bending the segment 45, it is preferable to leave a predetermined gap between the bottom portion 46a of the cut groove 46 and the active material layer 42. This is because stress is concentrated near the bottom portion 46a of the cut groove 46 when the segment 45 is bent. The gap is 0.2 mm to 4 mm, preferably 1.5 mm to 2.5 mm. When the gap is adjusted to the corresponding numerical range, it is possible to prevent the active material layer 42 and/or the insulating coating layer 44 near the lower end of the cut groove 46 from being damaged due to stress generated during the process of bending the segment 45. In addition, the gap may prevent the active material layer 42 and/or the insulating coating layer 44 from being damaged due to tolerance when notching or cutting the segment 45. The lower end of the cut groove 46 and the insulating coating layer 44 may be spaced apart by 0.5 mm to 1.0 mm. When the electrode 40 is wound, the end of the insulating coating layer 44 in the winding axis Y direction may be located in the range of -2 mm to 2 mm along the winding axis direction based on the end of the separator. The insulating coating layer 44 may prevent a short circuit between two electrodes having different polarities and facing each other with a separator interposed therebetween, and may support a bending point when the segment 45 is bent. In order to improve the short circuit prevention effect between the two electrodes, the insulating coating layer 44 may be exposed to the outside of the separator. In addition, in order to further maximize the effect of preventing a short circuit between the two electrodes, the width of the insulating coating layer 44 may be increased so that the end of the insulating coating layer 44 in the winding axis Y direction is located above the bottom portion 46a of the cut groove 46. In one embodiment, the end of the insulating coating layer 44 in the winding axis direction may be located within a range of -1 mm to +1 mm based on the bottom portion 46a of the cut groove 46.

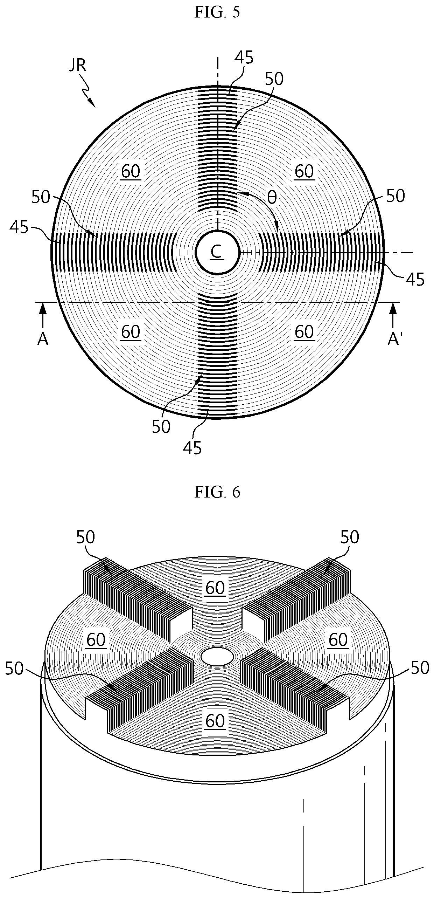

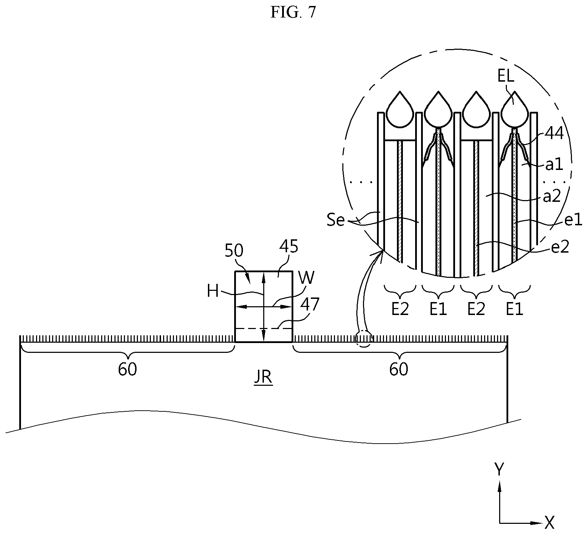

FIG. 5 is a top plan view showing an electrode assembly JR manufactured by winding a positive electrode and a negative electrode having a structure of the electrode 40 shown in FIG. 4 together with a separator, FIG. 6 is a perspective view partially showing an upper portion of the electrode assembly JR, and FIG. 7 is a partial cross-sectional view, taken along line A-A' in FIG. 5. The upper portion of the electrode assembly JR shown in the drawings is the positive electrode.

Referring to FIGS. 4 to 7 together, the plurality of segments 45 protrude to the outside of the separator and protrude in the winding axis direction Y. In addition, the plurality of segments 45 are radially arranged based on the center of the core C of the electrode assembly JR to form a segment alignment 50. The segment alignment 50 refers to an assembly of the segments 45s in which the segments 45s located in different winding turns are arranged while overlapping in the radial direction of the electrode assembly JR.

The fact that the plurality of segments 45 included in the segment alignment 50 overlap in the radial direction means that, when a predetermined straight line passing through the segment alignment 50 is drawn from the center of the core, all segments 45 intersect the corresponding straight line.

The segment alignment 50 has a structure extending by a predetermined length along the radial direction of the electrode assembly JR, and in the segment alignment 50, the segments 45 in the winding turns adjacent in the radial direction may have overlapping circumferential angles.

Four, three or two segment alignments 50 may be provided, but the number of segment alignments 50 is not limited thereto. When a plurality of segment alignments 50 are provided, the segment alignments 50 may be arranged at equal intervals or unequal intervals in the circumferential direction.

When the number of segment alignments 50 is four, the angle between segment alignments 50 adjacent in the circumferential direction may be 80 degrees to 100 degrees, preferably 85 degrees to 95 degrees, more preferably 90 degree. When the number of segment alignments 50 is three, the angle between segment alignments 50 adjacent in the circumferential direction may be about 110 degrees to 130 degrees, preferably about 115 degrees to 125 degrees, and more preferably about 120 degree. When the number of segment alignments 50 is two, the angle between segment alignments 50 adjacent in the circumferential direction may be about 170 degrees to 190 degrees, preferably about 175 to 185 degrees, and more preferably about 180 degree.

The angle (θ) between the segment alignments 50 adjacent in the circumferential direction is defined as an angle formed by a lateral extension line of one segment alignment 50 and a lateral extension line of another segment alignment 50 closest to the segment alignment 50 when the electrode assembly JR is viewed in the winding axis direction Y. When an imaginary line (see the dashed-dotted line) passing through the center of the segment alignment 50 is drawn from the center of the core C of the electrode assembly JR, the angle (θ) is substantially the same as an angle formed by the imaginary lines adjacent in the circumferential direction.

The pitches of the segments 45 increase in the winding direction X of electrode assembly JR from the core toward the outer circumference, but may be determined according to a preset rule so that the segment alignment 50 may be formed in the radial direction of the electrode assembly JR. The rule for changing the pitches of the segments 45 in the winding direction X will be described later.

An electrolyte impregnation portion 60 is formed between the segment alignments 50 adjacent in the circumferential direction of the electrode assembly JR. The electrolyte impregnation portion 60 is formed by winding the area of the uncoated portion 43 where the cut groove 46 is formed.

As shown in FIG. 7, the electrolyte impregnation portion 60 is a region in which the electrolyte EL may be mainly impregnated, and has a lower height than the segment alignment 50 in the winding axis direction Y. In the electrolyte impregnation portion 60, the segment 45 protruding to the outside of the separator Se does not exist. In addition, in the electrolyte impregnation portion 50, the ends of the active material layer a1 of the positive electrode E1 and the active material layer a2 of the negative electrode E2 are spaced apart by a predetermined interval below the end of the separator Se between the separators Se adjacent in the radial direction of the electrode assembly JR. Thus, the insulation between the positive electrode E1 and the negative electrode E2 may be maintained. In an embodiment, the separation distance may be 0.6 mm to 1 mm. An insulating coating layer 44 may be formed on at least one of the ends of the positive electrode E1 and the negative electrode E2. The end of the positive electrode E1 may include a sliding portion in which the thickness of the active material layer a1 gradually decreases. The arrangement structure of the electrode and the separator shown in FIG. 7 may also be applied to the lower portion of the electrode assembly JR. Preferably, the insulating coating layer 44 and the sliding portion may be formed at the end of the negative electrode E2 in the lower portion of the electrode assembly JR.

The electrolyte EL may be impregnated into the electrode assembly JR while directly contacting the positive electrode E1 and the negative electrode E2 through the gap provided between the ends of the separators Se. Specifically, the electrolyte EL dropped to the top of the electrode assembly JR quickly permeates into the electrode assembly JR while simultaneously contacting the ends of the positive electrode E1 and the negative electrode E2 and the end of the separator Se. As a result, the electrolyte impregnation rate may be significantly improved.

The width (W) of the segment 45 may be set to an appropriate value considering the size of the welding region of the current collecting plate and the impregnation rate of the electrolyte EL. Preferably, the width (W) of the segment 45 may be set in the range of 3 mm to 11 mm. If the width (W) of the segment 45 is less than 3 mm, the welding region of the current collecting plate is too reduced, thereby deteriorating the efficiency of the welding process and increasing the possibility of tab folding failure while the electrode is transferred. Meanwhile, if the width (W) of the segment 45 is greater than 11 mm, the area of the electrolyte impregnation portion 60 is reduced so that the impregnation rate of the electrolyte may be reduced correspondingly, and the possibility of defects increases in the subsequent process of bending (forming) the segment 45.

Preferably, the heights (H) of the segments 45 may be substantially the same in the radial direction of electrode assembly JR. In one example, the segment 45 may have a height of 4 mm, 5 mm, 6 mm, 7 mm, 8 mm, 9 mm, or 10 mm. Alternatively, the heights (H) of the segments 45 may increase stepwise from the core of the electrode assembly JR toward the outer circumference. In one example, the heights of the segments 45 may increase stepwise in the range of 2 mm to 10 mm. In one example, when the core diameter of the electrode assembly JR is 8 mm, the heights of the segments 45 may increase from 2 mm to 10 mm by 1 mm in the radial region of 6 mm to 14 mm. When the heights (H) of the segments 45 increase stepwise, the stack number of the segments 45 may be increased on the bending surface of the segments 45, and the length of the area where the stack number is uniform may be increased in the radial direction of the electrode assembly JR. This will be explained later.

Referring to FIG. 4, the width ($d_{B1}$) of the first portion B1 is designed by applying the condition that the core of the electrode assembly is not covered when the segment 45 closest to the first portion B1 among the segments 45 of the third portion B2 is bent toward the core. Preferably, the width ($d_{B1}$) of the first portion B1 may be designed so that the core of the electrode assembly JR is open to the outside by 90% or more based on the diameter when the segment 45 of the third portion B2 is bent toward the core.

Preferably, the heights (H) of the segments 45 may increase from the core toward the outer circumference depending on the radius of the winding turn and the radius of the core where the segments 45 are located.

In one embodiment, when the heights (H) of the segments 45 increase stepwise over N steps from $h_1$ to $h_N$ as the radius of the winding turn increases, assuming that the k$^{th}$ height of the segment 45 is h$_k$ (k is a natural number from 1 to N), the starting radius of the winding turn including the segment 45 having the height h$_k$ is r$_k$ and the radius of the core is r$_c$, the heights h$_1$ to h$_N$ of the segments 45 may be determined to satisfy Formula 1 below.

<Formula 1>

$$2mm \leq h_k \leq r_k - \alpha * r_c \text{ (preferably, a is 0.90 to 1)}$$

If the heights (h$_k$) of the segments 45 meet Formula 2, even if the segments 45 of the segment alignment 50 are bent toward the core, 90% or more of the diameter of the core may be open to the outside.

In one example, the radius of the entire winding turns of the electrode 60 is 22 mm, the heights of the segments 45 start from 3 mm, and the heights of segments 45 are increased sequentially to 3 mm, 4 mm, 5 mm and 6 mm whenever the radius of the winding turn including the segment 45 increases by 1 mm, and the heights may be maintained substantially identically at 6 mm in the remaining winding turns. That is, among the radii of the entire winding turns, the width of the height variable region of the segment 45 is 3 mm, and the remaining radial region corresponds to the height uniform region.

In this case, when $\alpha$ is 1 and the equal sign condition is applied in the right inequality, the starting radius r$_1$, r$_2$, r$_3$, r$_4$ of the winding turns including the segments 45 having heights of 3mm, 4mm, 5mm, and 6mm depending on the radius (r$_c$) of the core of the electrode assembly may be as shown in Table 1 below.

Table 1

| Item | | Segment height (mm) | | | |
|---|---|---|---|---|---|
| | | 3 (h$_1$) | 4 (h$_2$) | 5 (h$_3$) | 6 (h$_4$) |
| Core radius (r$_c$) (mm) | 2 | 5 (r$_1$) | 6 (r$_2$) | 7 (r$_3$) | 8 (r$_4$) |
| | 2.5 | 5.5 (r$_1$) | 6.5 (r$_2$) | 7.5 (r$_3$) | 8.5 (r$_4$) |
| | 3 | 6 (r$_1$) | 7 (r$_2$) | 8 (r$_3$) | 9 (r$_4$) |
| | 3.5 | 6.5 (r$_1$) | 7.5 (r$_2$) | 8.5 (r$_3$) | 9.5 (r$_4$) |
| | 4 | 7 (r$_1$) | 8 (r$_2$) | 9 (r$_3$) | 10 (r$_4$) |

When the segments 45 are arranged at the radius locations shown in Table 1, the core is not blocked even if the segments 45 are bent toward the core. Meanwhile, r$_1$, r$_2$, r$_3$, r$_4$ shown in Table 1 may be shifted toward the core according to the value of $\alpha$. In one example, when $\alpha$ is 0.90, r$_1$, r$_2$, r$_3$, r$_4$ may be shifted toward the core by 10% of the core radius. In this case, when the segment 45 is bent toward the core, 10% of the core radius is blocked by the segment 45. r$_1$, r$_2$, r$_3$, r$_4$ shown in Table 1 are limit values of the location where the segment 45 starts. Therefore, the location of the segment 45 may be shifted toward the outer circumference by a predetermined distance rather than the radius shown in Table 1.

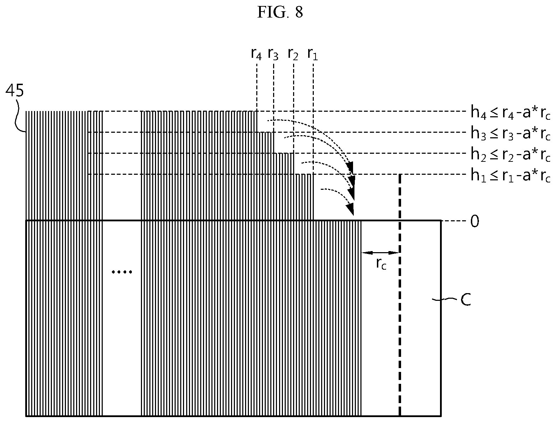

FIG. 8 is a diagram schematically showing the relationship of the heights h$_1$, h$_2$, h$_3$, h$_4$ of the segments 45, the core radius (r$_c$), and the radii r$_1$, r$_2$, r$_3$, r$_4$ of the winding turns where the segments 45 begins to appear.

Referring to Table 1 and FIG. 8 together, for example, when the radius (r$_c$) of the core C is 3 m, the starting radii r$_1$, r$_2$, r$_3$ and r$_4$ of the winding turns including the segments 45 having heights of 3 mm (h$_1$), 4 mm (hz), 5 mm (h$_3$) and 6 mm (h$_4$) may be 6 mm, 7 mm, 8 mm, and 9 mm, respectively, and the heights of the segments 45 may be maintained at 6 mm from the radius 9 mm to the last winding turn. Also, the segment 45 may not be included in the winding turn having a radius smaller than 6 mm (r$_1$). In this example, since the segment 45 having a height of 3 mm (h$_1$) closest to the core C is located from the winding turn having a radius of 6 mm, even if the segments 45 are bent toward the core C, the segments 45 cover only the radial region of 3 mm to 6 mm and substantially does not block the core C. According to the $\alpha$ value of Formula 1, the location of the segment 45 may be shifted toward the core C within 10% of the core radius (r$_c$).

The width (d$_{B1}$) of the first portion B1 may increase in proportion to the bending length of the segment 45 of the third portion B2 closest to the first portion B1. The bending length corresponds to a length from the bending point 47 (FIG. 7) to the upper end side of the segment 45. Preferably, when the electrode 40 is used to manufacture an electrode assembly of a cylindrical battery having a form factor of 4680, the width (d$_{B1}$) of the first portion B1 may be set to 180 mm to 350 mm depending on the core diameter of the electrode assembly JR and the height of the segment 45 of the third portion B2.

The bending point 47 of the segment 45 may be set at a line passing through the bottom portion 46a of the cut groove 46 or a point spaced upward from the line by a predetermined distance. When the segment 45 is bent toward the core at a point spaced from the lower end of the cut groove 46 by a certain distance, the segments are overlapped better in the radial direction. When the segments 45 are bent, a segment at an outer side presses a segment at an inner side based on the center of the core. At this time, if the bending point 47 is spaced apart from the lower end of the cut groove 46 by a predetermined distance, the segment at the inner side is pressed in the winding axis direction by the segment at the outer side, and the segments 45 are overlapped better. The separation distance of the bending point 47 may be 3 mm or less, preferably 2 mm or less.

The pitch of the segment 45 corresponds to the width of the cut groove 46 in the winding direction X and may be determined in advance so that the segment alignment 50 may be formed in the radial direction of the electrode assembly JR in a preset area when the electrode 40 is wound. The predetermined pitch information of the segment 45 may be referred to when forming a plurality of segments 45 by notching the uncoated portion 43 of the electrode 40 using a notching device.

When the electrode 40 is wound, a spiral winding turn structure is formed. When the winding turn increases by 1, the radius of the electrode assembly JR increases quite small. Therefore, the spiral winding structure of the electrode 40 may be approximated as a continuous connection structure of semicircles whose radii constantly increase at every 1/2 winding turn. The approximation structure of the spiral winding turn may be used to determine the pitch of the segment 45 in advance. Hereinafter, the winding turn structure approximated by continuous connection of semicircles is named an approximate winding turn structure.

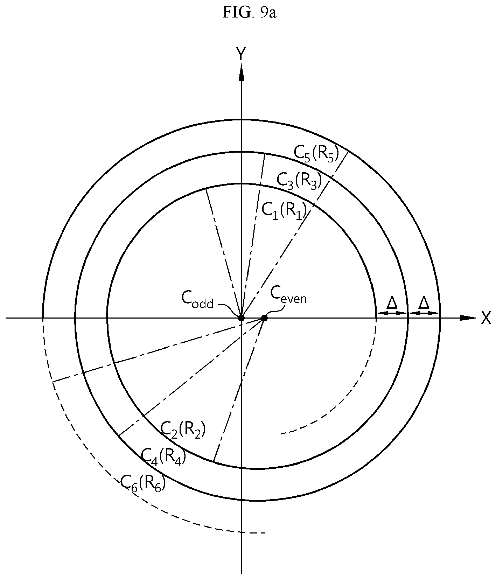

FIG. 9a is a diagram showing an approximate winding turn structure in which semicircles $C_1$, $C_2$, $C_3$, $C_4$, $C_5$, $C_6$ ... whose radii increase at every 1/2 winding turn are continuously connected to determine the pitches of the segments 45.

Referring to FIG. 9a, the line of the approximate winding turn structure approximately corresponds to a line where the plane passing through the central location in the thickness direction of the current collector 41 included in the electrode 40 and the plane perpendicular to the winding axis of the electrode assembly JR meet.

The approximate winding turn structure is a structure in which semicircles whose radii increase by '$\Delta/2$' are connected in a counterclockwise direction. That is, semicircles $C_1$ ($R_1$), $C_2$ ($R_2$), $C_3$ ($R_3$), $C_4$ ($R_4$), $C_5$ ($R_5$) ... whose radii increase by '$\Delta/2$' are connected in a counterclockwise direction to form the approximate winding turn structure. The symbol in parentheses is a symbol representing the radius. $R_2$ is $R_1+\Delta/2$, $R_3$ is $R_1+\Delta$, $R_4$ is $R_1+3\Delta/2$, and $R_5$ is $R_1+2\Delta$.

In the drawing, $\Delta$ corresponds to the interval between winding turns adjacent in the radial direction in the winding turn structure of the electrode assembly JR. Referring to FIG. 7, one positive electrode E1, one negative electrode E2, and two separators Se are included between the winding turns passing through the center in the thickness direction of the current collector (foil) e1, e2. Therefore, $\Delta$ is the sum of the thickness of the positive electrode E1, the thickness of the negative electrode E2, and the thickness of two separators Se. The thickness of the positive electrode E1 is the sum of the thicknesses of the current collector (foil) e1 and the active material layer a1 coated on both surfaces thereof, and the thickness of the negative electrode E2 is the sum of the thicknesses of the current collector (foil) e2 and the thicknesses of the active material layer a2 coated on both surfaces thereof.

In FIG. 9a, a point where the semicircle $C_1$ having radius $R_1$ and the positive x-axis meet corresponds to a boundary between the first portion B1 and the third portion B2, namely a location where the first segment 45 appears based on the winding direction X. In FIG. 9a, the winding turn structure formed by the first portion B1 of the electrode 40 is not explicitly shown. A semicircle $C_6$ with radius $R_6$ is shown as a dotted line. This means that the semicircles are continuously connected until the sum of the lengths of all semicircles becomes equal to the sum of the lengths of the second portion B3 and the third portion B2 of the electrode 40. As explained above, the radius of the semicircle increases by '$\Delta/2$'. $C_{odd}$ represents the centers of the semicircles $C_1$, $C_3$, $C_5$, and the like to which odd indices are assigned, and $C_{even}$ represents the centers of the semicircles $C_2$, $C_4$, $C_6$, and the like to which even indices are assigned. The centers of the semicircles to which odd indices are assigned are the same as $C_{odd}$, and the centers of the semicircles to which even indices are assigned are the same as $C_{even}$.

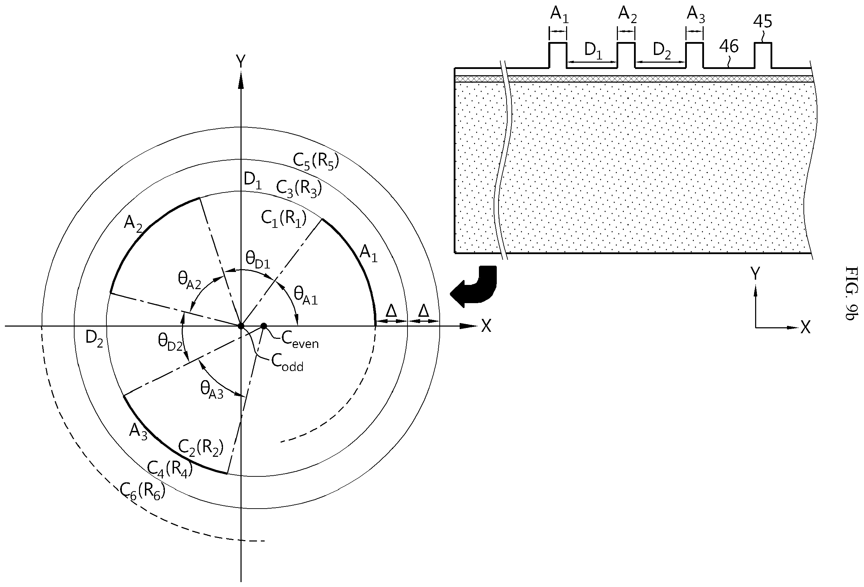

FIG. 9b is a diagram for deriving a formula for determining the pitch of the segment 45 using the approximate winding turn structure shown in FIG. 9a. For convenience of description, an embodiment in which the segments 45 are arranged in a cross shape as shown in FIG. 5 so that an angle between segment alignments 50 adjacent in the circumferential direction is substantially 90 degrees will be described.

In FIG. 9b, the parameter indicated by each symbol is as follows.

- $A_1$: length of the first segment in the winding direction (or, arc length in the semicircle $C_1$)
- $A_2$: length of the second segment in the winding direction (or, arc length in the semicircle $C_1$)
- $A_3$: length of the third segment in the winding direction (or, arc length in the semicircle $C_2$)
- $D_1$: pitch between the first segment and the second segment (or, arc length in the semicircle $C_1$)
- $D_2$: pitch between the second segment and the third segment (or, arc length spanning the semicircle $C_1$ and the

semicircle $C_2$)

- $\theta_{A1}$: circumferential angle of the first segment in the semicircle $C_1$ containing the arc corresponding to the first segment
- $\theta_{A2}$: circumferential angle of the second segment in the semicircle $C_1$ containing the arc corresponding to the second segment
- $\theta_{A3}$: circumferential angle of the third segment in the semicircle $C_2$ containing the arc corresponding to the third segment
- $\theta_{D1}$: circumferential angle of the first pitch $D_1$ in the semicircle $C_1$ containing the arc corresponding to the first pitch $D_1$
- $\theta_{D2}$: circumferential angle of the second pitch $D_2$ in the semicircles $C_1$ and $C_2$ containing the arc corresponding to the second pitch $D_2$

When the segments 45 are arranged radially in a cross shape as shown in FIGS. 5 and 6, the sum of the circumferential angle ($\theta_{A1}$) of the first segment and the circumferential angle ($\theta_{D1}$) of the first pitch ($D_1$) may be set to 90 degrees. For reference, in FIG. 9b, since the circumferential angle ($\theta_{A1}$) and the circumferential angle ($\theta_{D1}$) are generalized angles, the sum of the circumferential angle ($\theta_{A1}$) and the circumferential angle ($\theta_{D1}$) does not appear to be 90 degrees. Similarly, the sum of the circumferential angle ($\theta_{A2}$) of the second segment and the circumferential angle ($\theta_{D2}$) of the second pitch ($D_2$) may be set to 90 degrees. If the angle between segment alignments 50 adjacent in the circumferential direction is 120 degrees, the 90 degrees may be replaced with 120 degrees. In addition, when the angle between segment alignments 50 adjacent in the circumferential direction is 180 degrees, the 90 degrees may be replaced with 180 degrees.

According to geometry, the circumferential angle of an arc may be expressed as "arc length/radius". In addition, when an arc is located between two semicircles connected to each other, the circumferential angle of the arc may be approximated as "arc length/(average radius of two semicircles)".

According to the above, the circumferential angles $\theta_{A1}$, $\theta_{A2}$, $\theta_{D1}$ and $\theta_{D2}$ may be expressed as Formula 2 below.

<Formula 2>

$$\theta_{A1} = A_1/R_1, \; \theta_{D1} = D_1/R_1$$

$$\theta_{A2} = A_2/R_1, \; \theta_{D2} = D_2/\{(R_1+R_2)/2\}$$

$$\theta_{A1} + \theta_{D1} = \pi/2, \; \theta_{D1} = \pi/2 - \theta_{A1}$$

$$\theta_{A2} + \theta_{D2} = \pi/2, \; \theta_{D2} = \pi/2 - \theta_{A2}$$

Here,

$$R_2 = R_1 + \Delta/2.$$

In Formula 2, $\pi/2$ (90 degrees) may be replaced with $2\pi/3$ (120 degrees), $\pi$ (180 degrees), or the like according to the angle between the segment alignments 50 adjacent in the circumferential direction.

Meanwhile, since the length of the arc corresponding to the first pitch ($D_1$) is equal to the product of the circumferential angle $\theta_{D1}$ and the radius $R_1$ of the semicircle $C_1$, the pitch ($D_1$) may be expressed as Formula 3 below.

<Formula 3>

$$D_1 = \theta_{D1} * R_1 = (\pi/2 - \theta_{A1}) * R_1 = (\pi/2 - A_1/R_1) * R_1$$

Similarly, since the length of the arc corresponding to the second pitch ($D_2$) is equal to the product of the circumferential angle $\theta_{D2}$ and the average radius of the semicircles $C_1$ and $C_2$, the pitch ($D_2$) may be expressed as Formula 4 below.

<Formula 4>

$$D_2 = \theta_{D2}*(R_1+R_2)/2 = (\pi/2 - \theta_{A2})*\{(R_1+R_2)/2\} = (\pi/2 - A_2/R_1)*\{(R_1+R_2)/2\}$$

In Formulas 3 and 4, $A_1$ and $A_2$ correspond to the lengths of the first segment and the second segment in the winding direction and are values that can be known in advance. Preferably, $A_1$ and $A_2$ may be identical to each other. In addition, $R_1$ is a value that can be known in advance according to the design conditions of the electrode assembly, and $R_2$ is a value determined by $\Delta$.

Referring to the above, the $n+1^{th}$ pitch ($D_{n+1}$) adjacent to the $n+1^{th}$ segment along the winding direction may be generalized and expressed as Formula 5 below.

<Formula 5>

Case 1: $D_{n+1} = \theta_{Dn+1} * R_{n+1} = (90° - \theta_{An+1}) * R_{n+1}$

Case 2: $D_{n+1} = \theta_{Dn+1} * (R_n+R_{n+1})/2 = (90° - \theta_{An+1}) * (R_n+R_{n+1})/2$

(n is an integer greater than or equal to 0)

In Formula 5, the formula of Case 1 is a formula applied when the arc corresponding to the $n+1^{th}$ pitch ($D_{n+1}$) is located at the $n+1^{th}$ semicircle $C_{n+1}$, similarly to the arc corresponding to the first pitch ($D_1$).

Meanwhile, the formula of Case 2 is a formula applied when the arc corresponding to the $n+1^{th}$ pitch ($D_{n+1}$) is located over the $n^{th}$ semicircle $C_n$ and the $n+1^{th}$ semicircle $C_{n+1}$, similarly to the arc corresponding to the second pitch ($D_2$).

In the winding direction X, the lengths of the segments 45 $A_1$, $A_2$, $A_3$ ... and the radius $R_1$ of the semicircle where the arc of the first segment is located is a value that can be known in advance according to design conditions, and $\Delta$, which is a factor that determines the radius of the semicircle, is also a value that can be known in advance by the thickness of the electrode and the thickness of the separator.

Therefore, by using the known values and the general formula $D_{n+1}$ for the pitch of the segment, the segment 45 may be formed at an accurate location by determining the notching location of the segment 45 in the uncoated portion 43 of the electrode 40. In addition, when the electrode in which the segments 45 are formed in this way is wound to form an electrode assembly, a segment alignment 50 extending radially may be formed at the upper and lower portions of the electrode assembly.

Specifically, a region of the uncoated portion 43 of the electrode 40 corresponding to the first portion B1 is cut. Subsequently, cutting of the region corresponding to the length A1 of the first segment is skipped from the point where the cutting of the first portion B1 ends. Next, the region of the uncoated portion 43 corresponding to the first pitch ($D_1$) is cut from the point where the cutting skip region ends. Subsequently, cutting of the region corresponding to the length of the second segment is skipped, and the region of the uncoated portion 43 corresponding to the second pitch ($D_2$) is cut from the point where the cutting skip region ends. The process of cutting the region of the uncoated portion corresponding to the pitch of the segment and skipping the cutting of the region of the uncoated portion where the segment is to be formed as above may be repeated until the notching process for the entire uncoated portion is completed. When a jelly-roll type electrode assembly is manufactured using a positive electrode and a negative electrode prepared through this notching process and a separator, a segment alignment 50 extending radially may be formed at the upper and lower portions of the electrode assembly, as shown in FIG. 5.

The values that can be known in advance and the pitch values determined in advance by the formulas, which are used in the segment notching process, may be recorded on a storage medium of a computer device. In addition, the segment notching device may be connected to the computer device through a network and/or data line. In addition, the segment notching device may form a segment at a desired location by reading the data $A_1$, $A_2$, $A_3$,..., $A_n$ related to the lengths of the segments in the winding direction and the data $D_1$, $D_2$, $D_3$, ..., $D_n$ related to the pitch, which are recorded on the storage medium of the computer device, and controlling the operation and movement of a notching unit (e.g., a laser cutter).

The notching device capable of forming a segment on the uncoated portion is known in the art and thus will not described in detail here.

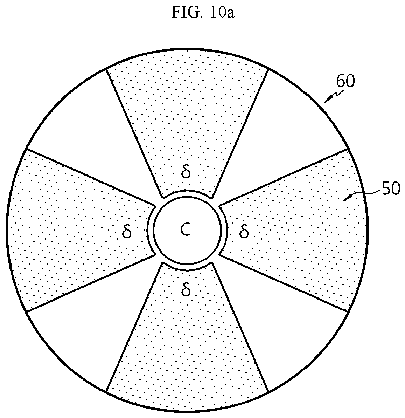

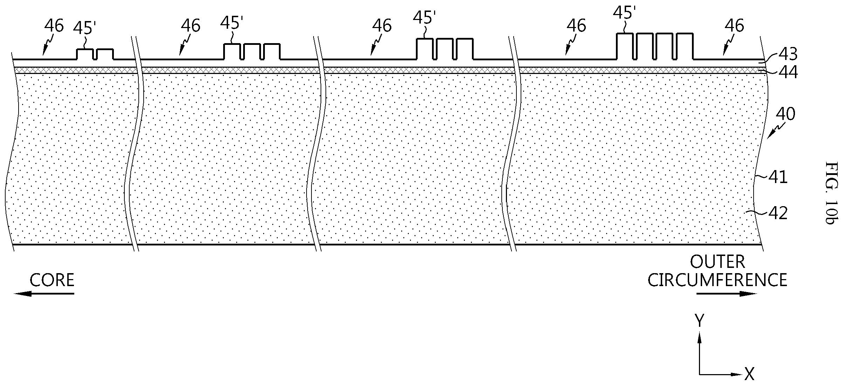

Meanwhile, in the winding direction X, the lengths of the segments 45 do not necessarily have to be the same and may gradually increase from the core toward the outer circumference. In this case, the lengths of the segment 45 $A_1$, $A_2$, $A_3$, ..., $A_n$ in the winding direction may be set to increase according to a certain rule. When the lengths of the segments 45 in the winding direction increase from the core toward the outer circumference, the shape of the segment alignment 50 may be deformed into a fan shape as shown in FIG. 10a. In addition, if the lengths of the segments 45 increases in the winding direction X, when the segments 45 are bent toward the core of the electrode assembly, the bending is not smoothly performed. Thus, as shown in FIG. 9b, a plurality of sub segments 45' may be formed in the uncoated portion region where one segment 45 is to be formed.

Although not shown in the drawing, it is obvious to those skilled in the art that the shape of the segment alignment 50 may be deformed into other geometric shapes such as a parallelogram and trapezoid by adjusting the lengths of the segments 45 in the winding direction and the pitch to various conditions.

In the present disclosure, the segment 45 may be deformed into various shapes while satisfying at least one of the following conditions.

Condition 1: the width of the lower portion is greater than the width of the upper portion
Condition 2: the width of the lower portion is the same as the width of the upper portion
Condition 3: the width is kept uniform from the upper portion to the lower portion
Condition 4: the width decreases from the lower portion to the upper portion
Condition 5: the width decreases and then increases from the lower portion to the upper portion
Condition 6: the width increases and then decreases from the lower portion to the upper portion
Condition 7: the width increases from the lower portion to the upper portion and then is kept uniform
Condition 8: the width decreases from the lower portion to the upper portion and then is kept uniform
Condition 9: the interior angle of one side and the interior angle of the other side of the lower portion are equal

Here, the interior angle may be defined as an angle formed by the side portion of the segment based on the width direction of the lower portion of the segment. If the side portion is a curve, the interior angle is defined as the angle between the tangent drawn at the lowest end of the curve and the width direction of the lower portion of the segment.

Condition 10: the interior angle of one side of the lower portion and the interior angle of the other side are different
Condition 11: the interior angle of one side of the lower portion and the interior angle of the other side of the lower portion have an acute angle, a right angle, or an obtuse angle, respectively
Condition 12: symmetrical in the left and right direction based on the winding axis direction
Condition 13: asymmetrical in the left and right direction based on the winding axis direction
Condition 14: the side portion is straight
Condition 15: the side portion is curved
Condition 16: the side portion is convex outward
Condition 17: the side portion is convex inward
Condition 18: the corner of the upper portion and/or the lower portion has a structure where straight lines meet
Condition 19: the corner of the upper portion and/or the lower portion has a structure where a straight line and a curve meet
Condition 20: the corner of the upper portion and/or the lower portion has a structure where curves meet
Condition 21: the corner of the upper portion and/or the lower portion has a round structure

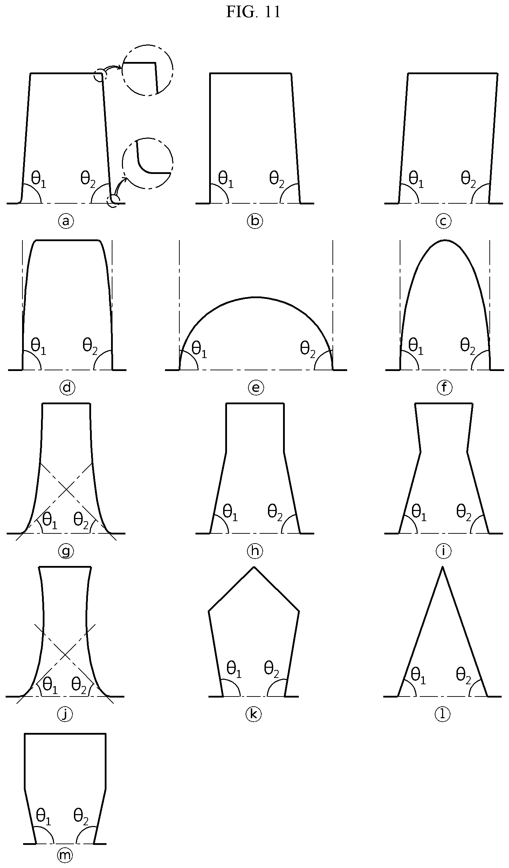

FIG. 11 is a diagram exemplarily showing the shapes of segments according to various modifications of the present disclosure.

As shown in the drawing, the segment 45 may have various geometric shapes in which a dotted line connecting the bottom portions 46a of both cut grooves 46 isa base. The geometric shape has a structure in which at least one straight line, at least one curved line, or a combination thereof are connected. In one example, the segment 45 may have a polygonal shape, a round shape, or various combinations thereof.

Specifically, the segment 45 may have a left-right symmetrical trapezoidal shape (ⓐ); a left-right asymmetric trapezoidal shape (ⓑ); a parallelogram shape (ⓒ); a triangular shape (ⓙ); a pentagonal shape (ⓚ); an arc shape (ⓔ); or an elliptical shape (ⓕ).

Since the shape of the segment 45 is not limited to those shown in FIG. 11, it may be transformed into other polygonal shapes, other round shapes, or combinations thereof to satisfy at least one of the conditions 1 to 21 described above.

In the polygonal shapes ⓐ, ⓑ, ⓒ, ⓚ and ⓙ of the segment 45, the corners of the upper portion and/or the lower portion may have a shape where straight lines meet or a round shape (see the enlarged view of the corners of the upper portion and/or the lower portion of the shape ⓐ).

In the polygonal shapes ⓐ, ⓑ, ⓒ, ⓚ, and ⓙ of the segment 45 and the curved shapes ⓔ and ⓕ of the segment 45, the interior angle ($\theta_1$) at one side and the interior angle ($\theta_2$) at the other side of the lower portion may be the same or different, and the interior angle ($\theta_1$) at one side and the interior angle ($\theta_2$) at the other side of the lower portion may be an acute angle, a right angle, or an obtuse angle, respectively. The interior angle is an angle at which the base and the side of a geometric figure meet. When the side is curved, the straight line may be replaced by a tangent line extending from the point where the base meets the side.

The shape of the side portion of the segment 45 having a polygonal shape may be modified in various ways.

In one example, the side portion of the segment shape ⓐ may be transformed into an outwardly convex curve, such as the shape ⓓ, or may be transformed into an inwardly curved segment, such as the shape ⓖ or ①.

In another example, the side portion of the segment shape ⓐ may be transformed into a bent straight line curved indented into the segment, such as the shape ⓗ or ①. Although not shown, the side portion of the segment shape ⓐ may be transformed into a straight line convexly bent to the outside.

In the segment shapes ⓓ, ⓖ, ①, ⓗ, and ① in which the side portion is modified in various ways, the interior angle ($\theta_1$) at one side and the interior angle ($\theta_2$) at the other side of the lower portion may be the same or different, and the interior angle ($\theta_1$) at one side and the interior angle ($\theta_2$) at the other side of the lower portion may be any one of an acute angle, a right angle, and an obtuse angle, respectively.

The width (length in the winding direction) of the segment 45 may have various change pattern of from the bottom to the top.

In one example, the width of the segment 45 may be kept uniform from the bottom to the top (shape ⓒ). In another example, the width of the segment 45 may gradually decrease from the bottom to the top (shapes ⓐ, ⓑ, ⓓ, ⓔ, ⓕ, and ⓖ). In still another example, the width of the segment 45 may gradually decrease and then increase from the bottom to the top (shapes ① and ①). In still another example, the width of the segment 45 may gradually increase and then decrease from the bottom to the top (shape ⓚ). In still another example, the width of segment 45 may gradually decrease from the bottom to the top and then be kept uniform (shape ⓗ). Although not shown, the width of the segment 45 may gradually increase from the bottom to the top and then be kept uniform.

Meanwhile, among the shapes of the segment 45 illustrated in FIG. 11, the polygonal shape with a flat top may be rotated by 180 degrees. In one example, when the segment shape ⓐ, ⓑ, ⓓ or ⓖ rotates by 180 degrees, the width of the segment 45 may gradually increase from the bottom to the top. In another example, when the segment shape ⓗ is rotated by 180 degrees, the width of the segment 45 may be kept uniform from the bottom to the top and then gradually increase.

In the embodiments (modifications) described above, according to another aspect of the present disclosure, it is possible to differently change the shape of the segment 45 according to the area of the third portion B2. In one example, for a region in which stress is concentrated, a round shape (e.g., semicircle, ellipse, etc.) that is advantageous for stress distribution may be applied, and for a region in which stress is relatively low, a polygonal shape (e.g., square, trapezoid, parallelogram, etc.) having a wide area as much as possible may be applied.

In the embodiments (modifications), the segment structure of the third portion B2 may also be applied to the first portion B1. However, when the segment structure is applied to the first portion B1, a reverse forming phenomenon in which the end of the first portion B1 is curved toward the outer circumference when the segment 45 of the third portion B2 is bent according to the radius of curvature of the core may occur. Therefore, even if there is no segment structure in the first portion B1, or even if the segment structure is applied, it is desirable to adjust the width and/or height and/or separation pitch of the segment 45 as small as possible to a level where reverse forming does not occur in consideration of the radius of curvature of the core.

According to still another aspect of the present disclosure, after the electrode 40 is wound into the electrode assembly JR, the segments 45 exposed on the upper portion and the lower portion of the electrode assembly JR to form the segment alignment 50 may be overlapped into several layers along the radial direction of the electrode assembly JR to form the bending surface regions.

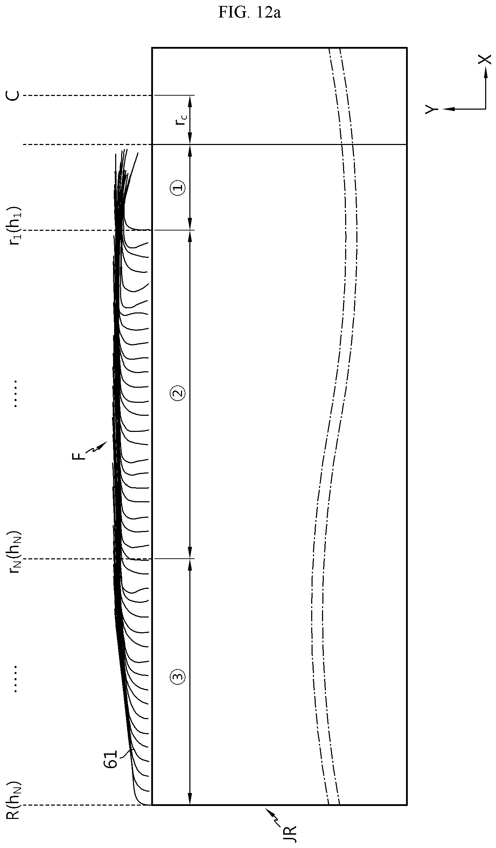

FIG. 12a is a schematic diagram showing a cross section of the bending surface region F formed by bending the segments 45 included in the segment alignment 50 toward the core C of the electrode assembly JR. The cross-sectional structure of the bending surface region F shows the structure when the segment alignment 50 is cut in the radial direction. The bending surface region F is formed by bending the segments 45 whose heights change stepwise from the core of the electrode assembly JR toward the outer circumference. In FIG. 12a, the cross section of the bending surface region F is shown only at the left side based on the winding axis of the electrode assembly JR. The bending surface region F may be formed at both the upper portion and the lower portion of the electrode assembly JR.

Referring to FIG. 12a, the bending surface region F has a structure in which the segments 45 are overlapped into a plurality of layers in the winding axis direction. The overlapping direction is the winding axis direction Y. The region ① is a segment skip region (first portion) with no segment, and the regions ② and (3) are regions where winding turns containing the segments 45 are located. The region (2) is a height variable region in which the heights of the segments 45 vary, and the region (3) is a height uniform region in which the heights of the segments are maintained uniformly until the outer circumference of the electrode assembly. As will be described later, the lengths of the region (2) and the region ③ in the radial direction may be variable. Meanwhile, the uncoated portion (second portion) included in at least one winding turn including an outermost winding turn may not include a segment structure. In this case, the second portion may be excluded in the region ③.

In the region (2), the heights of the segments 45 may be changed stepwise from the minimum height $h_1$ (=$h_{min}$) to the maximum height $h_N$ (=$h_{max}$) in the radius $r_1$ to $r_N$ region of the electrode assembly JR. The height variable regions where the heights of the segments 45 vary are $r_1$ to $r_N$. From the radius $r_N$ to the radius R of the electrode assembly JR, the heights of the segments 45 are maintained uniformly at $h_N$. Uniform heights means that the deviation of heights is within 5%.

At any radius location in the region (2) and the region ③, the stack number of the segments 45 varies depending on the radius location. In addition, the stack number of the segments 45 may vary depending on the width of the region (2), the minimum height ($h_1$) and maximum height ($h_{N-1}$) of the segments in the height variable region of the segments 45, and the height change range ($\Delta h$) of the segments 45. The stack number of the segments 45 is the number of segments that meet an imaginary line when the imaginary line is drawn in the winding axis direction from an arbitrary radius location of the electrode assembly JR.

Preferably, the stack number of the segments 45 at each location of the bending surface region F may be optimized according to the required welding strength of the current collecting plate by adjusting the height, width (length in the winding direction) and separation pitch of the segments 45 according to the radius of the winding turn containing the segment 45.

First, in the height variable region ((2)) of the segments 45, when the minimum height ($h_1$) of the segments is the same, it will be described through specific embodiments how the stack number of the segments 45 varies along the radial direction of the bending surface region F according to the change in the maximum height ($h_N$) of the segments 45.

The electrode assemblies of the embodiments 1-1 to 1-7 are prepared. The electrode assemblies of the embodiments have a radius of 22 mm and a core diameter of 4 mm. The positive electrode and the negative electrode included in the electrode assembly have the electrode structure shown in FIG. 4. The second portion B3 of the positive electrode and the negative electrode does not contain a segment. The length of the second portion B3 is 2% to 4% of the total length of the electrode. The positive electrode, the negative electrode, and the separator are wound by the method described in FIG. 2. The winding turns are between 48 turns and 56 turns, but the winding turns of the embodiments are 51 turns. The thickness of the positive electrode, the negative electrode and the separator are 149 um, 193 um and 13 um, respectively. The thickness of the positive electrode and the negative electrode is the thickness including the thickness of the active material layer. The thicknesses of the positive electrode current collecting plate and the negative electrode current collecting plate are 15 um and 10 um, respectively. The lengths of the positive and negative electrodes in the winding direction are 3948 mm and 4045 mm, respectively.

In each embodiment, the minimum height of the segments 45 is set to 3 mm so that the height variable region ((2)) of the segments 45 starts with a radius of 5 mm. In addition, in each embodiment, the heights of the segments 45 are increased by 1 mm per 1 mm increase in radius, and the maximum height of the segments 45 is changed variously from 4 mm to 10 mm.

Specifically, in the embodiment 1-1, the height variable region ((2)) of the segments 45 is 5 mm to 6 mm, and the heights of the segments 45 are variable from the radius 3 mm to 4 mm. In the embodiment 1-2, the height variable region ((2)) of the segments 45 is 5 mm to 7 mm, and the heights of the segments 45 are variable from 3 mm to 5 mm. In the embodiment 1-3, the height variable region ((2)) of the segments 45 is 5 mm to 8 mm, and the heights of the segments 45 are variable from 3 mm to 6 mm. In the embodiment 1-4, the height variable region (②) of the segments 45 is 5 mm to 9 mm, and the heights of the segments 45 are variable from 3 mm to 7 mm. In the embodiment 1-5, the height variable region (②) of the segments 45 is 5 mm to 10 mm, and the heights of the segments 45 are variable from 3 mm to 8 mm. In the embodiment 1-6, the height variable region ((2)) of the segments 45 is 5 mm to 11 mm, and the heights of the segments 45 are variable from 3 mm to 9 mm. In the embodiment 1-7, the height variable region ((2)) of the segments 45 is 5 mm to 12 mm, and the heights of the segments 45 are variable from 3 mm to 10 mm. In the embodiment 1-1 to 1-7, the heights of the segments 45 are uniform from the radius corresponding to the upper limit of the height variable region ((2)) to the outer circumference. In one example, in the embodiment 1-7, the heights of the segments 45 are uniform at 10 mm from radius 12 mm to 22 mm. Meanwhile, in the electrode assembly of the comparative example, the heights of the segments 45 are maintained at a single height of 3 mm from the radius of 5 mm to the radius of 22 mm.

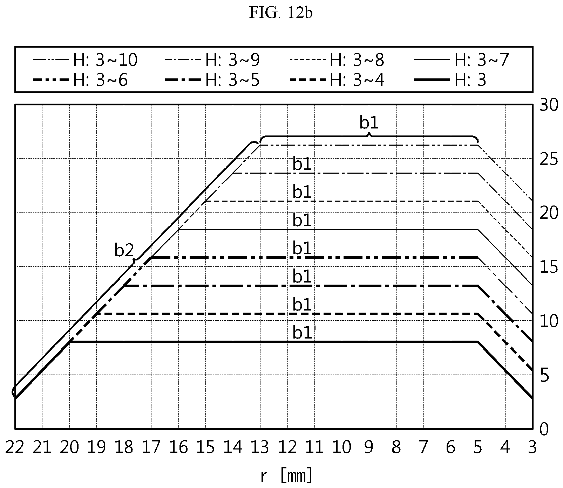

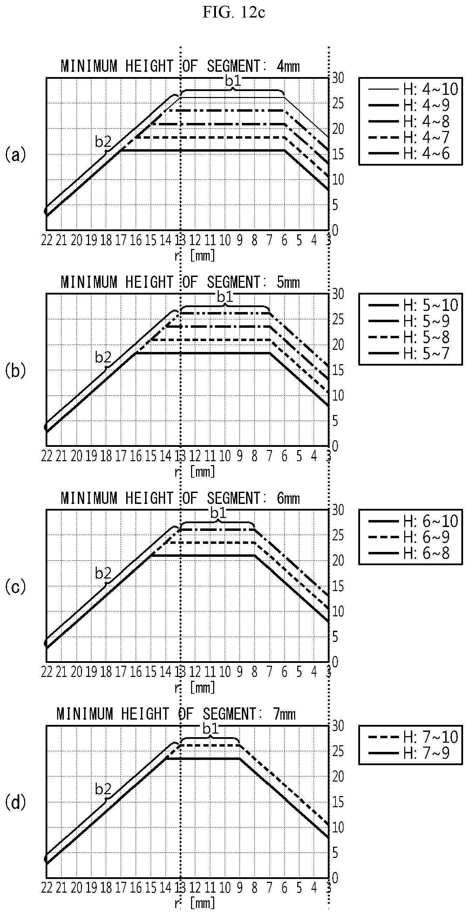

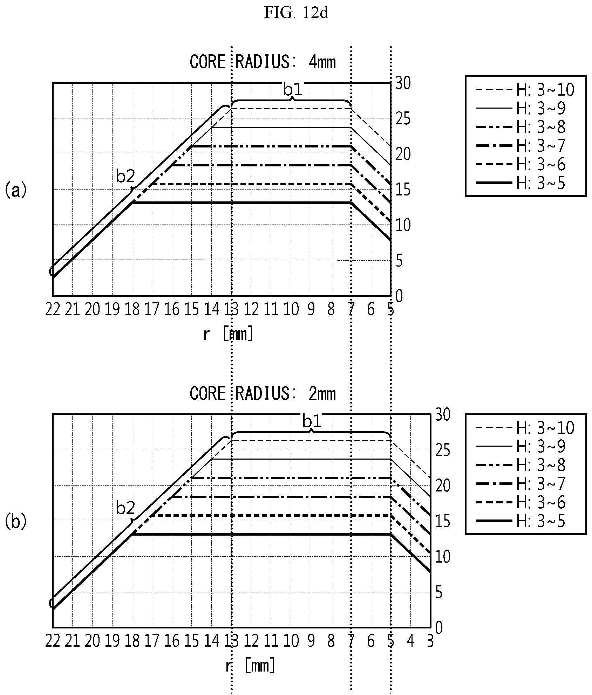

FIG. 12b is graphs showing the results of counting the stack number of segments along the radial direction in the bending surface region F of the positive electrode formed at the upper portion of the electrode assemblies according to the embodiments 1-1 to 1-7 and the comparative example. The bending surface region F is formed by bending the segments 45 included in the segment alignment 50 toward the core of the electrode assembly JR. The bending surface region of the negative electrode also shows substantially the same results. The horizontal axis of the graph is the radius based on the center of the core, and the vertical axis of the graph is the stack number of segments counted at each radius point, which is also applied in the same way to FIGS. 12c and 12d, explained later.

Referring to FIG. 12b, the stack number uniform region b1 of the segments is commonly shown in the embodiments 1-1 to 1-7 and the comparative example 1. The stack number uniform region b1 is a radial region of a flattened area in each graph. The length of the stack number uniform region b1 increases as the maximum height of the segments decreases, and the stack number uniform region b1' of the comparative example is longest. Meanwhile, the stack number of segments increases as the maximum height ($h_N$) of the segments increases. That is, when the maximum height ($h_N$) of the segments increases so that the width of the height variable region (②) of the segments increases, the stack number of segments increases while the width of the stack number uniform region b 1 decreases. At the outer side of the stack number uniform region b1, the stack number decrease region b2 appears, in which the stack number of segments decreases as the radius increases. The stack number decrease region b2 is a radial region in which the stack number of segments decreases as the radius of the electrode assembly increases. The stack number uniform region b1 and the stack number decrease region b2 are adjacent in the radial direction and complementary to each other. That is, when the length of one region increases, the length of the other region decreases. In addition, in the stack number decrease region b2, the stack number decreases in proportion to the distance away from the stack number uniform region b1.

From the point of view of the stack number of the segments, in the embodiments 1-1 to 1-7, the stack number of the segments is 10 or more in the stack number uniform region b1. An area where the stack number of segments is 10 or more may be set as a desirable welding target area. The welding target area is a region to which at least a part of the current collecting plate can be welded.

In the embodiments 1-1 to 1-7, the stack number uniform region b1 starts from the radius point where the height variable region (②) of the segments starts. That is, the height variable region (②) starts with the radius of 5 mm and extends toward the outer circumference.

In the embodiments 1-1 to 1-7 and the comparative example 1, for the positive electrode, Table 2 below shows the results of calculating a ratio of the length of the segment skip region (c) to the radius (b-a) of the electrode assembly excluding the core, a ratio (e/f) of the length of the stack number uniform region b1 to the length (f) from the radius point (5 mm) where the stack number uniform region starts to the outermost point (22 mm) of the electrode assembly, a ratio (d/f) of the length of the height variable region (d) of the segment to the length (f) from the radius point (5 mm) where the stack number uniform region starts to the outermost point (22 mm) of the electrode assembly, a ratio (h) of the length of the electrode area corresponding to the segment skip region to the entire length of the electrode, a ratio (i) of the length of the electrode area corresponding to the height variable region to the entire length of the electrode, and a ratio (j) of the length of the electrode area corresponding to the height uniform region to the entire length of the electrode, and the like.

Except that the negative electrode shows a difference of 0.1& to 1.2% for the parameter h, the other parameters are substantially the same as the positive electrode. The sum of the proportions h, i and j is slightly different from 100%. The reason is that there is a region with no segment in the second portion B3 corresponding to the uncoated portion at the outer circumference of the electrode. For example, in the embodiment 1-1, a segment does not exist in the second portion B3 corresponding to approximately 3% of the entire length of the electrode. In Table 2, a to f are parameters based on the length in the radial direction, and h, i, and j are parameters based on the length in the winding direction of the electrode. Also, the parameters corresponding to the ratio (%) are values rounded at one decimal place. These points are substantially the same in Tables 3 and 4, explained later.

Table 2

| Ref. | a. core radius (mm) | b. radius of winding structure (mm) | c. segment skip region (mm) | d. height variable region (mm) | e. stack number uniform region (mm) | f. segment region (mm) | g. uniform region stack number | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| embodiment 1-1 | 2 | 22 | 3 | 1 | 14 | 17 | 11 | 15% | 6% | 82% | 6% | 3% | 87% |
| embodiment 1-2 | 2 | 22 | 3 | 2 | 13 | 17 | 13 | 15% | 12% | 76% | 6% | 7% | 83% |
| embodiment 1-3 | 2 | 22 | 3 | 3 | 12 | 17 | 16 | 15% | 18% | 71% | 6% | 11% | 80% |
| embodiment 1-4 | 2 | 22 | 3 | 4 | 11 | 17 | 18 | 15% | 24% | 65% | 6% | 15% | 75% |
| embodiment 1-5 | 2 | 22 | 3 | 5 | 10 | 17 | 21 | 15% | 29% | 59% | 6% | 21% | 69% |
| embodiment 1-6 | 2 | 22 | 3 | 6 | 9 | 17 | 23 | 15% | 35% | 53% | 6% | 25% | 65% |
| embodiment 1-7 | 2 | 22 | 3 | 7 | 8 | 17 | 27 | 15% | 41% | 47% | 6% | 32% | 59% |
| comparative example 1 | 2 | 22 | 3 | 0 | 15 | 17 | 8 | 15% | 0% | 88% | 6% | - | - |

EP 4 350 873 A1

Seeing the embodiments 1-1 to 1-7 of Table 2, the stack number of segments is 11 to 27, and the ratio (d/f) of the height variable region (d) to the radial region f containing segments is 6% to 41%. In addition, the ratio (e/f) of the stack number uniform region (e) to the radial region f containing segments is 47% to 82%. In addition, the ratio (c/(b-a)) of the segment skip region (c) to the radius (b-a) of the electrode assembly excluding the core is 15%. In addition, the ratio of the length of the electrode area corresponding to the segment skip region to the entire length of the electrode is 6%, the ratio of the length of the electrode area corresponding to the height variable region to the entire length of the electrode to is 3% to 32%, and the ratio of the length of the electrode area corresponding to the height uniform region to the entire length of the electrode is 59% to 87%. The stack number (g) of the stack number uniform region is 10 or more in all of the embodiments 1-1 to 1-7. The stack number uniform region (e) decreases as the height variable region (d) of the segments increases, but the stack number (g) of the segments increases in the stack number uniform region (e). Preferably, the stack number uniform region (e) in which the stack number (g) of segments is 10 or more may be set as a welding target area.

In the cylindrical batteries with form factors of 1865 and 2170, the radius of the electrode assembly is approximately 9 mm to 10 mm. Therefore, for a conventional cylindrical battery, as in the embodiments 1-1 to 1-7, the length of the segment region (f) in the radial direction cannot be secured at the level of 17 mm, and the length of the stack number uniform region (e) cannot be secured at the level of 8 mm to 14 mm. This is because, in a conventional cylindrical battery, when the radius of the core is designed to be 2 mm, which is the same as in the embodiments 1-1 to 1-7, the radial region in which segments can be disposed is substantially only 7 mm to 8 mm. In addition, in the conventional cylindrical battery, the length of the electrode in the winding direction is about 600 mm to 980 mm. This short length of the electrode is only about 15% to 24% of the length of the electrode (positive electrode 3948 mm, negative electrode 4045 mm) used in the embodiments 1-1 to 1-7. Therefore, the numerical ranges for the parameters h, i, and j cannot be easily derived from design specifications of the conventional cylindrical battery.

Next, when the maximum height ($h_N$) of the segments is the same in the height variable region (② in FIG. 12a) of the segments, it will be explained through specific embodiments how the stack number of the segments varies along the radial direction of the bending surface region F according to the change in the minimum height ($h_1$) of the segments.

The electrode assemblies of the embodiments 2-1 to 2-5 have a radius of 22 mm and a diameter of core C of 4 mm. In the height variable region (② in FIG. 12a) of the segments 45, the minimum height (hi) is the same as 4 mm, and the maximum height ($h_N$) varies from 6 mm to 10 mm in increments of 1 mm. Therefore, in the electrode assemblies of the embodiments 2-1 to 2-5, the height variable region (② in FIG. 12a) of the segments has a width of 2 mm, 3 mm, 4 mm, 5 mm, and 6 mm, respectively, and the segment skip region (① in FIG. 12a) is a radial region with a radius of 2 mm to 6 mm.

The electrode assemblies of the embodiments 3-1 to 3-4 have a radius of 22 mm and a diameter of core C of 4 mm. In the height variable region (② in FIG. 12a) of the segments 45, the minimum height ($h_1$) is the same as 5 mm, and the maximum height ($h_N$) varies from 7 mm to 10 mm in increments of 1 mm. Therefore, in the electrode assemblies of the embodiments 3-1 to 3-4, the height variable region (② in FIG. 12a) of the segments has a width of 2 mm, 3 mm, 4 mm, and 5 mm, respectively, and the segment skip region (① in FIG. 12a) is a radial region with a radius of 2 mm to 7 mm.

The electrode assemblies of the embodiments 4-1 to 4-3 have a radius of 22 mm and a diameter of core C of 4 mm. In the height variable region (② in FIG. 12a) of the segments 45, the minimum height ($h_1$) is the same as 6 mm, and the maximum height ($h_N$) varies from 8 mm to 10 mm in increments of 1 mm. Therefore, in the electrode assemblies of the embodiments 4-1 to 4-3, the width of the height variable region (② in FIG. 12a) of the segments is 2 mm, 3 mm, and 4 mm, respectively, and the segment skip region (① in FIG. 12a) is a radial region with a radius of 2 mm to 8 mm.

The electrode assemblies of the embodiments 5-1 to 5-2 have a radius of 22 mm and a diameter of core C of 4 mm. In the height variable region (② in FIG. 12a) of the segments 45, the minimum height ($h_1$) is the same as 7 mm, and the maximum height ($h_N$) varies from 9 mm to 10 mm in 1 mm increments. Therefore, in the electrode assemblies of the embodiments 5-1 to 5-2, the width of the height variable region (② in FIG. 12a) of the segments is 2 mm and 3 mm, respectively, and the segment skip region (① in FIG. 12a) is a radial region with a radius of 2 mm to 9 mm.

FIG. 12c is graphs showing the results of counting the stack number of segments along the radial direction in the bending surface region F of the positive electrode formed at the upper portion of the electrode assemblies according to the embodiments 2-1 to 2-5, the embodiments 3-1 to 3-4, the embodiments 4-1 to 4-3, and the embodiments 5-1 to 5-2. The bending surface region of the negative electrode also shows substantially the same results.

In FIG. 12c, the graph (a) is shows the result of counting the stack number of segments along the radial direction in the bending surface region F for the embodiment 2-1 to 2-5, the graph (b) is for the embodiment 3-1 to 3-4, the graph (c) is for the embodiment 4-1 to 4-3, and the graph (d) is for the embodiments 5-1 to 5-2.

Referring to FIG. 12c, the stack number uniform region b1 of the segments appears in common in all embodiments. The stack number uniform region b1 is a radial region of the flat area in the graph. The length of the stack number uniform region b1 increases as the maximum height ($h_N$) of the segments decreases when the minimum height ($h_1$) of the segments is the same. Also, the length of the stack number uniform region b1 increases as the minimum height ($h_1$) of the segments decreases when the maximum height ($h_N$) of the segments is the same. Meanwhile, in the stack number uniform region b1, the stack number of segments increases as the maximum height ($h_N$) of the segments increases. Even in the embodiments above, the stack number decrease region b2 appears near the stack number uniform region b 1.

In all of the embodiments, the stack number of segments in the stack number uniform region b1 is 10 or more. Preferably, an area where the stack number of segments is 10 or more may be set as a desirable welding target area.

In the embodiments, the stack number uniform region b1 starts from the radius point where the height variable region (② in FIG. 12a) of the segments starts. In the embodiments 2-1 to 2-5, the height variable region (② in FIG. 12a) of the segments starts from 6 mm and extends toward the outer circumference. In the embodiments 3-1 to 3-4, the height variable region (② in FIG. 12a) of the segments starts from 7 mm and extends toward the outer circumference. In the embodiments 4-3 to 4-3, the height variable region (② in FIG. 12a) of the segments starts from 8 mm and extends toward the outer circumference. In the embodiments 5-1 to 5-2, the height variable region (② in FIG. 12a) of the segments starts from 9 mm and extends toward the outer circumference.

Table 3 below shows the results of calculating various parameters for the embodiments 2-1 to 2-5, the embodiments 3-1 to 3-4, the embodiments 4-1 to 4-3, and the embodiments 5-1 to 5-2, including a ratio (e/f) of the length of the stack number uniform region to the length from the radius point (6 mm, 7 mm, 8 mm, 9 mm) where the stack number uniform region starts to the outermost point (22 mm) of the electrode assembly, a ratio (d/f) of the length of the segment height variable region (②) to the length from the radius point (6 mm, 7 mm, 8 mm, 9 mm) where the stack number uniform region starts to the outermost point (22 mm) of the electrode assembly, and the like.

Table 3

| Ref. | a. core radius (mm) | b. radius of winding structure (mm) | c. segment skip region (mm) | d. height variable region (mm) | e. stack number uniform region (mm) | f. segment region (mm) | g. uniform region stack number | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| embodiment 2-1 | 2 | 22 | 4 | 2 | 7 | 16 | 16 | 20% | 13% | 44% | 10% | 6% | 81% |
| embodiment 2-2 | 2 | 22 | 4 | 3 | 8 | 16 | 18 | 20% | 19% | 50% | 10% | 11% | 77% |
| embodiment 2-3 | 2 | 22 | 4 | 4 | 9 | 16 | 21 | 20% | 25% | 56% | 10% | 16% | 72% |
| embodiment 2-4 | 2 | 22 | 4 | 5 | 10 | 16 | 23 | 20% | 31% | 63% | 10% | 20% | 68% |
| Embodiment 2-5 | 2 | 22 | 4 | 6 | 11 | 16 | 27 | 20% | 38% | 69% | 10% | 25% | 65% |
| embodiment 3-1 | 2 | 22 | 5 | 2 | 6 | 15 | 18 | 25% | 13% | 40% | 13% | 7% | 77% |
| embodiment 3-2 | 2 | 22 | 5 | 3 | 7 | 15 | 21 | 25% | 20% | 47% | 13% | 12% | 72% |
| embodiment 3-3 | 2 | 22 | 5 | 4 | 8 | 15 | 24 | 25% | 27% | 53% | 13% | 16% | 68% |
| embodiment 3-4 | 2 | 22 | 5 | 5 | 9 | 15 | 27 | 25% | 33% | 60% | 13% | 22% | 62% |
| embodiment 4-1 | 2 | 22 | 6 | 2 | 5 | 14 | 21 | 30% | 14% | 36% | 16% | 9% | 72% |
| embodiment 4-2 | 2 | 22 | 6 | 3 | 6 | 14 | 23 | 30% | 21% | 43% | 16% | 13% | 68% |
| embodiment 4-3 | 2 | 22 | 6 | 4 | 7 | 14 | 27 | 30% | 29% | 50% | 16% | 19% | 62% |
| embodiment 5-1 | 2 | 22 | 7 | 2 | 4 | 13 | 23 | 35% | 15% | 31% | 20% | 9% | 68% |

(continued)

| Ref. | a. core radius (mm) | b. radius of winding structure (mm) | c. segment skip region (mm) | d. height variable region (mm) | e. stack number uniform region (mm) | f. segment region (mm) | g. uniform region stack number | c/(b-a) (%) | d/f (%) | e/f (%) | h. ratio of segment skip region | i. ratio of height variable region | j. ratio of height uniform region |
|---|---|---|---|---|---|---|---|---|---|---|---|---|---|
| embodiment 5-2 | 2 | 22 | 7 | 3 | 5 | 13 | 27 | 35% | 23% | 38% | 20% | 15% | 62% |

Referring to the embodiments 2-5, 3-4, 4-3, and 5-2 of Table 3 together with FIGS. 12(a) to 12(d), the maximum height ($h_N$) of the segments in the height variable region (②) of the segments is the same as 10 mm, but the minimum height ($h_1$) of the segments increases to 4 mm, 5 mm, 6 mm, and 7 mm by 1 mm, and the length of the height variable region (②) decreases to 6 mm, 5 mm, 4 mm, and 3 mm by 1 mm. In the four embodiments, the ratio (e/f) of the stack number uniform region is largest in the embodiments 2-5 as 69% and is smallest in the embodiment 5-1 as 31%, and the stack numbers of the stack number uniform regions are all the same. From the results shown in Table 3, when the maximum height ($h_N$) of the segments is the same, it may be understood that as the width of the height variable region (②) of the segment increases since the minimum height ($h_1$) of the segments decreases, the width of the stack number uniform region also increases proportionally. The reason is that as the minimum length ($h_1$) of the segments is smaller, the radius point at which the segment starts is closer to the core, and thus the area where the segments are stacked expands toward the core.

Seeing Table 3, it may be found that the stack number of the segments is 16 to 27, the ratio (d/f) of the height variable region (②) of the segments is 13% to 38%, and the ratio (e/f) of the stack number uniform region is 31% to 69%. In addition, the ratio (c/(b-a)) of the segment skip region (c) to the radius (b-a) of the electrode assembly excluding the core is 20% to 35%. In addition, the ratio of the length of the electrode area corresponding to the segment skip region to the entire length of the electrode is 10% to 20%, the ratio of the length of the electrode area corresponding to the height variable region to the entire length of the electrode is 6% to 25%, and the ratio of the length of the electrode area corresponding to the height uniform region to the entire length of the electrode is 62% to 81%.

In the cylindrical batteries with form factors of 1865 and 2170, the electrode assembly has a radius of approximately 9 mm to 10 mm. Therefore, different from the embodiments, it is not possible to secure the length of the segment region (f) in the radial direction at the level of 13 mm to 16 mm, and it is not possible to secure the length of the stack number uniform region (e) where the stack number of the segments is 10 or more at the level of 5 mm to 11 mm while securing the length of the segment skip region (c) at the level of about 4 mm to 7 mm. This is because, in the conventional cylindrical battery, when the radius of the core is designed to be 2 mm, which is the same as the embodiments, the radial region in which segments can be disposed is substantially only 7 mm to 8 mm. In addition, in the conventional cylindrical battery, the length of the electrode in the winding direction is about 600 mm to 980 mm. This short length of the electrode is only about 15% to 24% of the length of the electrode (positive electrode 3948 mm, negative electrode 4045 mm) in the embodiments. Therefore, the numerical ranges for the parameters h, i, and j cannot be easily derived from design specifications of the conventional cylindrical batteries.

Next, when the minimum height ($h_1$) and the maximum height ($h_N$) of the segments are the same in the segment height variable region (② in FIG. 12a), it will be explained through specific embodiments how the stack number of the segments according to the diameter of the core C of the electrode assembly changes along the radial direction of the bending surface region F.

The electrode assemblies of the embodiments 6-1 to 6-6 have a radius of 22 mm, and the radius of the core C is 4 mm. In the height variable region (② in FIG. 12a) of the segments 45, the minimum height ($h_1$) of the segments is the same as 3 mm, and the maximum height ($h_N$) of the segments varies from 5 mm to 10 mm in increments of 1 mm. Therefore, in the electrode assemblies of the embodiments 6-1 to 6-6, the width of the height variable region (② in FIG. 12a) of the segments is 2 mm, 3 mm, 4 mm, 5 mm, 6 mm, and 7 mm, respectively, and the segment skip region (① in FIG. 12a) is a radial region with a radius of 4 mm to 7 mm.

The electrode assemblies of the embodiments 7-1 to 7-6 have a radius of 22 mm, and the radius of the core C is 2 mm. In the height variable region (② in FIG. 12a) of the segments 45, the minimum height ($h_1$) of the segments is the same as 3 mm, and the maximum height ($h_N$) of the segments varies from 5 mm to 10 mm in increments of 1 mm. Therefore, in the electrode assemblies of the embodiments 7-1 to 7-6, the height variable region (② in FIG. 12a) of the segments has a width of 2 mm, 3 mm, 4 mm, 5 mm, 6 mm, and 7 mm, respectively, and the segment skip region (①) is all the same as a radial region with a radius of 2 mm to 5 mm.

FIG. 12d is graphs showing the results of counting the stack number of segments measured along the radial direction in the bending surface region F of the positive electrode formed at the upper portion of the electrode assembly according to the embodiments 6-1 to 6-6 and the embodiments 7-1 to 7-6. Substantially the same results appear in the bending surface region of the negative electrode.

In FIG. 12d, the graph (a) shows the result of counting the stack number of segments measured along the radial direction in the bending surface region F for the embodiments 6-1 to 6-6, and the graph (b) is for the embodiments 7-1 to 7-6.

Referring to FIG. 12d, the stack number uniform region b1 of the segments appears in common in all embodiments. The stack number uniform region b1 is a radial region of the flat area in the graph. The length of the stack number uniform region b1 in the radial direction increases as the maximum height ($h_N$) of the segments decreases when the minimum height ($h_1$) of the segments is the same. Meanwhile, in the stack number uniform region b1, the stack number of segments increases as the maximum height ($h_N$) of the segments increases. In the embodiments, the stack number decrease region b2 is identified near the stack number uniform region b1.

In all of the embodiments, the stack number of the segments is 10 or more in the stack number uniform region b1. Preferably, an area where the stack number of segments is 10 or more may be set as a desirable welding target area.

In the embodiments, the stack number uniform region b1 starts from the radius point where the height variable region (② in FIG. 12a) of the segments starts. In the embodiments 6-1 to 6-6, the radius where the height variable region (② in FIG. 12a) of the segment starts is 7 mm, and in the embodiments 7-1 to 7-6, the radius where the height variable region (② in FIG. 12a) of the segments starts is 5 mm.

Table 4 below shows the results of calculating various parameters for the embodiments 6-1 to 6-6 and the embodiments 7-1 to 7-6, including a ratio (e/f) of the length of the stack number uniform region to the length from the radius point (7 mm, 5 mm) where the stack number uniform region starts to the outermost point (22 mm) of the electrode assembly, a ratio (d/f) of the length of the segment height variable region (②) to the length from the radius point (7 mm, 5 mm) where the stack number uniform region starts to the outermost point (22 mm) of the electrode assembly, and the like.

Table 4

| Ref. | a. core radius (mm) | b. radius of winding structur e (mm) | c. segm ent skip regio n (mm) | d. height variable region (mm) | e. stack number uniform region (mm) | f. segme nt region (mm) | g. uniform region stack number | c/(b-a) (%) | d/f (%) | e/f (%) | h. ratio of segme nt skip region | i. ratio of height variabl e region | j. ratio of height unifor m region |
|---|---|---|---|---|---|---|---|---|---|---|---|---|---|
| embodim ent 6-1 | 4 | 22 | 3 | 2 | 11 | 15 | 13 | 17% | 13% | 73% | 6% | 7% | 83% |
| embodim ent 6-2 | 4 | 22 | 3 | 3 | 10 | 15 | 16 | 17% | 20% | 67% | 6% | 11% | 80% |
| embodim ent 6-3 | 4 | 22 | 3 | 4 | 9 | 15 | 18 | 17% | 27% | 60% | 6% | 15% | 75% |
| embodim ent 6-4 | 4 | 22 | 3 | 5 | 8 | 15 | 21 | 17% | 33% | 53% | 6% | 21% | 69% |
| embodim ent 6-5 | 4 | 22 | 3 | 6 | 7 | 15 | 23 | 17% | 40% | 47% | 6% | 25% | 65% |
| embodim ent 6-6 | 4 | 22 | 3 | 7 | 6 | 15 | 27 | 17% | 47% | 40% | 6% | 32% | 59% |
| embodim ent 7-1 | 2 | 22 | 3 | 2 | 13 | 17 | 13 | 15% | 12% | 76% | 6% | 7% | 83% |
| embodim ent 7-2 | 2 | 22 | 3 | 3 | 12 | 17 | 16 | 15% | 18% | 71% | 6% | 11% | 80% |
| embodim ent 7-3 | 2 | 22 | 3 | 4 | 11 | 17 | 18 | 15% | 24% | 65% | 6% | 15% | 75% |
| embodim ent 7-4 | 2 | 22 | 3 | 5 | 10 | 17 | 21 | 15% | 29% | 59% | 6% | 21% | 69% |
| embodim ent 7-5 | 2 | 22 | 3 | 6 | 9 | 17 | 23 | 15% | 35% | 53% | 6% | 25% | 65% |
| embodim ent 7-6 | 2 | 22 | 3 | 7 | 8 | 17 | 27 | 15% | 41% | 47% | 6% | 32% | 59% |

Seeing the embodiments 6-6 and 7-6 of FIG. 12d and Table 4, the minimum height (hi) and the maximum height ($h_N$) of the segments in the height variable region (②) of the segments are the same as 3 mm and 10 mm, respectively. However, in the embodiment 6-6, the radius of the core is larger by 2 mm than that in the embodiment 7-6. Therefore, in the embodiment 6-6, the stack number uniform region (e) and the segment region (f) are smaller by 2 mm than those in the embodiment 7-6, and the stack number of segments is the same in the stack number uniform region. This result comes from the difference in the radius of the core. From the results shown in Table 4, when the width of the height variable region (②) of the segments is the same, it may be understood that, as the radius (a) of the core is smaller, the ratio (d/f) of the height variable region (②) decreases, but the ratio (e/f) of the stack number uniform region increases. Seeing Table 4, it may be found that the stack number of segments is 13 to 27, the ratio (d/f) of the height variable region (②) of the segments is 12% to 47%, and the ratio (e/f) of the length of the stack number uniform region is 40% to 76%. In addition, the ratio (c/(b-a)) of the segment skip region (c) to the radius (b-a) of the electrode assembly excluding the core is 15% to 17%. In addition, the ratio of the length of the electrode area corresponding to the segment skip region to the entire length of the electrode is 6%, the ratio of the length of the electrode area corresponding to the height variable region to the entire length of the electrode is 7% to 32%, and the ratio of the length of the electrode area corresponding to the height uniform region to the entire length of the electrode is 59% to 83%.

For cylindrical batteries with form factors of 1865 and 2170, the radius of the electrode assembly is approximately 9 mm to 10 mm. Therefore, different from the embodiments, the length of the segment region (f) in the radial direction is not secured at the level of 15 mm to 17 mm, and at the same time the length of the stack number uniform region (e) where the stack number of segments is 10 or more cannot be secured at the level of 6 mm to 13 mm, while securing the length of the segment skip region (c) at the level of about 3 mm. This is because, in the conventional cylindrical battery, when the radius of the core is designed to be 2 mm to 4 mm, which is the same as the embodiments, the radial region in which segments can be disposed is substantially only 5 mm to 8 mm. In addition, in the conventional cylindrical battery, the length of the electrode in the winding direction is about 600 mm to 980 mm. This short length of the electrode is only about 15% to 24% of the length of the electrode (positive electrode 3948 mm, negative electrode 4045 mm) in the embodiments. Therefore, the numerical ranges for the parameters h, i, and j cannot be easily derived from design specifications of the conventional cylindrical batteries.

Comprehensively considering the data in Tables 2 to 4, the stack number of segments may be 11 to 27 in the stack number uniform region of the segments. In addition, the ratio (d/f) of the height variable region (②) of the segments may be 6% to 47%. Also, the ratio (e/f) of the stack number uniform region may be 31% to 82%. In addition, the ratio (c/(b-a)) of the length of the segment skip region to the radius of the electrode assembly excluding the core may be 15% to 35%. In addition, the ratio of the length of the electrode area corresponding to the segment skip region to the entire length (length in the winding direction) of the electrode may be 6% to 20%. In addition, the ratio of the length of the electrode area corresponding to the height variable region of the segments to the entire length of the electrode may be 3% to 32%. In addition, the ratio of the length of the electrode area corresponding to the height uniform region of the segments to the entire length of the electrode may be 59% to 87%.

Meanwhile, the parameters described in Tables 2 to 4 may be varied according to design factors including the radius (a) of the core; the radius of the electrode assembly (b); the minimum height (hi) and the maximum height ($h_N$) in the height variable region of the segments; the height change range (Δh) of the segments per 1 mm increment of the radius; the thickness of the positive electrode, the negative electrode and the separator, and the like.

Therefore, in the stack number uniform region of the segments, the segment stack number may be extended as 10 to 35. The ratio (d/f) of the height variable region (①) of the segments may be extended as 1% to 50%. Also, the ratio (e/f) of the stack number uniform region may be extended as 30% to 85%. In addition, the ratio (c/(b-a)) of the length of the segment skip region to the radius of the electrode assembly excluding the core may be extended as 10% to 40%. In addition, the ratio of the length of the electrode area corresponding to the segment skip region to the entire length (length in the winding direction) of the electrode may be expanded as 1% to 30%. In addition, the ratio of the length of the electrode area corresponding to the height variable region of the segments to the entire length of the electrode may be expanded as 1% to 40%. In addition, the ratio of the length of the electrode area corresponding to the height uniform region of the segments to the entire length of the electrode may be expanded as 50% to 90%.

In the bending surface region F formed at the upper portion and the lower portion of the electrode assembly, the stack number uniform region may be used as the welding target area of the current collecting plate.

Preferably, the welding region of the current collecting plate overlaps the stack number uniform region by at least 50% in the radial direction of the electrode assembly, and a higher overlapping ratio is more preferred.

Preferably, the rest area of the welding region of the current collecting plate that does not overlap with the stack number uniform region may overlap with the stack number decrease region adjacent to the stack number uniform region in the radial direction.

More preferably, the rest area of the welding region of the current collecting plate that does not overlap with the stack number uniform region may overlap with the area of the stack number decrease region in which the segment stack number is 10 or more.

If the current collecting plate is welded to the area where the segment stack number is 10 or more, it is desirable in terms of the welding strength and prevention of damage to the separator or the active material layer during welding. In particular, it is useful when welding the current collecting plate using a high-power laser with high transmission characteristics.

If the stack number uniform region where 10 or more of the segments are stacked and the current collecting plate are welded with a laser, even if the output of the laser is increased to improve welding quality, the stack number uniform region absorbs most of the laser energy to form a welding bead, so it is possible to prevent the separator and the active material layer below the bending surface region F from being damaged by the laser.

In addition, since the segment stack number is 10 or more in the area where the laser is irradiated, welding beads are formed with sufficient volume and thickness. Therefore, sufficient welding strength may be secured and the resistance of the welding interface may be reduced to a level suitable for rapid charging.

When welding the current collecting plate, the output of the laser may be determined by the desired welding strength between the bending surface region F and the current collecting plate. The welding strength increases in proportion to the stack number of segments. This is because the volume of the welding beads formed by the laser increases as the stack number increases. The welding beads are formed as the material of the current collecting plate and the material of the segment are melted together. Therefore, when the volume of the welding bead is large, the current collecting plate and the bending surface region are coupled stronger and the contact resistance of the welding interface is lowered.

Preferably, the welding strength may be 2 kgf/cm$^2$ or more, more preferably 4 kgf/cm$^2$ or more. Also, the welding strength may be preferably set to 8 kgf/cm$^2$ or less, more preferably 6 kgf/cm$^2$ or less.

When the welding strength satisfies the above numerical range, even if severe vibration is applied to the electrode assembly along the winding axis direction and/or the radial direction, the properties of the welding interface do not deteriorate, and the resistance of the welding interface may be reduced since the volume of the welding beads is sufficient.

The power of the laser to meet the welding strength condition differs depending on the laser equipment, and may be appropriately adjusted in the range of 250W to 320W or in the range of 40% to 90% of the laser maximum output provided by the equipment.

The welding strength may be defined as a tensile force (kgf/cm$^2$) per unit area of the current collecting plate when the current collecting plate starts to separate from the bending surface region F. Specifically, after the current collecting plate is completely welded, a tensile force may be applied to the current collecting plate while gradually increasing the magnitude of the tensile force. When the tensile force exceeds a threshold value, the segment starts to separate from the welding interface. At this time, the value obtained by dividing the tensile force applied to the current collecting plate by the area of the current collecting plate corresponds to the welding strength.

In the bending surface region F, the segments are stacked in a plurality of layers, and according to the above embodiments, the stack number of segments may increase to 10 at minimum to 35 at maximum.

The thickness of the positive electrode current collector is 10 um to 25 um, and the thickness of the negative electrode current collector may be selected in the range of 5 um to 20 um. Therefore, the bending surface region F of the positive electrode may include an area where the total stack thickness of the segments is 100 um to 875 um. In addition, the bending surface region F of the negative electrode may include an area where the total stack thickness of the segments is 50 um to 700 um.

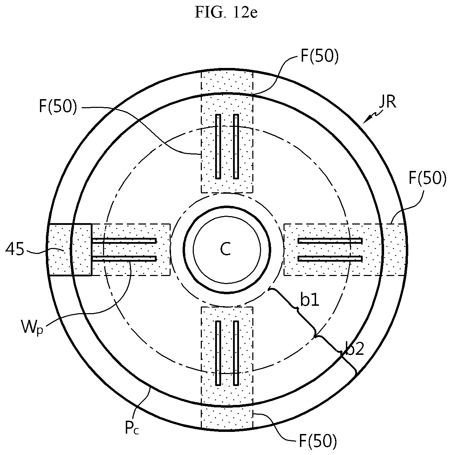

FIG. 12e is a top plan view of the electrode assembly showing the stack number uniform region b1 and the stack number decrease region b2 in the bending surface region F of the segments 45 according to an embodiment of the present disclosure.

Referring to FIG. 12e, the bending surface region F of the segments 45 is formed as the segments 45 included in the segment alignment 50 are bent toward the core C of the electrode assembly JR. In FIG. 12e, the area between the two circles indicated by the dashed-dotted line corresponds to the stack number uniform region b1 in which the stack number of the segments 45 is 10 or more, and the outer area of the stack number uniform region b1 corresponds to the stack number decrease region b2.

In one example, when the current collecting plate (P$_c$) is welded in the bending surface region F formed by the segment alignment 50, a welding pattern (W$_p$) is generated on the surface of the current collecting plate (P$_c$). The welding pattern (W$_p$) may have an array of line patterns or dot patterns. The welding pattern (W$_p$) corresponds to the welding region and may overlap by 50% or more with the stack number uniform region b1 of the segments along the radial direction. Therefore, a part of the welding pattern (W$_p$) may be included in the stack number uniform region b1, and the rest of the welding pattern (W$_p$) may be included in the stack number decrease region b2 outside the stack number uniform region b1. Of course, the entire welding pattern (W$_p$) may overlap with the stack number uniform region b 1.

Preferably, the edge of the portion where the current collecting plate (P$_c$) contacts the bending surface region F may cover the end of the segment 45 bent toward the core C in the last winding turn. In this case, since the welding pattern (W$_p$) is formed in a state where the segments 45 are pressed by the current collecting plate (P$_c$), the current collecting plate ($P_c$) and the bending surface region F are strongly coupled. As a result, since the segments 45 stacked in the winding axis direction come into close contact with each other, the resistance at the welding interface may be lowered and lifting of the segments 45 may be prevented.

Meanwhile, the bending direction of the segments may be opposite to that described above. That is, the segments may be bent from the core toward the outer circumference. In this case, the pattern in which the heights of the segments change along the winding direction (X-axis direction) may be opposite to that of the embodiments (modifications) described above. For example, the heights of the segments may gradually decrease from the core toward the outer circumference. Also, the structure applied to the first portion B 1 and the structure applied to the second portion B3 may be switched with each other. Preferably, the height change pattern may be designed such that the heights of the segments are gradually decreased from the core toward the outer circumference, but when the segment closest to the outer circumference of the electrode assembly is bent toward the outer circumference, the end of the segment does not protrude out of the outer circumference of the electrode assembly.

The electrode structure of the above embodiments (modifications) may be applied to at least one of the first electrode and the second electrode having different polarities included in the jelly-roll type electrode assembly. In addition, when the electrode structure of the above embodiments (modifications) is applied to any one of the first electrode and the second electrode, the conventional electrode structure may be applied to the other one. In addition, the electrode structures applied to the first electrode and the second electrode may not be identical but be different from each other.

For example, when the first electrode and the second electrode are a positive electrode and a negative electrode, respectively, any one of the above embodiments (modifications) may be applied to the first electrode and the conventional electrode structure (see FIG. 1) may be applied to the second electrode.

As another example, when the first electrode and the second electrode the second electrode are a positive electrode and a negative electrode, respectively, any one of the above embodiments (modifications) may be selectively applied to the first electrode and any one of the above embodiments (modifications) may be selectively applied to the second electrode.

In the present disclosure, a positive electrode active material coated on the positive electrode and a negative electrode active material coated on the negative electrode may employ any active material known in the art without limitation.

In one example, the positive electrode active material may include an alkali metal compound expressed by a general formula $A[A_xM_y]O_{2+z}$ (A includes at least one element among Li, Na and K; M includes at least one element selected from is Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; and the stoichiometric coefficients x, y and z are selected so that the compound maintains electrical neutrality).

In another example, the positive electrode active material may be an alkali metal compound $xLiM^1O_2$-$(1-x)Li_2M^2O_3$ disclosed in US6,677,082, US6,680,143, et al., wherein $M^1$ includes at least one element having an average oxidation state 3; $M^2$ includes at least one element having an average oxidation state 4; and $0 \leq x \leq 1$).

In still another example, the positive electrode active material may be lithium metal phosphate expressed by a general formula $Li_aM^1{}_xFe_{1-x}M^2{}_yP_{1-y}M^3{}_zO_{4-z}$ ($M^1$ includes at least one element selected from the Ti, Si, Mn, Co, Fe, V, Cr, Mo, Ni, Nd, Al, Mg and Al; $M^2$ includes at least one element selected from Ti, Si, Mn, Co, Fe, V, Cr, Mo, Ni, Nd, Al, Mg, Al, As, Sb, Si, Ge, V and S; $M^3$ includes a halogen element optionally including F; $0 < a \leq 2$, $0 \leq x \leq 1$, $0 \leq y < 1$, $0 \leq z < 1$; the stoichiometric coefficient a, x, y and z are selected so that the compound maintains electrical neutrality), or $Li_3M_2(PO_4)_3$ (M includes at least one element selected from Ti, Si, Mn, Fe, Co, V, Cr, Mo, Ni, Al, Mg and Al).

Preferably, the positive electrode active material may include primary particles and/or secondary particles in which the primary particles are aggregated.

In one example, the negative electrode active material may employ carbon material, lithium metal or lithium metal compound, silicon or silicon compound, tin or tin compound, or the like. Metal oxides such as $TiO_2$ and $SnO_2$ with a potential of less than 2V may also be used as the negative electrode active material. As the carbon material, low-crystalline carbon, high-crystalline carbon or the like may be used.

The separator may employ a porous polymer film, for example, a porous polymer film made of a polyolefin-based polymer such as ethylene homopolymer, propylene homopolymer, ethylene/butene copolymer, ethylene/hexene copolymer, ethylene/methacrylate copolymer, or the like, or laminates thereof. As another example, the separator may employ a common porous nonwoven fabric, for example, a nonwoven fabric made of high melting point glass fiber, polyethylene terephthalate fiber, or the like.

A coating layer of inorganic particles may be included in at least one surface of the separator. It is also possible that the separator itself is made of a coating layer of inorganic particles. Particles in the coating layer may be coupled with a binder so that an interstitial volume exists between adjacent particles.

The inorganic particles may be made of an inorganic material having a dielectric constant of 5 or more. As a non-limiting example, the inorganic particles may include at least one material selected from the group consisting of $Pb(Zr,Ti)O_3$ (PZT), $Pb_{1-x}La_xZr_{1-y}Ti_yO_3$ (PLZT), $PB(Mg_3Nb_{2/3})O_3$-$PbTiO_3$ (PMN-PT), $BaTiO_3$, hafnia ($HfO_2$), $SrTiO_3$, $TiO_2$, $Al_2O_3$, $ZrO_2$, $SnO_2$, $CeO_2$, MgO, CaO, ZnO and $Y_2O_3$.

Hereinafter, the structure of the electrode assembly according to an embodiment of the present disclosure will be described in detail.

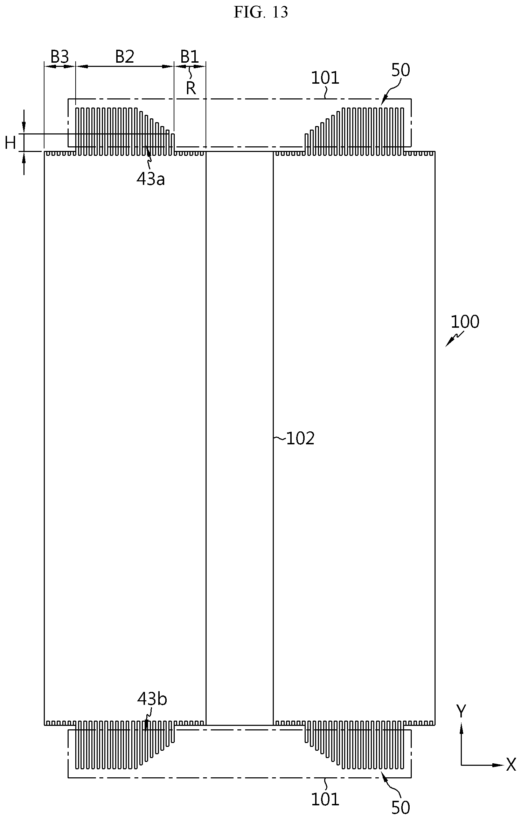

FIG. 13 is a cross-sectional view of a jelly-roll type electrode assembly 100 in which the electrode 40 according to an embodiment is applied to a first electrode (positive electrode) and a second electrode (negative electrode), taken along the Y-axis direction (winding axis direction) to pass through the segment alignment 50.

Referring to FIG. 13, the uncoated portion 43a of the first electrode includes a first portion B1 adjacent to the core of the electrode assembly 100, a second portion B3 adjacent to the surface of the outer circumference of the electrode assembly 100, and a third portion B2 interposed between the first portion B1 and the second portion B3.

The height of the uncoated portion of the first portion B1 is relatively smaller than the height of the segments 45. In addition, in the third portion B2, the bending length of the innermost segment 45 is equal to or smaller than the radial length R of the first portion B1. The bending length H corresponds to the distance from the point where the innermost segment 45 is bent to the top end of the segment 45. In one modification, the bending length H may be smaller than the sum of the radial length R of the winding turn formed by the first portion B1 and 10% of the radius of the core 102.

Therefore, even if the segments 45 included in the segment alignment 50 are bent, 90% or more of the diameter of the core 102 of the electrode assembly 100 is open to the outside. The core 102 is a cavity at the center of the electrode assembly 100. If the core 102 is not closed, there is no difficulty in the electrolyte injection process, and the electrolyte injection efficiency is improved. In addition, by inserting a welding jig through the core 102, the welding process may be easily performed between the current collecting plate of the negative electrode (or, positive electrode) and the battery housing (or, rivet terminal).

The height of the uncoated portion of the second portion B3 is relatively smaller than the height of the segment 45. Therefore, it is possible to prevent the phenomenon that the beading portion and the upper edge of the electrode assembly 100 contact each other to cause an internal short circuit while when the beading portion of the battery housing is being pressed near the winding turn of the second portion B3.

In one modification, the second portion B3 may include segments 45 forming the segment alignment 50, and the heights of the segments 45 of the second portion B3 may decrease gradually or stepwise, unlike FIG. 13. In addition, in FIG. 13, the heights of the segments 45 of the segment alignment 50 are the same in a part of the outer circumference. However, the heights of the segments 45 of the segment alignment 50 may increase gradually or stepwise from the boundary between the first portion B1 and the third portion B2 to the boundary between the third portion B2 and the second portion B3. In the segment alignment 50, the region where the heights of the segments 45 change corresponds to the height variable region (② in FIG. 12a) of the segments.

The second uncoated portion 43b has the same structure as the first uncoated portion 43a. In one modification, the second uncoated portion 43b may have a conventional electrode structure or an electrode structure of other embodiments (modifications).

The end 101 of the segments 45 included in the segment alignment 50 may be bent in the radial direction of the electrode assembly 100, for example from the outer circumference toward the core. At this time, the uncoated portions of the first portion B1 and the second portion B3 are not substantially bent.

Since the segment alignment 50 includes a plurality of segments 45 aligned in the radial direction, the bending stress is alleviated to prevent the uncoated portions 43a, 43b near the bending point from being torn or abnormally deformed. In addition, when the width and/or height and/or separation pitch of the segments 45 is adjusted according to the numerical range of the above embodiment, the segments 45 are bent toward the core and overlapped in several layers enough to secure sufficient welding strength and an empty hole (gap) is not formed in the bending surface region F.

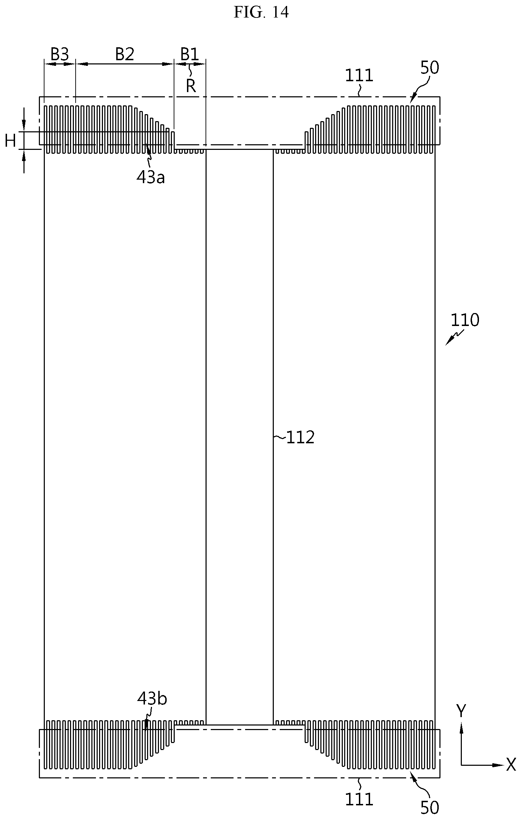

FIG. 14 is a cross-sectional view of an electrode assembly 110 according to still another embodiment of the present disclosure, taken along the Y-axis direction (winding axis direction) to pass through the segment alignment 50.

Referring to FIG. 14, the electrode assembly 110 is substantially identical to the electrode assembly 100 of FIG. 13, except that segments 45 forming the segment alignment 50 are also included in the second portion B3 and the heights of the segments 45 of the second portion B3 are substantially the same as the height of the segment 45 at the outermost side of the third portion B2.

In the electrode assembly 110, the height of the uncoated portion of the first portion B1 is relatively smaller than the height of the segments 45 included in the segment alignment 50. In addition, in the segment alignment 50, the bending length H of the segment 45 located at the innermost side is equal to or smaller than the radial length R of the winding turns formed by the first portion B1. Preferably, the winding turns formed by the first portion B1 may be the segment skip region (① in FIG. 12a) with no segment. In one modification, the bending length H may be less than the sum of the radial length R of the winding turns formed by the first portion B1 and 10% of the radius of the core 112.

Therefore, even if the segments 45 included in the segment alignment 50 are bent, 90% or more of the diameter of the core 112 of the electrode assembly 110 is open to the outside. If the core 112 is not blocked, there is no difficulty in the electrolyte injection process, and the electrolyte injection efficiency is improved. In addition, by inserting a welding jig through the core 112, the welding process may be easily performed between the current collecting plate of the negative electrode (or, positive electrode) and the battery housing (or, rivet terminal).

In one modification, a structure in which the heights of the segments 45 included in the segment alignment 50 increase gradually or stepwise from the core toward the outer circumference may extend to the winding turns formed by the second portion B3. In this case, the heights of the segments 45 included in the segment alignment 50 may increase gradually or stepwise from the boundary between the first portion B1 and the third portion B2 to the outermost surface of the electrode assembly 110.

The second uncoated portion 43b has the same structure as the first uncoated portion 43a. In one modification, the second uncoated portion 43b may have a conventional electrode structure or an electrode structure in other embodiments (modifications).

The end 111 of the segments 45 included in the segment alignment 50 may be bent in the radial direction of the electrode assembly 110, for example from the outer circumference toward the core. At this time, the uncoated portion of the first portion B1 is substantially not bent.

Since the segment alignment 50 includes a plurality of segments 45 aligned in the radial direction, the bending stress may be alleviated to prevent the uncoated portions 43a, 43b near the bending point from being torn or abnormally deformed. In addition, when the width and/or height and/or separation pitch of the segments 45 is adjusted according to the numerical range of the above embodiment, the segments 45 are bent toward the core and overlapped in several layers enough to secure sufficient welding strength and an empty hole (gap) is not formed in the bending surface region.

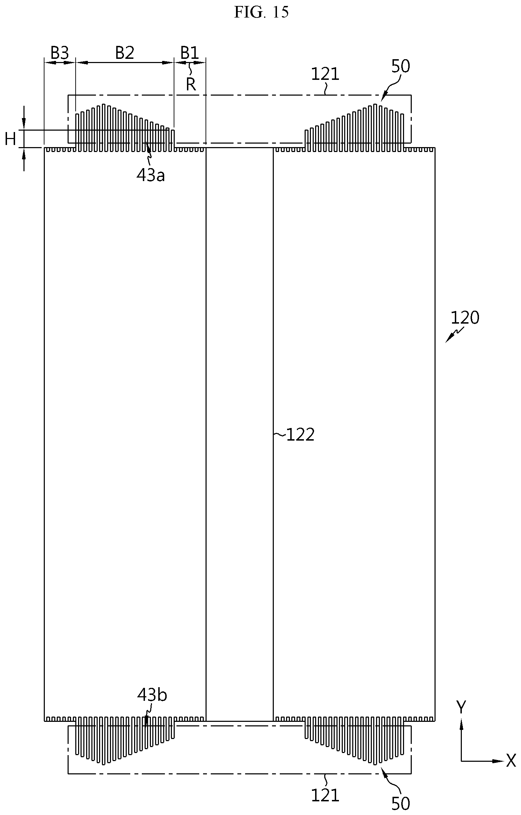

FIG. 15 is a cross-sectional view showing the electrode assembly 120 according to still another embodiment of the present disclosure, taken along the Y-axis direction (winding axis direction) to pass through the segment alignment 50.

Referring to FIG. 15, the electrode assembly 120 is substantially identical to the electrode assembly 100 of FIG. 13, except that the heights of the segments 45 included in the segment alignment 50 have a pattern of increasing gradually or stepwise and then decreasing. The radial region in which the heights of the segments 45 change may be regarded as the height variable region (② in FIG. 12a) of the segments. Even in this case, the height variable region of the segments 45 may be designed so that the stack number uniform region in which the stack number of the segments 45 is 10 or more appears in the desirable numerical range described above in the bending surface region F formed by bending the segments 45.

In the electrode assembly 120, the height of the uncoated portion of the first portion B1 is relatively smaller than the height of the segments 45. In addition, the bending length H of the segment 45 closest to the core 122 is equal to or smaller than the radial length R of the winding turns formed by the first portion B1. The region corresponding to the winding turns formed by the first portion B1 corresponds to the segment skip region (① in FIG. 12a) with no segment. In one modification, the bending length H may be less than the sum of the radial length R of the winding turns formed by the first portion B1 and 10% of the radius of the core 122.

Therefore, even if the segments 45 included in the segment alignment 50 are bent toward the core, 90% or more of the diameter of the core 122 of the electrode assembly 120 is open to the outside. If the core 122 is not blocked, there is no difficulty in the electrolyte injection process, and the electrolyte injection efficiency is improved. In addition, by inserting a welding jig through the core 122, the welding process may be easily performed between the current collecting plate of the negative electrode (or, positive electrode) and the battery housing (or, rivet terminal).

Also, the height of the uncoated portion of the second portion B3 is relatively smaller than the heights of the segments 45, and preferably, the segment 45 may not be formed in the second portion B3. Therefore, it is possible to prevent the phenomenon that the beading portion and the edge of the end of the electrode assembly 120 come into contact with each other to cause an internal short circuit while the beading portion of the battery housing is being pressed near the winding turns formed by the second portion B3. In one modification, the second portion B3 may include segments forming the segment alignment 50, and the heights of the segments of the second portion B3 may decrease gradually or stepwise toward the outer circumference.

The second uncoated portion 43b has the same structure as the first uncoated portion 43a. In one modification, the second uncoated portion 43b may have a conventional electrode structure or an electrode structure of other embodiments (modifications).

The end 121 of the segments 45 included in the segment alignment 50 may be bent from the outer circumference of the electrode assembly 120 toward the core. At this time, the uncoated portions of the first portion B1 and the second portion B3 are substantially not bent.

Since the segment alignment 50 includes a plurality of segments 45 aligned in the radial direction, the bending stress is alleviated to prevent the uncoated portions 43a, 43b from being torn or abnormally deformed. In addition, when the width and/or height and/or separation pitch of the segments 45 is adjusted according to the numerical range of the above embodiment, the segments 45 are bent toward the core and overlapped in several layers enough to secure sufficient welding strength and an empty hole (gap) is not formed in the bending surface region F.

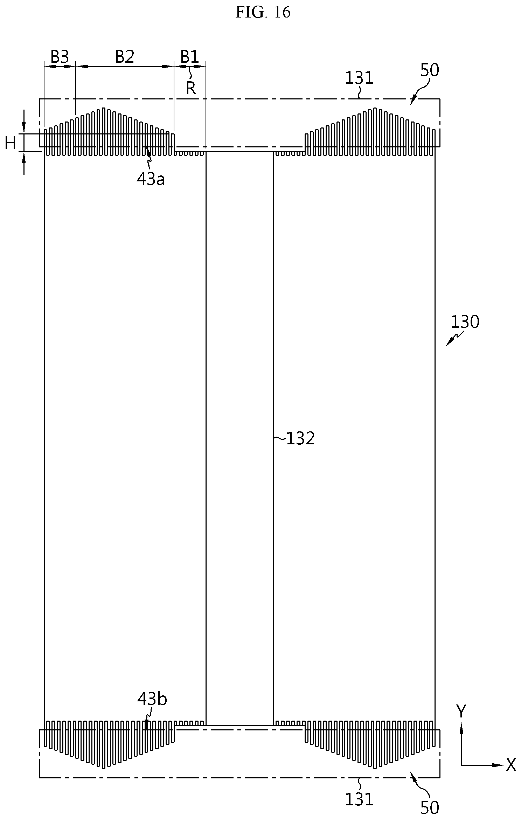

FIG. 16 is a cross-sectional view showing the electrode assembly 130 according to still another embodiment of the present disclosure, taken along the Y-axis direction (winding axis direction) to pass through the segment alignment 50.

**EP 4 350 873 A1**

Referring to FIG. 16, the electrode assembly 130 is substantially identical to the electrode assembly 120 of FIG. 15, except that segments 45 forming the segment alignment 50 are included in the second portion B3, and the heights of the segments 45 have a pattern of decreasing gradually or stepwise from the boundary point of the second portion B3 and the third portion B2 toward the outermost surface of the electrode assembly 130.

In the electrode assembly 130, the height of the uncoated portion of the first portion B1 is relatively smaller than the height of the segments 45. In addition, the bending length H of the segment 45 closest to the core 132 is equal to or smaller than the radial length R of the winding turns formed by the first portion B1. The winding turns formed by the first portion B1 corresponds to the segment skip region (① in FIG. 12a) with no segment. In one modification, the bending length H may be less than the sum of the radial length R of the winding turns formed by the first portion B1 and 10% of the radius of the core 132.

Therefore, even if the segments 45 included in the segment alignment 50 are bent toward the core, 90% or more of the diameter of the core 132 of the electrode assembly 130 is open to the outside. If the core 132 is not blocked, there is no difficulty in the electrolyte injection process, and the electrolyte injection efficiency is improved. In addition, by inserting a welding jig through the core 132, the welding process may be easily performed between the current collecting plate of the negative electrode (or, positive electrode) and the battery housing (or, rivet terminal).

The second uncoated portion 43b has the same structure as the first uncoated portion 43a. In one modification, the second uncoated portion 43b may have a conventional electrode structure or an electrode structure of other embodiments (modifications).

The end 131 of the segments 45 included in the segment alignment 50 may be bent from the outer circumference of the electrode assembly 130 toward the core. At this time, the uncoated portion of the first portion B 1 is substantially not bent.

Since the segment alignment 50 includes a plurality of segments 45 aligned in the radial direction, the bending stress is alleviated to prevent the uncoated portions 43a, 43b near the bending point from being torn or abnormally deformed. In addition, when the width and/or height and/or separation pitch of the segments 45 is adjusted according to the numerical range of the above embodiment, the segments 45 are bent toward the core and overlapped in several layers enough to secure sufficient welding strength and an empty hole (gap) is not formed in the bending surface region F.

Meanwhile, in the above embodiments (modifications), the ends of the segments 45 included in the segment alignment 50 may be bent from the core toward the outer circumference. In this case, it is preferable that the winding turns formed by the second portion B3 are designed as the segment skip region (① in FIG. 12a) with no segment and not bent toward the outer circumference. In addition, the radial width of the winding turns formed by the second portion B3 may be equal to or greater than the bending length of the outermost segment. In this case, when the outermost segment is bent toward the outer circumference, the end of the bent portion does not protrude toward the inner surface of the battery housing beyond the outer circumference of the electrode assembly. In addition, the structural change pattern of the segments included in the segment alignment 50 may be opposite to the above embodiments (modifications). For example, the heights of the segments may increase stepwise or gradually from the core toward the outer circumference. That is, by sequentially arranging the segment skip region (① in FIG. 12a), the height variable region (② in FIG. 12a), and the height uniform region (③ in FIG. 12a) from the outer circumference of the electrode assembly toward the core, in the bending surface region F, the stack number uniform region in which the stack number of segments is 10 or more may appear in a desirable numerical range.

Various electrode assembly structures according to an embodiment of the present disclosure may be applied to a jelly-roll type cylindrical battery.

Preferably, the cylindrical battery may be, for example, a cylindrical battery whose form factor ratio (defined as a value obtained by dividing the diameter of the cylindrical battery by height, namely a ratio of diameter (Φ) to height (H)) is greater than about 0.4. Here, the form factor means a value indicating the diameter and height of a cylindrical battery.

Preferably, the cylindrical battery may have a diameter of 40 mm to 50 mm and a height of 70 mm to 90 mm. The cylindrical battery according to an embodiment of the present disclosure may be, for example, a 46110 battery, a 4875 battery, a 48110 battery, a 4880 battery, and a 4680 battery. In the numerical value representing the form factor, first two numbers indicate the diameter of the battery, and the remaining numbers indicate the height of the battery.

When an electrode assembly having a tab-less structure is applied to a cylindrical battery having a form factor ratio of more than 0.4, the stress applied in the radial direction when the uncoated portion is bent is large, so that the uncoated portion may be easily torn. In addition, when welding the current collecting plate to the bending surface region of the uncoated portion, it is necessary to sufficiently increase the number of stacked layers of the uncoated portion in the bending surface region in order to sufficiently secure the welding strength and lower the resistance. This requirement may be achieved by the electrode and the electrode assembly according to the embodiments (modifications) of the present disclosure.

A battery according to an embodiment of the present disclosure may be an approximately cylindrical battery, whose diameter is approximately 46 mm, height is approximately 110 mm, and form factor ratio is 0.418.

A battery according to another embodiment may be an approximately cylindrical battery, whose diameter is about 48 mm, height is about 75 mm, and form factor ratio is 0.640.

A battery according to still another embodiment may be an approximately cylindrical battery, whose diameter is approximately 48 mm, height is approximately 110 mm, and form factor ratio is 0.436.

A battery according to still another embodiment may be an approximately cylindrical battery, whose diameter is approximately 48 mm, height is approximately 80 mm, and form factor ratio is 0.600.

A battery according to still another embodiment may be an approximately cylindrical battery, whose diameter is approximately 46 mm, height is approximately 80 mm, and form factor ratio is 0.575.

Conventionally, batteries having a form factor ratio of about 0.4 or less have been used. That is, conventionally, for example, 1865 battery, 2170 battery, etc. were used. The 1865 battery has a diameter of approximately 18 mm, height of approximately 65 mm, and a form factor ratio of 0.277. The 2170 battery has a diameter of approximately 21 mm, a height of approximately 70 mm, and a form factor ratio of 0.300.

Hereinafter, the cylindrical battery according to an embodiment of the present disclosure will be described in detail.

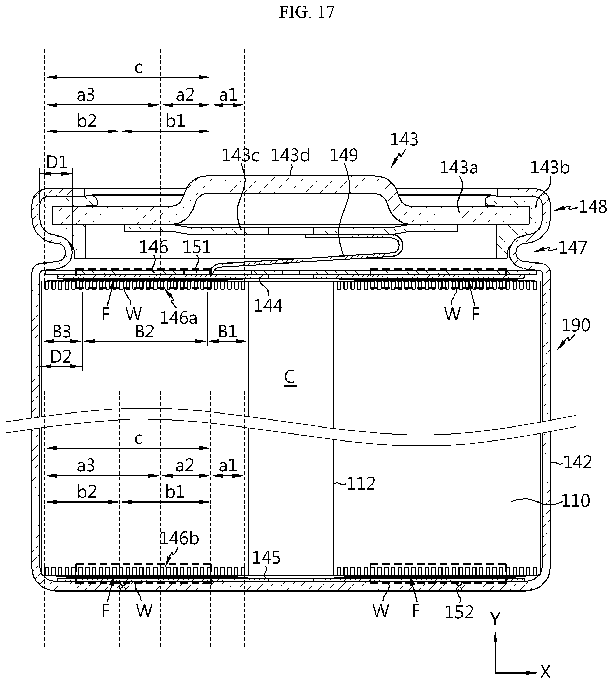

FIG. 17 is a cross-sectional view showing a cylindrical battery 190 according to an embodiment of the present disclosure, taken along the Y-axis direction to pass through the bending surface region F (FIG. 12a) formed by bending the segments included in the segment alignment 50 (FIG. 5).

Referring to FIG. 17, the cylindrical battery 190 according to an embodiment of the present disclosure includes an electrode assembly 110 having a first electrode, a separator and a second electrode, a battery housing 142 for accommodating the electrode assembly 110, and a sealing body 143 for sealing an open end of the battery housing 142.

The battery housing 142 is a cylindrical container with an opening at the top. The battery housing 142 is made of a conductive metal material such as aluminum, steel or stainless steel. A nickel coating layer may be formed on the surface of the battery housing 142. The battery housing 142 accommodates the electrode assembly 110 in the inner space through the top opening and also accommodates the electrolyte.

The electrolyte may be a salt having a structure like $A^+B^-$. Here, $A^+$ includes an alkali metal cation such as $Li^+$, $Na^+$, or $K^+$, or a combination thereof. and $B^-$ includes at least one anion selected from the group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

The electrolyte may also be dissolved in an organic solvent. The organic solvent may employ propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof.

The electrode assembly 110 may have a jelly-roll shape. The electrode assembly 110 may be manufactured by winding a laminate formed by sequentially laminating a lower separator, a first electrode, an upper separator, and a second electrode at least once, based on the winding center C, as shown in FIG. 2.

The first electrode and the second electrode have different polarities. That is, if one has positive polarity, the other has negative polarity. At least one of the first electrode and the second electrode may have an electrode structure according to the above embodiments (modifications). In addition, the other of the first electrode and the second electrode may have a conventional electrode structure or an electrode structure according to embodiments (modifications). The electrode pair included in the electrode assembly 110 is not limited to one electrode pair, two or more electrode pairs may be included.

As shown in FIG. 5, in the upper portion and the lower portion of the electrode assembly 110, the segment alignment 50 (FIG. 5) formed by the segments respectively included in the first uncoated portion 146a of the first electrode and the second uncoated portion 146b of the second electrode is provided.

The segments included in the segment alignment 50 are bent in the radial direction of the electrode assembly 110, for example from the outer circumference toward the core, to form the bending surface region F.

The first portion B1 has a lower height than the other portion and corresponds to the segment skip region a1 with no segment, so it is not bent toward the core.

Preferably, the bending surface region F may include a segment skip region a1, a segment height variable region a2, and a segment height uniform region a3 from the core toward the outer circumference.

As shown in FIGS. 12b, 12c, and 12d, the bending surface region F includes a stack number uniform region b1 having the stack number of 10 or more adjacent to the segment skip region a1.

The bending surface region F may also include a stack number decrease region b2 adjacent to the outer circumference of the electrode assembly 110, where the stack number of segments decreases toward the outer circumference. Preferably, the stack number uniform region b1 may be set as a welding target area.

In the bending surface region F, the preferred numerical range of the ratio (a2/c) of the segment height variable region a2 and the ratio (b1/c) of the segment stack number uniform region b1 based on the radial length c where segments exist, and the ratio of the area of the stack number uniform region b1 to the area of the bending surface region F are already described above and thus will not be described again.

The first current collecting plate 144 may be laser-welded to the bending surface region F of the first uncoated portion 146a, and the second current collecting plate 145 may be laser-welded to the bending surface region F of the second uncoated portion 146b. The welding method may be replaced by ultrasonic welding, resistance welding, spot welding, and the like.

Preferably, an area of 50% or more of the welding regions W of the first current collecting plate 144 and the second current collecting plate 145 may overlap with the stack number uniform region b1 of the bending surface region F. Optionally, the remaining area of the welding region W may overlap with the stack number decrease region b2 of bending surface region F. In terms of high welding strength, low resistance of the welding interface, and prevention of damage to the separator or the active material layer, it is more preferable that the entire welding region W overlaps the stack number uniform region b1.

Preferably, in the stack number uniform region b1 and, optionally, the stack number decrease region b2 overlapping with the welding region W, the stack number of segments may be 10 to 35.

Optionally, when the segment stack number of the stack number decrease region b2 overlapping with the welding region W is less than 10, the laser output of the stack number decrease region b2 may be lowered than the laser output of the stack number uniform region b1. That is, when the welding region W overlaps with the stack number uniform region b1 and the stack number decrease region b2 at the same time, the laser output may be varied according to the stack number of segments. In this case, the welding strength of the stack number uniform region b1 may be greater than the welding strength of the stack number decrease region b2.

In the bending surface region F formed on the upper portion and the lower portion of the electrode assembly 110, the radial length of the segment skip region a1 and/or the height variable region a2 of the segments and/or the height uniform region a3 of the segments may be the same or different.

In the electrode assembly 110, the uncoated portion of the first portion B1 has a relatively smaller height than other portions. In addition, as shown in FIG. 14, the bending length H of the segment closest to the core is smaller than the sum of the radial length R of the winding turns formed by the first portion B1 and 10% of the radius of the core 112.

Therefore, even if the segments included in the segment alignment 50 are bent toward the core, 90% or more of the diameter of the core 112 of the electrode assembly 110 may be open to the outside. If the core 112 is not blocked, there is no difficulty in the electrolyte injection process, and the electrolyte injection efficiency is improved. In addition, by inserting a welding jig through the core 112, the welding process may be easily performed between the second current collecting plate 145 and the battery housing 142.

If the width and/or height and/or separation pitch of the segments is adjusted to satisfy the numerical range of the above embodiment, when the segments are bent, the segments are overlapped in several layers enough to secure sufficient welding strength and an empty hole (gap) is not formed in the bending surface region F.

Preferably, the first current collecting plate 144 and the second current collecting plate 145 may have outer diameters covering the end of the segment 45 (FIG. 12e) bent at the last winding turn of the first electrode and the second electrode. In this case, welding is possible in a state while the segments forming the bending surface region F are uniformly pressed by the current collecting plate, and the tightly stacked state of the segments may be well maintained even after welding. The tightly stacked state means a state where there is substantially no gap between the segments as shown in FIG. 12a. The tightly stacked state contributes to lowering the resistance of the cylindrical battery 190 to a level suitable for rapid charging (for example, 4 milliohms or less).

The sealing body 143 may include a cap plate 143a, a first gasket 143b for providing airtightness between the cap plate 143a and the battery housing 142 and having insulation, and a connection plate 143c electrically and mechanically coupled to the cap plate 143a.

The cap plate 143a is a component made of a conductive metal material, and covers the top opening of the battery housing 142. The cap plate 143a is electrically connected to the bending surface region F of the first electrode, and is electrically insulated from the battery housing 142 by means of the first gasket 143b. Accordingly, the cap plate 143a may function as the first electrode (for example, positive electrode) of the cylindrical battery 190.

The cap plate 143a is placed on the beading portion 147 formed on the battery housing 142, and is fixed by a crimping portion 148. Between the cap plate 143a and the crimping portion 148, the first gasket 143b may be interposed to secure the airtightness of the battery housing 142 and the electrical insulation between the battery housing 142 and the cap plate 143a. The cap plate 143a may have a protrusion 143d protruding upward from the center thereof.

The battery housing 142 is electrically connected to the bending surface region F of the second electrode. Therefore, the battery housing 142 has the same polarity as the second electrode. If the second electrode has negative polarity, the battery housing 142 also has negative polarity.

The battery housing 142 includes the beading portion 147 and the crimping portion 148 at the top thereof. The beading portion 147 is formed by press-fitting the periphery of the outer circumferential surface of the battery housing 142. The beading portion 147 prevents the electrode assembly 110 accommodated inside the battery housing 142 from escaping through the top opening of the battery housing 142, and may function as a support portion on which the sealing body 143 is placed.

The second portion B3 of the first electrode may not include a segment and may be notched in the same structure as the first portion B1. Preferably, the inner circumference of the beading portion 147 may be spaced apart from the winding turns formed by the second portion B3 of the first electrode by a predetermined interval. This is because the second portion B3 is notched like the first portion B1. More specifically, the lower end of the inner circumference of the beading portion 147 is separated from the winding turns formed by the second portion B3 of the first electrode by a predetermined interval. In addition, since the uncoated portion of the second portion B3 has a low height, the winding turns of the second portion B3 are not substantially affected even when the battery housing 142 is press-fitted at the outside to form the beading portion 147. Therefore, the winding turns of the second portion B3 are not pressed by other components such as the beading portion 147, and thus partial shape deformation of the electrode assembly 110 is prevented, thereby preventing a short circuit inside the cylindrical battery 190.

Preferably, when the press-fit depth of the beading portion 147 is defined as D1 and the radial length from the inner circumference of the battery housing 142 to the boundary point between the second portion B3 and the third portion B2 is defined as D2, the relational expression $D1 \leq D2$ may be satisfied. In this case, when press-fitting the battery housing 142 to form the beading portion 147, it is possible to substantially prevent the winding turns formed by the second portion B3 from being damaged.

The crimping portion 148 is formed on the beading portion 147. The crimping portion 148 has an extended and bent shape to cover the outer circumference of the cap plate 143a disposed on the beading portion 147 and a part of the upper surface of the cap plate 143a.

The cylindrical battery 190 may further include a first current collecting plate 144 and/or a second current collecting plate 145 and/or an insulator 146.

The first current collecting plate 144 is coupled to the upper portion of the electrode assembly 110. The first current collecting plate 144 is made of a conductive metal material such as aluminum, copper, steel, nickel and so on, and is electrically connected to the bending surface region F of the first electrode. The electric connection may be made by welding. A lead 149 may be connected to the first current collecting plate 144. The lead 149 may extend upward above the electrode assembly 110 and be coupled to the connection plate 143c or directly coupled to the lower surface of the cap plate 143a. The lead 149 may be connected to other components by welding.

Preferably, the first current collecting plate 144 may be integrally formed with the lead 149. In this case, the lead 149 may have an elongated plate shape extending outward from near the center of the first current collecting plate 144.

The first current collecting plate 144 and the bending surface region F of the first electrode may be coupled by, for example, laser welding. Laser welding may be performed by partially melting a base material of the current collecting plate. In one modification, the first current collecting plate 144 and the bending surface region F may be welded with a solder interposed therebetween. In this case, the solder may have a lower melting point compared to the first current collecting plate 144 and the first uncoated portion 146a. The laser welding may be replaced with resistance welding, ultrasonic welding, spot welding, or the like.

The second current collecting plate 145 may be coupled to the lower surface of the electrode assembly 110. One side of the second current collecting plate 145 may be coupled by welding to the bending surface region F of the second electrode, and the other side may be coupled to the inner bottom surface of the battery housing 142 by welding. The coupling structure between the second current collecting plate 145 and the bending surface region F of the second electrode may be substantially the same as the coupling structure between the first current collecting plate 144 and the bending surface region F of the first electrode.

The insulator 146 may cover the first current collecting plate 144. The insulator 146 may cover the first current collecting plate 144 at the upper surface of the first current collecting plate 144, thereby preventing direct contact between the first current collecting plate 144 and the inner circumference of the battery housing 142.

The insulator 146 has a lead hole 151 so that the lead 149 extending upward from the first current collecting plate 144 may be withdrawn therethrough. The lead 149 is drawn upward through the lead hole 151 and coupled to the lower surface of the connection plate 143c or the lower surface of the cap plate 143a.

A peripheral region of the edge of the insulator 146 may be interposed between the first current collecting plate 144 and the beading portion 147 to fix the coupled body of the electrode assembly 110 and the first current collecting plate 144. Accordingly, the movement of the coupled body of the electrode assembly 110 and the first current collecting plate 144 may be restricted in the height direction of the battery 190, thereby improving the assembly stability of the battery 190.

The insulator 146 may be made of an insulating polymer resin. In one example, the insulator 146 may be made of polyethylene, polypropylene, polyimide, or polybutylene terephthalate.

The battery housing 142 may further include a venting portion 152 formed at a lower surface thereof. The venting portion 152 corresponds to a region having a smaller thickness compared to the peripheral region of the lower surface of the battery housing 142. The venting portion 152 is structurally weak compared to the surrounding area.

Accordingly, when an abnormality occurs in the cylindrical battery 190 and the internal pressure increases to a predetermined level or more, the venting portion 152 may be ruptured so that the gas generated inside the battery housing 142 is discharged to the outside. The internal pressure at which the venting portion 152 is ruptured may be approximately 15 kgf/cm$^2$ to 35 kgf/cm$^2$.

The venting portion 152 may be formed continuously or discontinuously while drawing a circle at the lower surface of the battery housing 142. In one modification, the venting portion 152 may be formed in a straight pattern or other patterns.

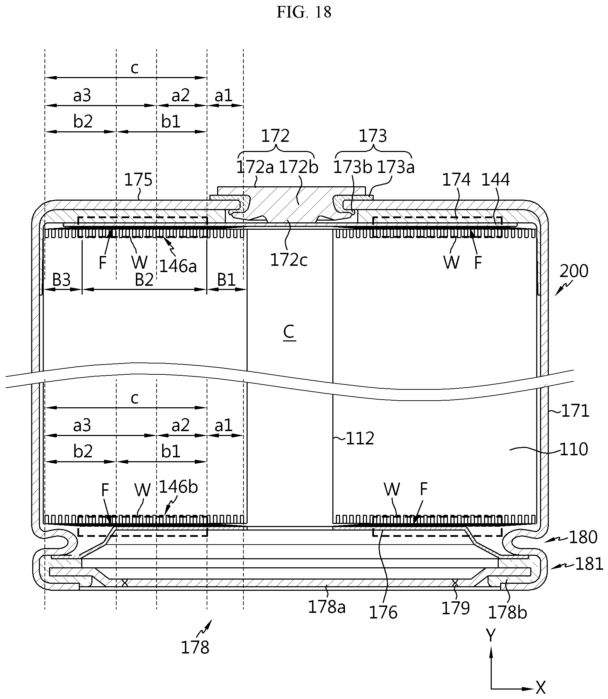

FIG. 18 is a cross-sectional view showing a cylindrical battery 200 according to an embodiment of the present disclosure, taken along the Y-axis direction to pass through the bending surface region F (FIG. 12a) formed by bending the segments included in the segment alignment 50 (FIG. 5).

Referring to FIG. 18, the structure of the electrode assembly of the cylindrical battery 200 is substantially the same as that of the cylindrical battery 190 of in FIG. 17, and the other structure except for the electrode assembly is changed.

Specifically, the cylindrical battery 200 includes a battery housing 171 through which a rivet terminal 172 is installed. The rivet terminal 172 is installed through a perforation hole formed in the closed surface (the upper surface in the drawing) of the battery housing 171. The rivet terminal 172 is riveted to the perforation hole of the battery housing 171 in a state where a second gasket 173 made of an insulating material is interposed therebetween. The rivet terminal 172 is exposed to the outside in a direction opposite to the direction of gravity.

The rivet terminal 172 includes a terminal exposing portion 172a and a terminal insert portion 172b. The terminal exposing portion 172a is exposed to the outside of the closed surface of the battery housing 171. The terminal exposing portion 172a may be located approximately at a central portion of the closed surface of the battery housing 171. The maximum diameter of the terminal exposing portion 172a may be larger than the maximum diameter of the perforation hole formed in the battery housing 171. The terminal insert portion 172b may be electrically connected to the uncoated portion 146a of the first electrode through approximately the central portion of the closed surface of the battery housing 171. The lower edge of the terminal insert portion 172b may be riveted onto the inner surface of the battery housing 171. That is, the lower edge of the terminal insert portion 172b may have a shape curved toward the inner surface of the battery housing 171. A flat portion 172c is included at the inner side of the lower edge of the terminal insert portion 172b. The maximum diameter of the lower portion of the terminal insert portion 172b may be larger than the maximum diameter of the perforation hole of the battery housing 171.

The flat portion 172c of the terminal insert portion 172b may be welded to the center portion of the first current collecting plate 144 connected to the bending surface region F of the first electrode. The laser welding may be adopted as a preferable welding method, but the laser welding may be replaced with other welding methods such as ultrasonic welding.

An insulator 174 made of an insulating material may be interposed between the first current collecting plate 144 and the inner surface of the battery housing 171. The insulator 174 covers the upper portion of the first current collecting plate 144 and the top edge of the electrode assembly 110. Accordingly, it is possible to prevent the second portion B3 of the electrode assembly 110 from contacting the inner surface of the battery housing 171 having a different polarity to cause a short circuit.

The thickness of the insulator 174 corresponds to or is slightly greater than the distance between the upper surface of the first current collecting plate 144 and the inner surface of the closed portion of the battery housing 171. Accordingly, the insulator 174 may contact the upper surface of the first current collecting plate 144 and the inner surface of the closed portion of the battery housing 171.

The terminal insert portion 172b of the rivet terminal 172 may be welded to the first current collecting plate 144 through the perforation hole of the insulator 174. A diameter of the perforation hole formed in the insulator 174 may be larger than a diameter of the riveting portion at the lower end of the terminal insert portion 172b. Preferably, the perforation hole may expose the lower portion of the terminal insert portion 172b and the second gasket 173.

The second gasket 173 is interposed between the battery housing 171 and the rivet terminal 172 to prevent the battery housing 171 and the rivet terminal 172 having opposite polarities from electrically contacting each other. Accordingly, the upper surface of the battery housing 171 having an approximately flat shape may function as the second electrode (for example, negative electrode) of the cylindrical battery 200.

The second gasket 173 includes a gasket exposing portion 173a and a gasket insert portion 173b. The gasket exposing portion 173a is interposed between the rivet terminal exposing portion 172a of the terminal 172 and the battery housing 171. The gasket insert portion 173b is interposed between the terminal insert portion 172b of the rivet terminal 172 and the battery housing 171. The gasket insert portion 173b may be deformed together when the terminal insert portion 172b is riveted, so as to be in close contact with the inner surface of the battery housing 171. The second gasket 173 may be made of, for example, a polymer resin having insulation property.

The gasket exposing portion 173a of the second gasket 173 may have an extended shape to cover the outer circumference of the terminal exposing portion 172a of the rivet terminal 172. When the second gasket 173 covers the outer circumference of the rivet terminal 172, it is possible to prevent a short circuit from occurring while an electrical connection part such as a bus bar is coupled to the upper surface of the battery housing 171 and/or the rivet terminal 172. Although not shown in the drawings, the gasket exposing portion 173a may have an extended shape to cover not only the outer circumference surface of the terminal exposing portion 172a but also a part of the upper surface thereof.

When the second gasket 173 is made of a polymer resin, the second gasket 173 may be coupled to the battery housing 171 and the rivet terminal 172 by thermal fusion. In this case, airtightness at the coupling interface between the second gasket 173 and the rivet terminal 172 and at the coupling interface between the second gasket 173 and the battery housing 171 may be enhanced. Meanwhile, when the gasket exposing portion 173a of the second gasket 173 has a shape extending to the upper surface of the terminal exposing portion 172a, the rivet terminal 172 may be integrally coupled with the second gasket 173 by insert injection molding.

In the upper surface of the battery housing 171, a remaining area 175 other than the area occupied by the rivet terminal 172 and the second gasket 173 corresponds to the second electrode terminal having a polarity opposite to that of the rivet terminal 172.

The second current collecting plate 176 is coupled to the lower portion of the electrode assembly 110. The second current collecting plate 176 is made of a conductive metal material such as aluminum, steel, copper or nickel, and is electrically connected to the bending surface region F of the second electrode.

Preferably, the second current collecting plate 176 is electrically connected to the battery housing 171. To this end, at least a portion of the edge of the second current collecting plate 176 may be interposed and fixed between the inner surface of the battery housing 171 and a first gasket 178b. In one example, at least a portion of the edge of the second current collecting plate 176 may be fixed to the beading portion 180 by welding in a state of being supported on the lower surface of the beading portion 180 formed at the bottom of the battery housing 171. In one modification, at least a portion of the edge of the second current collecting plate 176 may be directly welded to the inner wall surface of the battery housing 171.

Preferably, the second current collecting plate 176 and the bending surface region F of the second electrode may be coupled by, for example, laser welding. In addition, the welded portion of the second current collecting plate 176 and the bending surface region F may be spaced apart by a predetermined interval toward the core C based on the inner circumference of the beading portion 180.

A sealing body 178 for sealing the lower open end of the battery housing 171 includes a cap plate 178a and a first gasket 178b. The first gasket 178b electrically separates the cap plate 178a and the battery housing 171. A crimping portion 181 fixes the edge of the cap plate 178a and the first gasket 178b together. The cap plate 178a has a venting portion 179. The configuration of the venting portion 179 is substantially the same as the above embodiment (modification). The lower surface of the cap plate 178a may be located above the lower end of the crimping portion 181. In this case, a space is formed under the cap plate 178a to smoothly perform venting. In particular, it is useful when the cylindrical battery 200 is installed so that the crimping portion 181 faces the direction of gravity.

Preferably, the cap plate 178a is made of a conductive metal material. However, since the first gasket 178b is interposed between the cap plate 178a and the battery housing 171, the cap plate 178a does not have electrical polarity. The sealing body 178 seals the open end of the lower portion of the battery housing 171 and mainly functions to discharge gas when the internal pressure of the battery 200 increases over a critical value. A threshold value of the pressure is 15 kgf/cm$^2$ to 35 kgf/cm$^2$.

Preferably, the rivet terminal 172 electrically connected to the bending surface region F of the first electrode is used as the first electrode terminal. In addition, in the upper surface of the battery housing 171 electrically connected to the bending surface region F of the second electrode through the second current collecting plate 176, a part 175 except for the rivet terminal 172 is used as the second electrode terminal having a different polarity from the first electrode terminal. If two electrode terminals are located at the upper portion of the cylindrical battery 200 as above, it is possible to arrange electrical connection components such as bus bars at only one side of the cylindrical battery 200. This may bring about simplification of the battery pack structure and improvement of energy density. In addition, since the part 175 used as the second electrode terminal has an approximately flat shape, a sufficient bonding area may be secured for bonding electrical connection components such as bus bars. Accordingly, the cylindrical battery 200 may reduce the resistance at the bonding portion of the electrical connection components to a desirable level.

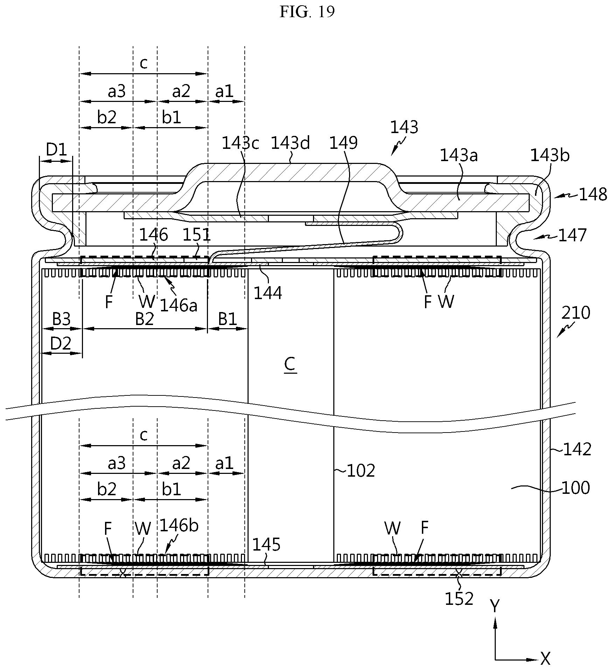

FIG. 19 is a cross-sectional view showing a cylindrical battery 210 according to an embodiment of the present disclosure, taken along the Y-axis direction to pass through the bending surface region F (FIG. 12a) formed by bending the segments included in the segment alignment 50 (FIG. 5).

Referring to FIG. 19, the cylindrical battery 210 includes the electrode assembly 100 shown in FIG. 13, and other components except for the electrode assembly 100 are substantially the same as those of the cylindrical battery 190 shown in FIG. 17. Accordingly, the configuration described with reference to FIGS. 13 and 17 may be substantially equally applied to this embodiment.

Preferably, the first and second uncoated portions 146a, 146b of the electrode assembly 100 include a plurality of segments. The plurality of segments form a segment alignment 50 (FIG. 5) at the upper portion and the lower portion of the electrode assembly 100. The segments 45 included in the segment alignment 50 are bent in the radial direction of the electrode assembly 100, for example from the outer circumference toward the core. At this time, since the first portion B1 of the first uncoated portion 146a and the uncoated portion of the second portion B3 have a lower height than the other portions and do not include segments, they are not substantially bent. This is also identical in the case of the second uncoated portion 146b.

Also in this embodiment, the bending surface region F formed by the segments included in the segment alignment 50 (FIG. 5) may include a segment skip region a1, a segment height variable region a2, and a segment height uniform region a3 from the core toward the outer circumference. However, since the uncoated portion of the second portion B3 is not bent, the radial length of the bending surface region F may be shorter than in the case of the above embodiment.

As shown in FIGS. 12b, 12c, and 12d, the bending surface region F includes a stack number uniform region b1 having the stack number of 10 or more adjacent to the segment skip region a1.

The bending surface region F may also include a stack number decrease region b2 adjacent to the winding turns of the second portion B3 of the electrode assembly 100, in which the stack number of segments decreases toward the outer circumference. Preferably, the stack number uniform region b1 may be set as a welding target area.

In the bending surface region F, the preferred numerical range of the ratio (a2/c) of the segment height variable region a2 of the segments, the ratio (b1/c) of the segment stack number uniform region b1 of the segments, and the ratio of the area of the stack number uniform region b1 to the area of the bending surface region F are already described above and thus will not be described again.

The first current collecting plate 144 may be welded to the bending surface region F of the first uncoated portion 146a, and the second current collecting plate 145 may be welded to the bending surface region F of the second uncoated portion 146b.

The overlapping relationship between the stack number uniform region b1 and the stack number decrease region b2 and the welding region W, the outer diameters of the first current collecting plate 144 and the second current collecting plate 145, and the configuration in which the first portion B1 does not block the core are substantially the same as described above.

Meanwhile, the second portion B3 does not include segments, and the height of the uncoated portion is lower than the segments of the third portion B2. Therefore, when the segments of the third portion B2 are bent, the second portion B3 is not substantially bent. In addition, since the winding turns of the second portion B3 are sufficiently spaced from the beading portion 147, the problem of damage to the winding turns of the second portion B3 may be solved while the beading portion 147 is press-fitted.

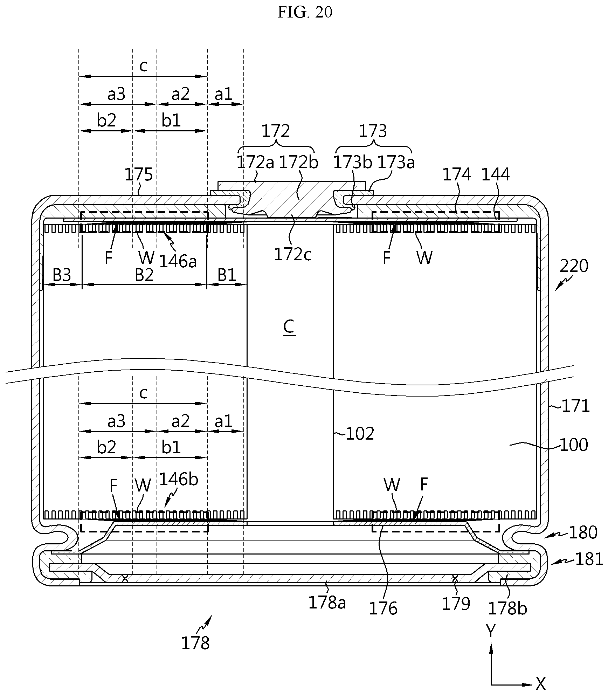

FIG. 20 is a cross-sectional view showing a cylindrical battery 220 according to an embodiment of the present disclosure, taken along the Y-axis direction to pass through the bending surface region F (FIG. 12a) formed by bending the segments included in the segment alignment 50 (FIG. 5).

Referring to FIG. 20, the cylindrical battery 220 includes the electrode assembly 100 shown in FIG. 13, and other components except for the electrode assembly 100 are substantially the same as those of the cylindrical battery 200 shown in FIG. 18. Accordingly, the configuration described with reference to FIGS. 13 and 18 may be substantially equally applied to this embodiment.

Preferably, the first and second uncoated portions 146a, 146b of the electrode assembly 100 include a plurality of segments, and the plurality of segments are aligned in the radial direction to form segment alignment 50 (FIG. 5). In addition, the segments included in the segment alignment 50 are bent from the outer circumference of the electrode assembly 100 toward the core to form the bending surface region F. At this time, the first portion B1 and the second portion B3 of the first uncoated portion 146a are not substantially bent toward the core because the uncoated portion has a lower height than the other portions and does not include a segment. This is also the same in the case of the second uncoated portion 146b.

Therefore, in this embodiment, the bending surface region F may also include a segment skip region a1, a segment height variable region a2, and a segment height uniform region a3 from the core toward the outer circumference. However, since the uncoated portion of the second portion B3 is not bent, the radial length of the bending surface region F may be shorter than in the case of the above embodiment.

As shown in FIGS. 12b, 12c, and 12d, the bending surface region F includes a stack number uniform region b1 having the stack number of 10 or more adjacent to the segment skip region a1.

The bending surface region F may also include a stack number decrease region b2 adjacent to the winding turns of the second portion B3 of the electrode assembly 100, in which the stack number of segments decreases toward the outer circumference. Preferably, the stack number uniform region b1 may be set as a welding target area.

In the bending surface region F, the preferred numerical range of the ratio (a2/c) of the segment height variable region a2 of the segments based on the radial length c where the segments exist, the ratio (b1/c) of the segment stack number uniform region b1 of the segments, and the ratio of the area of the stack number uniform region b 1 to the area of the bending surface region F are already described above and thus will not be described again.

The first current collecting plate 144 may be welded to the bending surface region F of the first uncoated portion 146a, and the second current collecting plate 176 may be welded to the bending surface region F of the second uncoated portion 146b.

The overlapping relationship between the stack number uniform region b1 and the stack number decrease region b2 and the welding region W, the outer diameters of the first current collecting plate 144 and the second current collecting plate 176, and the configuration in which the first portion B1 does not block the core are substantially the same as described above.

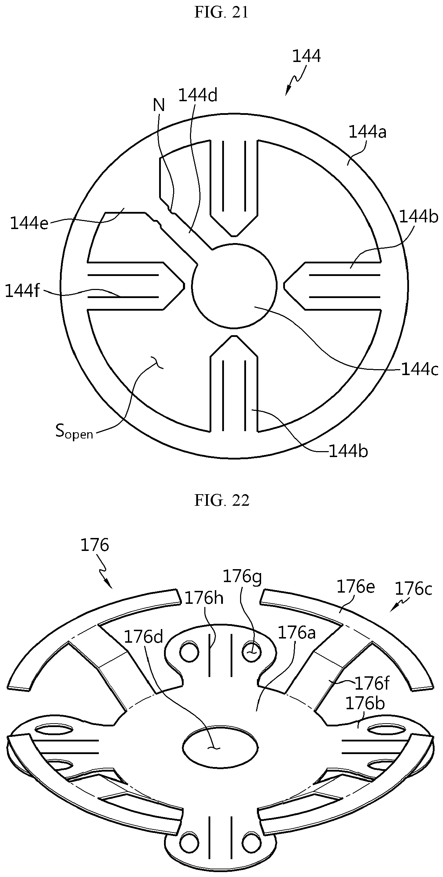

In the embodiments (modifications), the first current collecting plate 144 and the second current collecting plate 176 included in the cylindrical batteries 200, 220 including the rivet terminal 172 may have an improved structure as shown in FIGS. 21 and 22.

The improved structure of the first current collecting plate 144 and the second current collecting plate 176 may contribute to lowering the resistance of the cylindrical battery, improving vibration resistance, and improving energy density. In particular, the first current collecting plate 144 and the second current collecting plate 176 are more effective when used in a large cylindrical battery whose ratio of diameter to height is greater than 0.4.

FIG. 21 is a top plan view showing the structure of the first current collecting plate 144 according to an embodiment of the present disclosure.

Referring to FIGS. 20 and 21 together, the first current collecting plate 144 may include an edge portion 144a, a first uncoated portion coupling portion 144b, and a terminal coupling portion 144c. The edge portion 144a is disposed on the electrode assembly 100. The edge portion 144a may have a substantially rim shape having an empty space ($S_{open}$) formed therein. In the drawings of the present disclosure, only a case in which the edge portion 144a has a substantially circular rim shape is illustrated, but the present disclosure is not limited thereto. The edge portion 61 may have a substantially rectangular rim shape, a hexagonal rim shape, an octagonal rim shape, or other rim shapes, unlike the illustrated one. The number of the edge portion 144a may be increased to two or more. In this case, another edge portion in the form of a rim may be included inside the edge portion 144a.

The terminal coupling portion 144c may have a diameter equal to or greater than the diameter of the flat portion 172c formed on the bottom surface of the rivet terminal 172 in order to secure a welding region for coupling with the flat portion 172c formed on the bottom surface of the rivet terminal 172.

The first uncoated portion coupling portion 144b extends inward from the edge portion 144a and is coupled to the bending surface region F of the uncoated portion 146a by welding. The terminal coupling portion 144c is spaced apart from the first uncoated portion coupling portion 144b and is positioned inside the edge portion 144a. The terminal coupling portion 144c may be coupled to the rivet terminal 172 by welding. The terminal coupling portion 144c may be located, for example, approximately at the center of the inner space ($S_{open}$) surrounded by the edge portion 144a. The terminal coupling portion 144c may be provided at a position corresponding to the hole formed in the core C of the electrode assembly 100. The terminal coupling portion 144c may be configured to cover the hole formed in the core C of the electrode assembly 100 so that the hole formed in the core C of the electrode assembly 100 is not exposed out of the terminal coupling portion 144c. To this end, the terminal coupling portion 144c may have a larger diameter or width than the hole formed in the core C of the electrode assembly 100.

The first uncoated portion coupling portion 144b and the terminal coupling portion 144c may not be directly connected, but may be disposed to be spaced apart from each other and indirectly connected by the edge portion 144a. Since the first current collecting plate 144 has a structure in which the first uncoated portion coupling portion 144b and the terminal coupling portion 144c are not directly connected to each other but are connected through the edge portion 144c as above, when shock and/or vibration occurs at the cylindrical battery 220, it is possible to disperse the shock applied to the coupling portion between the first uncoated portion coupling portion 144b and the first uncoated portion 146a and the coupling portion between the terminal coupling portion 144c and the rivet terminal 172. In the drawings of the present disclosure, only a case in which four first uncoated portion coupling portions 144b are provided is illustrated, but the present disclosure is not limited thereto. The number of the first uncoated portion coupling portions 144b may be variously determined in consideration of manufacturing difficulty according to the complexity of the shape, electric resistance, the inner space ($S_{open}$) inside the edge portion 144a considering electrolyte impregnation, and the like.

The first current collecting plate 144 may further include a bridge portion 144d extending inward from the edge portion 144a and connected to the terminal coupling portion 144c. At least a part of the bridge portion 144d may have a smaller sectional area compared to the first uncoated portion coupling portion 144b and the edge portion 144a. For example, at least a part of the bridge portion 144d may be formed to have a smaller width and/or thickness compared to the first uncoated portion coupling portion 144b. In this case, the electric resistance increases in the bridge portion 144d. Therefore, when a current flows through the bridge portion 144d, the relatively large resistance causes a part of the bridge portion 144d to be melted due to overcurrent heating. Accordingly, the overcurrent is irreversibly blocked. The sectional area of the bridge portion 144d may be adjusted to an appropriate level in consideration of the overcurrent blocking function.

The bridge portion 144d may include a taper portion 144e whose width is gradually decreased from the inner surface of the edge portion 144a toward the terminal coupling portion 144c. When the taper portion 144e is provided, the rigidity of the component may be improved at the connection portion between the bridge portion 144d and the edge portion 144a. When the taper portion 144e is provided, in the process of manufacturing the cylindrical battery 220, for example, a transfer device and/or a worker may easily and safely transport the first current collecting plate 144 and/or a coupled body of the first current collecting plate 144 and the electrode assembly 100 by gripping the taper portion 144e. That is, when the taper portion 144e is provided, it is possible to prevent product defects that may occur by gripping a portion where welding is performed with other components such as the first uncoated portion coupling portion 144b and the terminal coupling portion 144c.

The first uncoated portion coupling portion 144b may be provided in plural. The plurality of first uncoated portion coupling portions 144b may be disposed substantially at regular intervals from each other in the extending direction of the edge portion 144a. An extension length of each of the plurality of first uncoated portion coupling portions 144b may be substantially equal to each other. The first uncoated portion coupling portion 144b may be coupled to the bending surface region F of the uncoated portion 146a by laser welding. The welding may be replaced by ultrasonic welding, spot welding, or the like.

A welding pattern 144f formed by welding between the first uncoated portion coupling portion 144b and the bending surface region F may have a structure extending along the radial direction of the electrode assembly 100. The welding pattern 144f may be an array of line patterns or dot patterns.

The welding pattern 144f corresponds to the welding region. Therefore, it is desirable that the welding pattern 144f overlaps with the stack number uniform region b1 of the bending surface region F by 50% or more. The welding pattern 144f that does not overlap with the stack number uniform region b1 may overlap with the stack number decrease region b2. More preferably, the entire welding pattern 144f may overlap with the stack number uniform region b1 of the bending surface region F. In the bending surface region F below the point where the welding pattern 144f is formed, the stack number uniform region b1 and, optionally, the stack number decrease region b2 preferably have the stack number of 10 or more.

The terminal coupling portion 144c may be disposed to be surrounded by the plurality of first uncoated portion coupling portions 144b. The terminal coupling portion 144c may be coupled to the flat portion 172c of the rivet terminal 172 by welding. The bridge portion 144d may be positioned between a pair of first uncoated portion coupling portions 144b adjacent to each other. In this case, the distance from the bridge portion 144d to any one of the pair of first uncoated portion coupling portions 144b along the extending direction of the edge portion 144a may be substantially equal to the distance from the bridge portion 144d to the other one of the pair of first uncoated portion coupling portions 144b along the extending direction of the edge portion 144a. The plurality of first uncoated portion coupling portions 144b may be formed to have substantially the same sectional area. The plurality of first uncoated portion coupling portions 144b may be formed to have substantially the same width and thickness.

Although not shown in the drawings, the bridge portion 144d may be provided in plural. Each of the plurality of bridge portions 144d may be disposed between a pair of first uncoated portion coupling portions 144b adjacent to each other. The plurality of bridge portions 144d may be disposed substantially at regular intervals to each other in the extending direction of the edge portion 144a. A distance from each of the plurality of bridge portions 144d to one of the pair of first uncoated portion coupling portions 144b adjacent to each other along the extending direction of the edge portion 144a may be substantially equal to a distance from each of the plurality of the bridge portion 144d to the other first uncoated portion coupling portion 144b.

In the case where the first uncoated portion coupling portion 144b and/or the bridge portion 144d is provided in plural as described above, if the distance between the first uncoated portion coupling portions 144b and/or the distance between the bridge portions 144d and/or the distance between the first uncoated portion coupling portion 144b and the bridge portion 144d is uniformly formed, a current flowing from the first uncoated portion coupling portion 144b toward the bridge portion 144d or a current flowing from the bridge portion 144d toward the first uncoated portion coupling portion 144b may be smoothly formed.

The bridge portion 144d may include a notching portion N formed to partially reduce a sectional area of the bridge portion 144d. The sectional area of the notching portion N may be adjusted, for example, by partially reducing the width and/or thickness of the bridge portion 144d. When the notching portion N is provided, electric resistance is increased in the region where the notching portion N is formed, thereby enabling rapid current interruption when overcurrent occurs.

The notching portion N is preferably provided in a region corresponding to the stack number uniform region of the electrode assembly 100 in order to prevent foreign substances generated during rupturing from flowing into the electrode assembly 100. This is because, in this region, the number of overlapping layers of the segments of the uncoated portion 146a is maintained to the maximum and thus the overlapped segments may function as a mask.

The notching portion N may be wrapped with an insulating tape. Then, since the heat generated in the notching portion N is not dissipated to the outside, the notching portion N may be ruptured more quickly when an overcurrent flows through the bridge portion 144d.

FIG. 22 is a top plan view showing the structure of the second current collecting plate 176 according to an embodiment of the present disclosure.

Referring to FIGS. 20 and 22 together, the second current collecting plate 176 is disposed below the electrode assembly 100. In addition, the second current collecting plate 176 may be configured to electrically connect the uncoated portion 146b of the electrode assembly 100 and the battery housing 171. The second current collecting plate 176 is made of a metal material with conductivity and is electrically connected to the bending surface region F of the uncoated portion 146b. In addition, the second current collecting plate 176 is electrically connected to the battery housing 171. The edge portion of the second current collecting plate 176 may be interposed and fixed between the inner surface of the battery housing 171 and the first gasket 178b. Specifically, the edge portion of the second current collecting plate 176 may be interposed between the lower surface of the beading portion 180 of the battery housing 171 and the first gasket 178b. However, the present disclosure is not limited thereto, and the edge portion of the second current collecting plate 176 may be welded to the inner wall surface of the battery housing 171 in a region where the beading portion 180 is not formed.

The second current collecting plate 176 may include a support portion 176a disposed below the electrode assembly 100, a second uncoated portion coupling portion 176b extending from the support portion 176a approximately along the radial direction of the electrode assembly 100 and coupled to the bending surface region F of the uncoated portion 146b, and a housing coupling portion 176c extending from the support portion 176a toward the inner surface of the battery housing 171 approximately along an inclined direction based on the radial direction of the electrode assembly 100 and coupled to the inner surface of the battery housing 171. The second uncoated portion coupling portion 176b and the housing coupling portion 176c are indirectly connected through the support portion 176a, and are not directly connected to each other. Therefore, when an external shock is applied to the cylindrical battery 220 of the present disclosure, it is possible to minimize the possibility of damage to the coupling portion of the second current collecting plate 176 and the electrode assembly 100 and the coupling portion of the second current collecting plate 176 and the battery housing 171. However, the second current collecting plate 176 of the present disclosure is not limited to the structure where the second uncoated portion coupling portion 176b and the housing coupling portion 176c are only indirectly connected. For example, the second current collecting plate 176 may have a structure that does not include the support portion 176a for indirectly connecting the second uncoated portion coupling portion 176b and the housing coupling portion 176c and/or a structure in which the uncoated portion 146b and the housing coupling portion 176c are directly connected to each other.

The support portion 176a and the second uncoated portion coupling portion 176b are disposed below the electrode assembly 100. The second uncoated portion coupling portion 176b is coupled to the bending surface region F of the uncoated portion 146b. In addition to the second uncoated portion coupling portion 176b, the support portion 176a may also be coupled to the uncoated portion 146b. The second uncoated portion coupling portion 176b and the bending surface region F of the uncoated portion 146b may be coupled by welding. The welding may be replaced with ultrasonic welding or spot welding. The support portion 176a and the second uncoated portion coupling portion 176b are located higher than the beading portion 180 when the beading portion 180 is formed on the battery housing 171.

The support portion 176a has a current collecting plate hole 176d formed at a location corresponding to the hole formed at the core C of the electrode assembly 100. The core C of the electrode assembly 100 and the current collecting plate hole 176d communicating with each other may function as a passage for inserting a welding rod for welding between the rivet terminal 172 and the terminal coupling portion 144c of the first current collecting plate 144 or for irradiating a laser beam.

The current collecting plate hole 176d may have a radius of $0.5r_c$ or more compared to the radius ($r_c$) of the hole formed in the core C of the electrode assembly 100. If the radius of the current collecting plate hole 176d is $0.5r_c$ to $1.0r_c$, when a vent occurs in the cylindrical battery 220, the phenomenon that the winding structure of the separator or electrodes near the core C of the electrode assembly 100 is pushed out of the core C due to the vent pressure is prevented. When the radius of the current collecting plate hole 176d is larger than $1.0r_c$, the opening of the core C is maximized, so the electrolyte may be easily injected in the electrolyte injection process.

When the second uncoated portion coupling portion 176b is provided in plural, the plurality of second uncoated portion coupling portions 176b may have a shape extending approximately radially from the support portion 176a of the second current collecting plate 176 toward the sidewall of the battery housing 171. The plurality of second uncoated portion coupling portions 176b may be positioned to be spaced apart from each other along the periphery of the support portion 176a.

The housing coupling portion 176c may be provided in plural. In this case, the plurality of housing coupling portions 176c may have a shape extending approximately radially from the center of the second current collecting plate 176 toward the sidewall of the battery housing 171. Accordingly, the electrical connection between the second current collecting plate 176 and the battery housing 171 may be made at a plurality of points. Since the coupling for electrical connection is made at a plurality of points, the coupling area may be maximized, thereby minimizing electric resistance. The plurality of housing coupling portions 176c may be positioned to be spaced apart from each other along the periphery of the support portion 176a. At least one housing coupling portion 176c may be positioned between the second uncoated portion coupling portions 176b adjacent to each other. The plurality of housing coupling portions 176c may be coupled to, for example, the beading portion 180 in the inner surface of the battery housing 171. The housing coupling portions 176c may be coupled, particularly, to the lower surface of the beading portion 180 by laser welding. The welding may be replaced with, for example, ultrasonic welding, spot welding, or the like. By coupling the plurality of housing coupling portions 176c on the beading portion 180 by welding in this way, the current path may be distributed radially so that the resistance level of the cylindrical battery 220 is limited to about 4 milliohms or less. In addition, as the lower surface of the beading portion 180 has a shape extending in a direction approximately parallel to the upper surface of the battery housing 171, namely in a direction approximately perpendicular to the sidewall of the battery housing 171, and the housing coupling portion 176c also has a shape extending in the same direction, namely in the radial direction and the circumferential direction, the housing coupling portion 176c may be stably in contact with the beading portion 180. In addition, as the housing coupling portion 176c is stably in contact with the flat portion of the beading portion 180, the two components may be welded smoothly, thereby improving the coupling force between the two components and minimizing the increase in resistance at the coupling portion.

The housing coupling portion 176c may include a contact portion 176e coupled onto the inner surface of the battery housing 171 and a connection portion 176f for connecting the support portion 176a and the contact portion 176e.

The contact portion 176e is coupled onto the inner surface of the battery housing 171. In the case where the beading portion 180 is formed on the battery housing 171, the contact portion 176e may be coupled onto the beading portion 180 as described above. More specifically, the contact portion 176e may be electrically coupled to the flat portion formed at the lower surface of the beading portion 180 formed on the battery housing 171, and may be interposed between the lower surface of the beading portion 180 and the first gasket 178b. In this case, for stable contact and coupling, the contact portion 176e may have a shape extending on the beading portion 180 by a predetermined length along the circumferential direction of the battery housing 171.

The connection portion 176f may be bent at an obtuse angle. The bending point may be higher than the middle point of the connection portion 176f. When the connection portion 176f is bent, the contact portion 176e may be stably supported on the flat surface of the beading portion 180. The connection portion 176f is divided into a lower portion and an upper portion based on the bending point, and the lower portion may have a greater length than the upper portion. In addition, the lower portion of the bending point may have a greater inclination angle based on the surface of the support portion 176a than the upper portion. When the connection portion 176f is bent, a pressure (force) applied in the vertical direction of the battery housing 171 may be buffered. For example, in the process of sizing the battery housing 171, when a pressure is transmitted to the contact portion 176e so that the contact portion 176e moves vertically toward the support portion 176b, the bending point of the connection portion 176f moves upward, so that the shape of the connection portion 176 is deformed to buffer the stress.

Meanwhile, the maximum distance from the center of the second current collecting plate 176 to the end of the second uncoated portion coupling portion 176b along the radial direction of the electrode assembly 100 is preferably equal to or smaller than the inner diameter of the battery housing 171 in a region where the beading portion 180 is formed, namely the minimum inner diameter of the battery housing 171. This is to prevent the end of the second uncoated portion coupling portion 176b from pressing the edge of electrode assembly 100 during the sizing process of compressing the battery housing 171 along the height direction.

The second uncoated portion coupling portion 176b includes a hole 176g. The hole 176g may be used as a passage through which the electrolyte may move. The welding pattern 176h formed by welding between the second uncoated portion coupling portion 176b and the bending surface region F may have a structure to extend along the radial direction of the electrode assembly 100. The welding pattern 176h may be a line pattern or a dot array pattern.

The welding pattern 176h corresponds to the welding region. Therefore, it is preferable that the welding pattern 176h overlaps by 50% or more with the stack number uniform region b1 of the bending surface region F located in the lower portion of the electrode assembly 100. The welding pattern 176h that does not overlap with the stack number uniform region b1 may overlap with the stack number decrease region b2. More preferably, the entire welding pattern 176h may overlap with the stack number uniform region b1 of the bending surface region F. In the bending surface region F at the upper portion of the point where the welding pattern 176h is formed, the stack number uniform region b1 and, optionally, the stack number decrease region b2 preferably have the stack number of 10 or more.

The outer diameters of the first current collecting plate 144 and the second current collecting plate 176 described above are different from each other. The outer diameter is an outer diameter of the contact area between the bending surface region F and the current collecting plate. The outer diameter is defined as a maximum value of the distance between two points where a straight line passing through the center of the core C of the electrode assembly meets the edge of the contact area. Since the second current collecting plate 176 is located inside the beading portion, its outer diameter is smaller than that of the first current collecting plate 144. In addition, the length of the welding pattern 144f of the first current collecting plate 144 is longer than the length of the welding pattern 176h of the second current collecting plate 176. Preferably, the welding pattern 144f and the welding pattern 176h may extend toward the outer circumference from substantially the same point based on the center of the core C.

The cylindrical battery 200, 220 according to an embodiment of the present disclosure have an advantage in that electrical connection can be performed at the upper portion thereof.

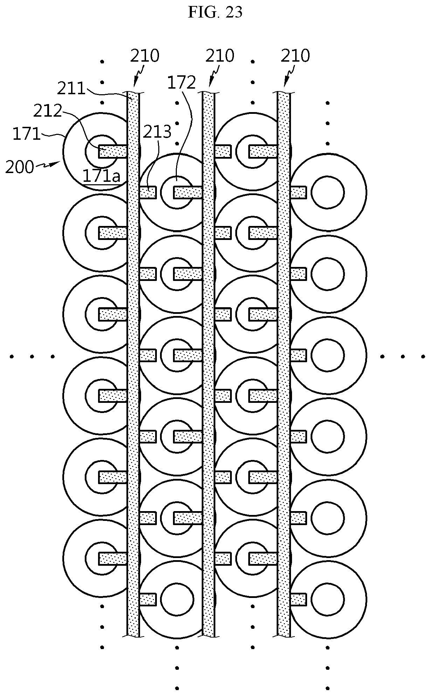

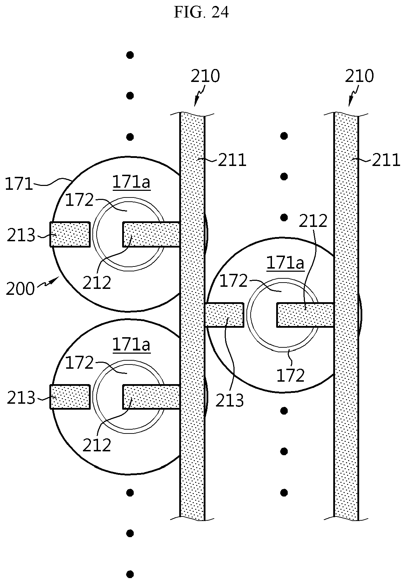

FIG. 23 is a top plan view illustrating a state in which a plurality of cylindrical batteries 200 are electrically connected, and FIG. 24 is a partially enlarged view of FIG. 23. The cylindrical battery 200 may be replaced with a cylindrical battery 220 having a different structure.

Referring to FIGS. 23 and 24, a plurality of cylindrical batteries 200 may be connected in series and in parallel at an upper portion of the cylindrical batteries 200 using a bus bar 210. The number of cylindrical batteries 200 may be increased or decreased in consideration of the capacity of the battery pack.

In each cylindrical battery 200, the rivet terminal 172 may have a positive polarity, and the flat surface 171a around the rivet terminal 172 of the battery housing 171 may have a negative polarity, or vice versa.

Preferably, the plurality of cylindrical batteries 200 may be arranged in a plurality of columns and rows. Columns are provided in a vertical direction with respect to the drawing, and rows are provided in a left and right direction with respect to the drawing. In addition, in order to maximize space efficiency, the cylindrical batteries 200 may be arranged in a closest packing structure. The closest packing structure is formed when an equilateral triangle is formed by connecting the centers of the rivet terminals 172 exposed out of the battery housing 171 to each other. Preferably, the bus bar 210 connects the cylindrical batteries 200 arranged in the same column in parallel to each other, and connects the cylindrical batteries 200 arranged in two neighboring columns in series with each other.

Preferably, the bus bar 210 may include a body portion 211, a plurality of first bus bar terminals 212 and a plurality of second bus bar terminals 213 for serial and parallel connection.

The body portion 211 may extend along the column of the cylindrical batteries 200 between neighboring rivet terminals 172. Alternatively, the body portion 211 may extend along the column of the cylindrical batteries 200 while being regularly bent like a zigzag shape.

The plurality of first bus bar terminals 212 may extend in one side direction of the body portion 211 and may be electrically coupled to the rivet terminal 172 of the cylindrical battery 200 located in one side direction. The electrical connection between the first bus bar terminal 212 and the rivet terminal 172 may be achieved by laser welding, ultrasonic welding, or the like.

The plurality of second bus bar terminals 213 may extend in the other side direction of the body portion 211 and may be electrically coupled to the flat surface 171a around the rivet terminal 172 located in the other side direction. The electrical coupling between the second bus bar terminal 213 and the flat surface 171a may be performed by laser welding, ultrasonic welding, or the like.

Preferably, the body portion 211, the plurality of first bus bar terminals 212 and the plurality of second bus bar terminals 213 may be made of one conductive metal plate. The metal plate may be, for example, an aluminum plate or a copper plate, but the present disclosure is not limited thereto. In a modified example, the body portion 211, the plurality of first bus bar terminals 212 and the second bus bar terminals 213 may be manufactured as separate pieces and then coupled to each other by welding or the like.

The cylindrical battery 200 of the present disclosure as described above has a structure in which resistance is minimized by enlarging the welding region by means of the bending surface region F, multiplexing current paths by means of the second current collecting plate 176, minimizing a current path length, or the like. The AC resistance of the cylindrical battery 200 measured through a resistance meter between the positive electrode and the negative electrode, namely between the rivet terminal 172 and the flat surface 171a around the terminal 172, may be approximately 4 milliohms or below, suitable for fast charging.

In the cylindrical battery 200 according to the present disclosure, since the rivet terminal 172 having a positive polarity and the flat surface 171a having a negative polarity are located in the same direction, it is easy to electrically connect the cylindrical batteries 200 using the bus bar 210.

In addition, since the rivet terminal 172 of the cylindrical battery 200 and the flat surface 171a around the terminal 172 have a large area, the coupling area of the bus bar 210 may be sufficiently secured to sufficiently reduce the resistance of the battery pack including the cylindrical battery 200.

In addition, since electrical wiring may be performed on the upper portion of the cylindrical battery 200, there is an advantage in maximizing the energy density per unit volume of the battery module/pack.

The cylindrical battery according to the above embodiments (modifications) may be used to manufacture a battery pack.

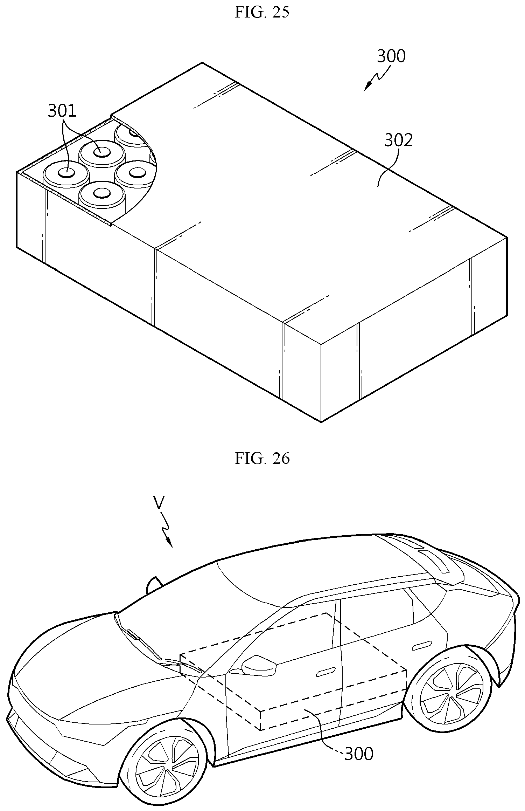

FIG. 25 is a diagram schematically showing a battery pack according to an embodiment of the present disclosure.

Referring to FIG. 25, a battery pack 300 according to an embodiment of the present disclosure includes an aggregate in which cylindrical batteries 301 are electrically connected, and a pack housing 302 for accommodating the aggregate. The cylindrical battery 301 may be any one of the batteries according to the above embodiments (modifications). In the drawing, components such as a bus bar for electrical connection of the cylindrical batteries 301, a cooling unit, an external terminal, and so on are not depicted for convenience of illustration.

The battery pack 300 may be mounted to a vehicle. The vehicle may be, for example, an electric vehicle, a hybrid electric vehicle, or a plug-in hybrid vehicle. The vehicle includes a four-wheeled vehicle or a two-wheeled vehicle.

FIG. 26 is a diagram schematically showing a vehicle including the battery pack 300 of FIG. 25.

Referring to FIG. 26, a vehicle V according to an embodiment of the present disclosure includes the battery pack 300 according to an embodiment of the present disclosure. The vehicle V operates by receiving power from the battery pack 300 according to an embodiment of the present disclosure.

According to the present disclosure, the internal resistance of the battery may be reduced and the energy density may be increased by using the uncoated portion itself protruding at the upper portion and the lower portion of the electrode assembly as an electrode tab.

According to another aspect of the present disclosure, by improving the structure of the uncoated portion of the electrode assembly so that the electrode assembly and the inner circumference of the battery housing do not interfere in the process of forming the beading portion of the battery housing, it is possible to prevent a short circuit from occurring inside the cylindrical battery due to partial deformation of the electrode assembly.

According to another aspect of the present disclosure, by improving the structure of the uncoated portion of the electrode assembly, it is possible to prevent the uncoated portion from being torn when the uncoated portion is bent, and it is possible to improve the welding strength of the current collecting plate by sufficiently increasing the number of overlapping layers of the uncoated portion.

According to another aspect of the present disclosure, a plurality of segments is formed in the uncoated portion of the electrode, and when the electrode is wound, the plurality of segments are disposed to be aligned in a predetermined direction, and the end of the active material layer formed on the electrode is exposed between the winding turns of the separator in an area where the segments are not disposed, so that it is possible to increase the impregnation rate of the electrolyte.

According to another aspect of the present disclosure, by applying a segment structure to the uncoated portion of the electrode and optimizing the dimensions (width, height, separation pitch) of the segments to sufficiently increase the segment stack number of the area used as the welding target area, it is possible to improve the properties of the area where the current collecting plate is welded.

According to another aspect of the present disclosure, an electrode assembly having improved energy density and reduced resistance may be provided by applying a structure in which a current collecting plate is welded to a broad area of the bending surface region formed by bending the segments.

According to another aspect of the present disclosure, a cylindrical battery having an improved design so that electrical wiring can be performed at the upper portion thereof may be provided.

According to another aspect of the present disclosure, by improving the structure of the uncoated portion adjacent to the core of the electrode assembly, the cavity in the core of the electrode assembly is prevented from being blocked when the uncoated portion is bent, so that the electrolyte injection process and the process of welding the battery housing (or, rivet terminal) and the current collecting plate may be easily performed.

According to another aspect of the present disclosure, it is possible to provide a cylindrical battery having a structure in which the internal resistance is low, an internal short circuit is prevented, and the welding strength between the current collecting plate and the uncoated portion is improved, and a battery pack and a vehicle including the cylindrical battery.

In particular, the present disclosure may provide a cylindrical battery having a ratio of diameter to height of 0.4 or more and a resistance of 4 mohm or less, and a battery pack and a vehicle including the cylindrical battery.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

**Claims**

1. An electrode assembly comprising a first electrode, a second electrode, and a separator interposed therebetween, the first electrode, the second electrode, and the separator being wound around a winding axis to define a core and an outer circumference of the electrode assembly,

   wherein the first electrode includes a first active material portion coated with an active material layer and a first uncoated portion not coated with an active material layer along a winding direction,
   wherein the first uncoated portion includes a plurality of segments independently bendable along the winding direction and exposed to the outside of the separator,
   wherein the plurality of segments are aligned to overlap each other along a radial direction of the electrode assembly to form a plurality of segment alignments spaced apart in a circumferential direction of the electrode assembly, and

wherein an electrolyte impregnation portion in which an end of the first active material portion is exposed between winding turns of the separator is included between adjacent segment alignments of the first uncoated portion in the circumferential direction.

2. The electrode assembly according to claim 1,
wherein the segments of each segment alignment are defined as an electrode tab in a bent state along the radial direction of the electrode assembly.

3. The electrode assembly according to claim 1,
wherein the plurality of segment alignments extend radially along the radial direction of the electrode assembly.

4. The electrode assembly according to claim 1,
wherein the plurality of segment alignments are spaced at regular intervals along the circumferential direction of the electrode assembly.

5. The electrode assembly according to claim 4,
wherein an angle between adjacent segment alignments along the circumferential direction of the electrode assembly is 90 degrees, 120 degrees or 180 degrees.

6. The electrode assembly according to claim 1,
wherein the plurality of segments have a same length in the winding direction.

7. The electrode assembly according to claim 1,
wherein lengths of the plurality of segments in the winding direction increase gradually.

8. The electrode assembly according to claim 1,
wherein each segment alignment has a rectangular or fan shape when viewed along the winding axis direction of the electrode assembly.

9. The electrode assembly according to claim 1,
wherein, when viewed along the winding axis direction of the electrode assembly, an area of the electrolyte impregnation portion is larger than an area of the plurality of segment alignments.

10. The electrode assembly according to claim 1,
wherein, when viewed in a cross section of the electrolyte impregnation portion taken along the winding axis, the end of the first active material portion is spaced apart from an end of the separator toward the inside of the electrode assembly.

11. The electrode assembly according to claim 10,
wherein a separation distance between the end of the first active material portion and the end of the separator is 0.6 mm to 1.0 mm.

12. The electrode assembly according to claim 1,
Wherein lengths and pitches of the plurality of segments in the winding direction are assigned with values substantially equal to values mathematically designed using a predetermined length of a segment in the winding direction and a predetermined angle between adjacent segment alignments along the circumferential direction based on an approximate winding turn structure in which semicircles having periodically increasing radii are connected in the winding direction.

13. The electrode assembly according to claim 12,
wherein an $n+1^{th}$ pitch ($D_{n+1}$) adjacent to an $n+1^{th}$ segment along the winding direction is assigned with a value substantially equal to a value determined using the following formulas:

Case 1:

$$D_{n+1} = \theta_{Dn+1} * R_{n+1} = (90° - \theta_{An+1}) * R_{n+1}$$

Case 2:

$$D_{n+1} = \theta_{Dn+1} * (R_n+R_{n+1})/2 = (90°- \theta_{An+1}) * (R_n+R_{n+1})/2$$

(n is an integer greater than or equal to 0; a start point of a first semicircle corresponds to a location of a first segment in the winding direction; $R_n$ is a radius of an $n^{th}$ semicircle; $R_{n+1}$ is a radius of an $n+1^{th}$ semicircle; $\theta_{An+1}$ is a circumferential angle of the $n+1^{th}$ segment; $\theta_{Dn+1}$ is a circumferential angle for a pitch of the $n+1^{th}$ segment,

wherein the formula of Case 1 is applied when an arc corresponding to the $n+1^{th}$ pitch ($D_{n+1}$) is located in the $n+1^{th}$ semicircle, and

wherein the formula of Case 2 is applied when the arc corresponding to the $n+1^{th}$ pitch ($D_{n+1}$) is located over the $n^{th}$ semicircle and the $n+1^{th}$ semicircle).

14. The electrode assembly according to claim 13,
wherein the semicircles have radii increasing by $\Delta/2$ ($\Delta$ is an interval between adjacent winding turns) at every 1/2 winding turn.

15. The electrode assembly according to claim 14,
wherein the symbol $\Delta$ is assigned with a value substantially equal to the sum of a thickness of one positive electrode, a thickness of one negative electrode, and a thickness of two separators.

16. The electrode assembly according to claim 1,

wherein a cut groove is interposed between adjacent segments along the winding direction, and
wherein the cut groove includes a lower portion of the cut groove having a bottom portion, and a round portion configured to connect opposite ends of the bottom portion and sides of the adjacent segments.

17. The electrode assembly according to claim 16,
wherein the bottom portion of the cut groove is spaced apart from the active material layer by a predetermined distance.

18. The electrode assembly according to claim 17,
wherein a separation distance between a lower end of the cut groove and the active material layer is 0.2 mm to 4 mm.

19. The electrode assembly according to claim 16,
wherein an insulating coating layer is formed at a boundary between the active material layer and an area of the uncoated portion existing in a region where the bottom portion of the cut groove and the active material layer are spaced apart.

20. The electrode assembly according to claim 1,
wherein the segment alignment includes a radial region in which the heights of the segments increase from the core of the electrode assembly toward the outer circumference.

21. The electrode assembly according to claim 1,
wherein each segment alignment includes a height variable region in which heights of the segments increase stepwise from a first height ($h_1$) to an N-$1^{th}$ height ($h_{N-1}$), N is a natural number of 3 or more) from the core of the electrode assembly toward the outer circumference of the electrode assembly, and a height uniform region in which heights of the segments are uniform as an $N^{th}$ height ($h_N$, greater than $h_{N-1}$).

22. The electrode assembly according to claim 21,
Wherein, when a starting radius of a winding turn containing a segment with a height $h_k$ (k is a natural number of 1 to N) is defined as $r_k$, 90% or more of a diameter of the core of the electrode assembly is not covered by the bent portion of the segment located at the $r_k$.

23. The electrode assembly according to claim 21,
wherein when a starting radius of a winding turn containing a segment with a height $h_k$ (k is a natural number of 1 to N) is defined as $r_k$ and the radius of the core is $r_c$, the height $h_k$ of the segment satisfies the following formula:

$$2mm \leq h_k \leq r_k - \alpha * r_c \ (\alpha \text{ is } 0.90 \text{ to } 1).$$

24. The electrode assembly according to claim 1,
wherein, based on a cross section along the winding axis, sequentially along the radial direction, each segment alignment includes a segment skip region having no segment, a height variable region where heights of the segments vary, and a height uniform region where heights of the segments are uniform, and the plurality of segments are disposed in the height variable region and the height uniform region and are bent along the radial direction of the electrode assembly to form a bending surface region extending along the radial direction.

25. The electrode assembly according to claim 24,
wherein, when the number of segments meeting an imaginary line parallel to the winding axis direction at an arbitrary radius location of the bending surface region based on a center of the core of the electrode assembly is defined as a stack number of the segments at the corresponding radius location, the bending surface region includes a stack number uniform region where the stack number of the segments is uniform from the core toward the outer circumference of the electrode assembly and a stack number decreasing region located at an outer side of the stack number uniform region in which the stack number of the segments decreases toward the outer circumference of the electrode assembly.

26. The electrode assembly according to claim 25,
wherein in the stack number uniform region, the stack number of the segments is 10 to 35.

27. The electrode assembly according to claim 25,
wherein the first electrode is a positive electrode, and a stack thickness of the segments in the stack number uniform region is in the range of 100 um to 875 um.

28. The electrode assembly according to claim 25,
wherein the first electrode is a negative electrode, and a stack thickness of segments in the stack number uniform region is in the range of 50 um to 700 um.

29. The electrode assembly according to claim 1,
wherein the second electrode includes a second active material portion coated with an active material layer and a second uncoated portion not coated with an active material layer along the winding direction, the second uncoated portion includes a plurality of segments independently bendable along the winding direction and exposed to the outside of the separator, the plurality of segments of the second uncoated portion are aligned along the radial direction of the electrode assembly to form a plurality of segment alignments spaced apart in the circumferential direction, and an electrolyte impregnation portion in which an end of the second uncoated portion is exposed between winding turns of the separator is included between adjacent segment alignments of the second uncoated portion in the circumferential direction of the electrode assembly.

30. A battery, comprising:

an electrode assembly in which a first electrode, a second electrode, and a separator interposed therebetween are wound based on a winding axis to define a core and an outer circumference, wherein the first electrode includes a first active material portion coated with an active material layer and a first uncoated portion not coated with an active material layer along a winding direction, the first uncoated portion includes a plurality of segments independently bendable along the winding direction and exposed to the outside of the separator, the plurality of segments are aligned to overlap each other along a radial direction of the electrode assembly to form a plurality of segment alignments spaced apart in a circumferential direction, and an electrolyte impregnation portion in which an end of the first active material portion is exposed between winding turns of the separator is included between segment alignments of the first uncoated portion adjacent in the circumferential direction;
a battery housing including an open end and a bottom portion facing the open end, the battery housing being configured to accommodate the electrode assembly in a space between the open end and the bottom portion, the battery housing being electrically connected to one of the first electrode and the second electrode to have a first polarity;
a sealing body configured to seal the open end of the battery housing; and
a terminal having a surface exposed outside the battery housing, the terminal being electrically connected to another of the first electrode and the second electrode to have a second polarity.

**31.** The battery according to claim 30, further comprising a first current collecting plate electrically connected to the first uncoated portion,

wherein the bottom portion of the battery housing includes a perforation hole, and
wherein the terminal is a rivet terminal installed from the battery housing in the perforation hole and electrically connected to the first current collecting plate to have the second polarity.

**32.** The battery according to claim 31, further comprising an insulator interposed between an inner surface of the bottom portion of the battery housing and an upper surface of the first current collecting plate to electrically insulate the inner surface of the bottom portion of the battery housing from the first current collecting plate.

**33.** The battery according to claim 32,

wherein the rivet terminal includes a flat portion at a lower end, and
wherein the insulator includes an opening that exposes the flat portion, and the flat portion is welded to the first current collecting plate through the opening.

**34.** The battery according to claim 30,

wherein the second electrode includes a second active material portion coated with an active material layer and a second uncoated portion not coated with an active material layer along the winding direction, the second electrode has the first polarity, and at least a part of the second uncoated portion is defined as an electrode tab by itself, and
wherein the battery further comprises a second current collecting plate electrically connected to the second uncoated portion, at least a part of an edge of the second current collecting plate being coupled to a sidewall of the battery housing.

**35.** The battery according to claim 34,

wherein the battery housing includes a beading portion press-fitted inward at an inner wall adjacent to the open end, and
wherein the edge of the second current collecting plate is electrically connected to the beading portion.

**36.** The battery according to claim 35, further comprising:

a cap plate having an edge supported by the beading portion and having no polarity;
a gasket interposed between the edge of the cap plate and the open end of the battery housing; and
a crimping portion extending and bending toward an inner side of the open end of the battery housing to surround and fix the edge of the cap plate together with the gasket,
wherein the edge of the second current collecting plate is interposed and fixed between the beading portion and the gasket by the crimping portion.

**37.** The battery according to claim 30,
Wherein, based on a cross section along the winding axis direction, sequentially along the radial direction, the electrode assembly includes a segment skip region having no segment, a height variable region where heights of the segments vary, and a height uniform region where heights of the segments are uniform, and the plurality of segments are disposed in the height variable region and the height uniform region and are bent along the radial direction of the electrode assembly to form a bending surface region.

**38.** The battery according to claim 37,
wherein, when the number of segments meeting an imaginary line parallel to the winding axis direction at an arbitrary radius location of the bending surface region based on a center of the core of the electrode assembly is defined as a stack number of the segments at the corresponding radius location, the bending surface region includes a stack number uniform region where the stack number of the segments is uniform from the core toward the outer circumference and a stack number decreasing region located adjacent to the stack number uniform region in which the stack number of the segments decreases away from the stack number uniform region.

**39.** The battery according to claim 38,

wherein in the stack number uniform region, the stack number of the segments is 10 to 35.

40. The battery according to claim 38,
wherein the first electrode is a positive electrode, and a stack thickness of the segments in the stack number uniform region is in the range of 100 um to 875 um.

41. The battery according to claim 38,
wherein the first electrode is a negative electrode, and a stack thickness of the segments in the stack number uniform region is in the range of 50 um to 700 um.

42. The battery according to claim 38, further comprising a current collecting plate welded to the bending surface region, Wherein, in the radial direction of the electrode assembly, at least 50% of a welding region of the current collecting plate overlaps with the stack number uniform region.

43. The battery according to claim 30,
wherein the battery is cylindrical and has a ratio of diameter to height greater than 0.4.

44. The battery according to claim 43,
wherein the battery is cylindrical and has a form factor of 46110, 4875, 48110, 4880 or 4680.

45. The battery according to claim 30,
wherein the battery has a resistance of 4 miliohm or below.

46. A battery pack, comprising a plurality of batteries according to any one of claims 30 to 45.

47. The battery pack according to claim 46,

wherein the plurality of batteries are cylindrical, and
the plurality of batteries are arranged in a predetermined number of columns, and the electrode terminal of each battery and an outer surface of the bottom of the battery housing are arranged to face upward.

48. The battery pack according to claim 47, further comprising:

a plurality of bus bars configured to connect the plurality of batteries in series and parallel,
wherein the plurality of bus bars are disposed at an upper portion of the plurality of batteries, and
each bus bar includes a body portion configured to extend between electrode terminals of adjacent batteries;
a plurality of first bus bar terminals configured to extend in one side direction of the body portion and electrically coupled to an electrode terminal of a battery located in the one side direction; and a plurality of second bus bar terminals configured to extend in the other side direction of the body portion and electrically coupled to an outer surface of the bottom of the battery housing of a battery located in the other side direction.

49. A vehicle, comprising the battery pack according to any one of claims 46 to 48.

FIG. 1

FIG. 2

FIG. 3

FIG. 4

EP 4 350 873 A1

FIG. 5

FIG. 6

FIG. 7

FIG. 8

$$h_4 \leq r_4 - a \ast r_c$$
$$h_3 \leq r_3 - a \ast r_c$$
$$h_2 \leq r_2 - a \ast r_c$$
$$h_1 \leq r_1 - a \ast r_c$$

FIG. 9a

FIG. 9b

FIG. 10a

FIG. 10b

CORE

OUTER
CIRCUMFERENCE

Y
X

46  45'    46  45'    46  45'    46  45'    46

43
44

40
41
42

EP 4 350 873 A1

FIG. 11

FIG. 12a

FIG. 12b

FIG. 12c

FIG. 12d

CORE RADIUS: 4mm

(a)

| | H: 3~10 |
| | H: 3~9 |
| | H: 3~8 |
| | H: 3~7 |
| | H: 3~6 |
| | H: 3~5 |

CORE RADIUS: 2mm

(b)

| | H: 3~10 |
| | H: 3~9 |
| | H: 3~8 |
| | H: 3~7 |
| | H: 3~6 |
| | H: 3~5 |

FIG. 12e

FIG. 13

FIG. 14

FIG. 15

FIG. 16

FIG. 17

FIG. 18

FIG. 19

EP 4 350 873 A1

FIG. 20

76

FIG. 21

144

N  144d  144a

144e  144b

144f

144c

S_open  144b

FIG. 22

176

176g  176e  176c

176h  176d  176a

176f
176b

FIG. 23

FIG. 24

FIG. 25

FIG. 26

<div align="center">

**INTERNATIONAL SEARCH REPORT**

</div>

| | International application No. |
|---|---|
| | **PCT/KR2022/010564** |

| **A.** | **CLASSIFICATION OF SUBJECT MATTER** |
|---|---|
| | **H01M 50/533**(2021.01)i; **H01M 50/538**(2021.01)i; **H01M 10/04**(2006.01)i; **H01M 50/586**(2021.01)i; **H01M 50/593**(2021.01)i; **H01M 50/107**(2021.01)i; **H01M 50/167**(2021.01)i |
| | According to International Patent Classification (IPC) or to both national classification and IPC |

| **B.** | **FIELDS SEARCHED** |
|---|---|
| Minimum documentation searched (classification system followed by classification symbols) |
| H01M 50/533(2021.01); H01M 10/04(2006.01); H01M 10/40(2006.01); H01M 2/02(2006.01); H01M 2/22(2006.01); H01M 50/20(2021.01); H01M 50/50(2021.01); H01M 50/548(2021.01); H01M 50/559(2021.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 배터리(battery), 무지부(non coating part), 절개(cut), 전해질(electrolyte) |

**C.** **DOCUMENTS CONSIDERED TO BE RELEVANT**

| Category* | Citation of document, with indication, where appropriate, of the relevant passages | Relevant to claim No. |
|---|---|---|
| X | JP 11-312537 A (SHIN KOBE ELECTRIC MACH. CO., LTD.) 09 November 1999 (1999-11-09)<br>See paragraphs [0004]-[0010] and [0013] and figures 1-2. | 1-6,8-9,16-18,29 |
| Y | | 7,10-11,19-21,<br>30-36,43-49 |
| A | | 12-15,22-28,37-42 |
| Y | KR 10-2016-0009406 A (LG CHEM, LTD.) 26 January 2016 (2016-01-26)<br>See paragraph [0026], claim 1 and figures 1-2a. | 7,20-21 |
| Y | KR 10-2015-0143030 A (ORANGE POWER LTD.) 23 December 2015 (2015-12-23)<br>See paragraphs [0054]-[0055] and figure 4. | 10-11 |
| Y | KR 10-2020-0041625 A (SAMSUNG SDI CO., LTD.) 22 April 2020 (2020-04-22)<br>See paragraph [0079] and figure 2. | 19 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 November 2022** | **15 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/010564** |

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 113346201 A (EVE ENERGY CO., LTD.) 03 September 2021 (2021-09-03)<br>See paragraphs [0049]-[0062], claim 10 and figures 1-3 and 6. | 30-36,43-49 |
| Y | KR 10-2021-0080256 A (LG ENERGY SOLUTION, LTD.) 30 June 2021 (2021-06-30)<br>See paragraphs [0035]-[0037] and figures 6-7 and 10. | 47-48 |

Form PCT/ISA/210 (second sheet) (July 2022)

INTERNATIONAL SEARCH REPORT
Information on patent family members

International application No.

**PCT/KR2022/010564**

| Patent document cited in search report | | | Publication date (day/month/year) | Patent family member(s) | | | Publication date (day/month/year) |
|---|---|---|---|---|---|---|---|
| JP | 11-312537 | A | 09 November 1999 | None | | | |
| KR | 10-2016-0009406 | A | 26 January 2016 | KR | 10-1743136 | B1 | 02 June 2017 |
| KR | 10-2015-0143030 | A | 23 December 2015 | CN | 105580183 | A | 11 May 2016 |
| | | | | EP | 3157088 | A1 | 19 April 2017 |
| | | | | EP | 3157088 | A4 | 24 January 2018 |
| | | | | KR | 10-1650557 | B1 | 12 September 2016 |
| | | | | KR | 10-1712446 | B1 | 07 March 2017 |
| | | | | KR | 10-1712449 | B1 | 08 March 2017 |
| | | | | KR | 10-2016-0097733 | A | 18 August 2016 |
| | | | | KR | 10-2016-0101783 | A | 26 August 2016 |
| | | | | KR | 10-2017-0013368 | A | 06 February 2017 |
| | | | | US | 2016-0141736 | A1 | 19 May 2016 |
| | | | | WO | 2015-190848 | A1 | 17 December 2015 |
| KR | 10-2020-0041625 | A | 22 April 2020 | CN | 113169369 | A | 23 July 2021 |
| | | | | EP | 3866241 | A1 | 18 August 2021 |
| | | | | EP | 3866241 | A4 | 14 September 2022 |
| | | | | US | 2021-0344033 | A1 | 04 November 2021 |
| | | | | WO | 2020-075990 | A1 | 16 April 2020 |
| CN | 113346201 | A | 03 September 2021 | None | | | |
| KR | 10-2021-0080256 | A | 30 June 2021 | CN | 114375525 | A | 19 April 2022 |
| | | | | EP | 4030548 | A1 | 20 July 2022 |
| | | | | US | 2022-0255145 | A1 | 11 August 2022 |
| | | | | WO | 2021-125897 | A1 | 24 June 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210160490
- KR 1020210160823
- US 6677082 B
- US 6680143 B